# EUROPÄISCHE PATENTSCHRIFT

(11) **EP 3 969 291 B1**
(45) Veröffentlichungstag und Bekanntmachung des Hinweises auf die Patenterteilung: **02.07.2025**
(21) Anmeldenummer: 20726704.8
(22) Anmeldetag: 13.05.2020
(51) Int. Cl.: B42D 25/305, H01F 13/00, B42D 25/369

(54) **PRÜFUNG DER KOERZITIVFELDSTÄRKE VON MAGNETPIGMENTEN**
TESTING THE COERCIVITY OF MAGNETIC PIGMENTS
CONTRÔLE DE L'INTENSITÉ DE CHAMP COERCITIF DE PIGMENTS MAGNÉTIQUES

(30) Priorität: 16.05.2019 DE 102019003491
(43) Veröffentlichungstag der Anmeldung: 23.03.2022
(73) Patentinhaber: Giesecke+Devrient Currency Technology GmbH, 81677 München (DE)
(72) Erfinder: GIERING, Thomas, 85614 Kirchseeon (DE); EWALD, Joachim, 80638 München (DE)
(74) Vertreter: Giesecke+Devrient IP
(86) Internationale Anmeldenummer: PCT/EP2020/025220
(87) Internationale Veröffentlichungsnummer: WO 2020/228989

(56) Entgegenhaltungen:
- DE-A1- 102009 039 588
- DE-A1- 102011 120 972

## Beschreibung

Die Erfindung betrifft die Prüfung der Koerzitivfeldstärke von Magnetpigmenten von flächigen, wie z.B. blattförmigen, Proben, insbesondere von Sicherheitsdokumenten, wie z.B. Ausweisen, oder von Wertdokumenten, wie z.B. Banknoten, Schecks, Karten, Tickets, Coupons.

Aus dem Stand der Technik ist es bekannt, Sicherheits- oder Wertdokumente mit Sicherheitselementen, etwa Sicherheitsstreifen oder auch Sicherheitsfäden, auszustatten, die Magnetpigmente enthalten. Die Magnetpigmente können dabei entweder durchgehend oder nur bereichsweise, zum Beispiel in Form einer Kodierung, auf das Sicherheitselement aufgebracht sein. Zur magnetischen Kodierung eines Sicherheitselements dient beispielsweise eine bestimmte Abfolge von magnetischen und nichtmagnetischen Bereichen, die für das Wertdokument charakteristisch ist. Außerdem ist es bekannt, verschiedene Magnetpigmente für eine Magnetkodierung zu verwenden, z.B. werden verschieden koerzitive Magnetpigmente eingesetzt, aus welchen niederkoerzitive und hochkoerzitive Magnetbereiche gebildet werden, die auf dem Sicherheitselement angeordnet sind. Es sind aber auch magnetische Sicherheitselemente bekannt, für die Magnetpigmente, ggf. in einer Mischung mit anderen Pigmenten, auf die Dokumente aufgedruckt werden.

Ferner ist es bekannt, magnetische Sicherheitselemente maschinell zu prüfen. Dabei werden die Wertdokumente, die ein magnetisches Sicherheitselement aufweisen, zu deren Magnetisierung einem Magnetfeld oder nacheinander zwei Magnetfeldern verschiedener Richtung ausgesetzt. Die resultierende Magnetisierung wird durch einen oder mehrere Magnetdetektoren geprüft, um die Echtheit oder die Art des Wertdokuments zu prüfen.

Bei der Herstellung von Wertdokumenten, die magnetische Sicherheitselemente haben, kann es notwendig sein, die Koerzitivfeldstärke der auf das Wertdokument aufgebrachten Magnetpigmente zu überprüfen. Damit soll u.a. sichergestellt werden, dass das jeweilige magnetische Sicherheitselement die für das jeweilige Magnetpigment spezifizierte Koerzitivfeldstärke aufweist. Üblicherweise werden zur Überprüfung der Koerzitivfeldstärke aufwändige Koerzimeter verwendet, bei denen die Magnetfeldstärke mit Hilfe eines Elektromagneten variabel einstellbar ist. Oder es werden Vorrichtungen verwendet, bei denen der Wertebereich der zu überprüfenden Koerzitivfeldstärke sehr eingeschränkt ist. Oft ist es auch notwendig, das zu prüfende Objekt zu zerstören, um dessen Koerzitivfeldstärke zu messen.

Beispiele für konventionelle Verfahren zur Prüfung der Koerzitivfeldstärke von magnetischen Pigmenten in flachen Proben sind z. B. in DE102009039588-A1 und DE102011120972-A1 beschrieben.

Der Erfindung liegt daher die Aufgabe zugrunde, eine Möglichkeit vorzuschlagen, bei der die Koerzitivfeldstärke von Magnetpigmenten auf einfache Weise und in einem großen Wertebereich geprüft werden kann.

Diese Aufgabe wird durch die Gegenstände der unabhängigen Ansprüche gelöst. In davon abhängigen Ansprüchen sind vorteilhafte Weiterbildungen und Ausgestaltungen der Erfindung angegeben.

Die Erfindung betrifft ein Verfahren und eine Vorrichtung zum Prüfen der Koerzitivfeldstärke von Magnetpigmenten von flächigen, wie z.B. blattförmigen, Proben, insbesondere von Sicherheitsdokumenten. Im Folgenden wird zur Vereinfachung an Stelle von "flächige Probe" oft lediglich der Begriff "Probe" verwendet. Zum Prüfen der Koerzitivfeldstärke von Magnetpigmenten einer flächigen Probe, die in einem Magnetbereich der flächigen Probe enthalten sind, werden folgende Schritte durchgeführt:
a) Bereitstellen einer Magnetisiereinrichtung mit mindestens einem Magneten, vorzugsweise mindestens einem Permanentmagneten, der ein statisches Magnetfeld zum Magnetisieren der Magnetpigmente bereit stellt, und Bereitstellen einer mit der Messeinrichtung verbundenen Prüfeinrichtung, die zur Ermittlung eines Prüfergebnisses eingerichtet ist, das die Koerzitivfeldstärke der Magnetpigmente betrifft,
b) Aufmagnetisieren der flächigen Probe durch das statische Magnetfeld des Magneten der Magnetisiereinrichtung oder durch ein statisches Magnetfeld einer anderen Magnetisiereinrichtung derart, dass die Magnetpigmente der flächigen Probe bis zur Sättigung ihrer Magnetisierung in eine Aufmagnetisierungsrichtung magnetisiert werden ,
c) ggf. Remanenzmessung der Magnetisierung der aufmagnetisierten Magnetpigmente nach deren Aufmagnetisierung mit einer Messeinrichtung, wobei sich die Magnetpigmente während der Remanenzmessung außerhalb des statischen Magnetfelds des mindestens einen Magneten befinden,
d) erstes teilweises Gegenmagnetisieren der Magnetpigmente durch das statische Magnetfeld des Magneten der Magnetisiereinrichtung derart, dass die Magnetpigmente durch das statische Magnetfeld teilweise gegenmagnetisiert werden, wobei zum ersten teilweisen Gegenmagnetisieren die flächige Probe und der Magnet relativ zueinander soweit aufeinander zu bewegt werden, bis die Magnetpigmente in einem ersten Magnetisierungsabstand von dem Magneten in dem statischen Magnetfeld positioniert sind, in dem das statische Magnetfeld eine erste Magnetisierungsfeldstärke aufweist,
e) erste Messung eines ersten Magnetisierungswerts der teilweise gegenmagnetisierten Magnetpigmente mit einer/ der Messeinrichtung, wobei sich die Magnetpigmente während der ersten Messung außerhalb des statischen Magnetfelds der Magnetisiereinrichtung befinden,
f) ggf. Wiederholen des Aufmagnetisierens gemäß Schritt b) und anschließend ggf. erneutes teilweises Gegenmagnetisieren gemäß Schritt d) und erneute Messung gemäß Schritt e) zur Messung eines weiteren Magnetisierungswerts, wobei beim erneuten teilweisen Gegenmagnetisieren im jeweiligen Schritt d), zum teilweisen Gegenmagnetisieren der Probe durch das statische Magnetfeld die flächige Probe und der Magnet relativ zueinander soweit aufeinander zu bewegt werden, bis die Magnetpigmente in einem weiteren Magnetisierungsabstand von dem mindestens einen Magneten in dem statischen Magnetfeld positioniert sind, in dem die Magnetfeldstärke größer oder kleiner ist als die in dem ersten Magnetisierungsabstand vorliegende erste Magnetisierungsfeldstärke, und wobei sich die Magnetpigmente während der Messung des jeweiligen weiteren Magnetisierungswerts außerhalb des statischen Magnetfelds des mindestens einen Magneten befinden,
g) Übermitteln des bei der ersten Messung gemessenen ersten Magnetisierungswerts und ggf. des/der bei der/ den weiteren Messung/ en gemäß Schritt f) gemessenen weiteren Magnetisierungswerts/ e der teilweise gegenmagnetisierten Magnetpigmente von der Messeinrichtung an die mit der Messeinrichtung verbundene Prüfeinrichtung, in der ein Magnetfeldverlauf der Magnetisiereinrichtung hinterlegt ist oder die mit einer anderen Einrichtung verbunden ist, in der ein Magnetfeldverlauf der Magnetisiereinrichtung hinterlegt ist,
h) Prüfen des ersten und ggf. des/der weiteren Magnetisierungswerts/e der teilweise gegenmagnetisierten Magnetpigmente mittels der Prüfeinrichtung zur Ermittlung des Prüfergebnisses, das die Koerzitivfeldstärke der Magnetpigmente betrifft,
i) Übermitteln des die Koerzitivfeldstärke betreffenden Prüfergebnisses von der Prüfeinrichtung an eine mit der Prüfeinrichtung verbundene Ausgabeeinrichtung und Ausgeben des die Koerzitivfeldstärke der Magnetpigmente betreffenden Prüfergebnisses durch die Ausgabeeinrichtung.

Der hinterlegte Magnetfeldverlauf gibt die Magnetfeldstärke des statischen Magnetfelds der Magnetisiereinrichtung als Funktion des Magnetisierungsabstands der Magnetpigmente von dem mindestens einen Magneten an. Der Magnetfeldverlauf kann dabei als kontinuierliche Funktion oder in Form mehrerer diskreter Werte hinterlegt sein. Den Magnetfeldverlauf der Magnetisiereinrichtung kann die Prüfeinrichtung dazu verwenden, das Prüfergebnis zu ermitteln, das die Koerzitivfeldstärke betrifft. Zusätzlich oder alternativ kann die Prüfeinrichtung den Magnetfeldverlauf der Magnetisiereinrichtung dazu verwenden, den ersten Magnetisierungsabstand und/oder ggf. den mindestens einen weiteren Magnetisierungsabstand zu ermitteln, der zwischen den Magnetpigmenten und dem Magneten für das erste und/ oder ggf. das erneute teilweise Gegenmagnetisieren gewählt werden soll. Den jeweiligen ersten/weiteren Magnetisierungsabstand kann sie dann an die mit der Prüfeinrichtung verbundene Ausgabeeinrichtung übermitteln, welche dazu eingerichtet ist, den jeweiligen ersten/weiteren Magnetisierungsabstand für einen Bediener auszugeben.

Nach dem Aufmagnetisieren wird die flächige Probe aus dem statischen Magnetfeld der Magnetisiereinrichtung entfernt. Unmittelbar vor dem ersten und ggf. vor dem erneuten teilweisen Gegenmagnetisieren gemäß Schritt d) ist die flächige Probe nicht in dem statischen Magnetfeld der Magnetisiereinrichtung positioniert. Für das erste teilweise Gegenmagnetisieren und ggf. das erneute teilweise Gegenmagnetisieren kann die flächige Probe auf den Magneten zu bewegt werden oder der Magnet auf die flächige Probe zu bewegt werden, um die Magnetpigmente in dem ersten Magnetisierungsabstand bzw. in dem weiteren Magnetisierungsabstand von dem Magneten in dem statischen Magnetfeld zu positionieren. Beispielsweise wird für das erste teilweise Gegenmagnetisieren, und ggf. das erneute teilweise Gegenmagnetisieren gemäß Schritt d), die flächige Probe auf eine Magnetisierfläche der Magnetisiereinrichtung aufgelegt und entlang der Magnetisierfläche der Magnetisiereinrichtung in Richtung auf den Magneten der Magnetisiereinrichtung zu bewegt (in Richtung des Magnetfeldgradienten) und anschließend wieder von dem Magneten der Magnetisiereinrichtung wegbewegt (entgegengesetzt zum Magnetfeldgradienten). Wird die Probe bewegt, während der mindestens eine Magnet ortsfest bleibt, hat dies den Vorteil, dass die Befestigung des Magneten platzsparend und kostengünstig ist. Wird alternativ dazu, der mindestens eine Magnet bewegbar ausgeführt (während die Probe zum teilweisen Gegenmagnetisieren ortsfest bleibt oder jeweils komplett durch die Magnetisiereinrichtung hindurch bewegt wird), so lassen sich - durch Verstellen der Magnetposition - sowohl sehr große als auch sehr kleine Magnetisierungsfeldstärken für die teilweise Gegenmagnetisierung erreichen. Darüber hinaus kann die Position des mindestens einen Magneten feiner eingestellt und leichter abgelesen werden als die Position der Probe bzw. der Magnetpigmente auf der Probe.

Zum ersten teilweisen Gegenmagnetisieren, und ggf. zum erneuten teilweisen Gegenmagnetisieren, wird die flächige Probe derart in das statische Magnetfeld eingebracht, dass das statische Magnetfeld zumindest näherungsweise entgegengesetzt zur Aufmagnetisierungsrichtung der Magnetpigmente der flächigen Probe gerichtet ist. Da die Aufmagnetisierungsrichtung eine Eigenschaft der Magnetpigmente ist, werden dazu die Orientierung der flächigen Probe und der Magnetisierungsabstand der flächigen Probe vom Magneten entsprechend so gewählt, dass das statische Magnetfeld entgegengesetzt zur Aufmagnetisierungsrichtung der Magnetpigmente der flächigen Probe gerichtet ist. Die nach dem teilweise Gegenmagnetisieren resultierende Magnetisierung kann in oder entgegengesetzt zur Aufmagnetisierungsrichtung gerichtet sein. Der Betrag der nach dem teilweise Gegenmagnetisieren erreichten Magnetisierung kann dabei z.B. 0% oder 10% (oder andere Anteile von 0% bis 100%) der beim Aufmagnetisieren erreichten remanenten Magnetisierung annehmen. Falls z.B. genau mit der Koerzitivfeldstärke gegenmagnetisiert wird, ist die erreichte Magnetisierung verschwindend gering (entsprechend 0% der remanenten Magnetisierung).

Das teilweise Gegenmagnetisieren aus Schritt d) und die Messung aus Schritt e) zur Messung des weiteren Magnetisierungswerts werden in manchen Fällen mindestens einmal gemäß Schritt f) wiederholt bzw. erneut durchgeführt, so dass mindestens ein weiterer Magnetisierungswert erhalten wird. Insbesondere werden das teilweise Gegenmagnetisieren aus Schritt d) und die Messung aus Schritt e) zur Messung des weiteren Magnetisierungswerts mindestens zweimal gemäß Schritt f) wiederholt bzw. erneut durchgeführt und dabei der weitere Magnetisierungsabstand variiert, so dass mindestens zwei weitere Magnetisierungswerte bei mindestens zwei weiteren Magnetisierungsabständen erhalten werden. Diese erneute bzw. wiederholte Messung ermöglicht es, auch bei kurzen Magnetbereichen die Koerzitivfeldstärke der Magnetpigmente anhand mehrerer Magnetisierungswerte zu prüfen.

In einigen Ausführungsbeispielen weist die flächige Probe mindestens einen langen Magnetbereich auf, in dem die Magnetpigmente vorliegen, der zumindest entlang seiner Erstreckungsrichtung mindestens 1 cm, bevorzugt mindestens 2 cm, lang ist. Über diesen langen Magnetbereich sind die Magnetpigmente vorzugsweise zumindest abschnittweise im Wesentlichen homogen verteilt. Die Erstreckungsrichtung kann z.B. die Längsrichtung aber auch eine beliebige andere Richtung des Magnetbereichs sein, in der dieser eine große Länge aufweist. Zum ersten und ggf. zum erneuten teilweisen Gegenmagnetisieren wird die flächige Probe vorzugsweise so auf der Magnetisiereinrichtung positioniert, dass die Erstreckungsrichtung des langen Magnetbereichs parallel, antiparallel oder schräg zu dem Magnetfeldgradienten des statischen Magnetfelds gerichtet ist, d.h. entlang der Abstandskoordinate des hinterlegten Magnetfeldverlaufs, aber nicht senkrecht zu dem Magnetfeldgradienten des statischen Magnetfelds. Als Folge der Orientierung des langen Magnetbereichs parallel, antiparallel oder schräg zum Magnetfeldgradienten werden die in verschiedenen Abschnitten des langen Magnetbereichs befindlichen Magnetpigmente unterschiedlich stark gegenmagnetisiert (die beim Gegenmagnetisieren näher am Magneten liegenden Abschnitte stärker als die weiter weg liegenden Abschnitte).

Bei diesen Ausführungsbeispielen ist die Messeinrichtung vorzugsweise zur Messung der Magnetisierung als Funktion der Erstreckungsrichtung der Magnetpigmente auf der Probe eingerichtet. Zum Beispiel ist die Messeinrichtung dazu eingerichtet, bereits bei der ersten Messung (nach dem ersten teilweisen Gegenmagnetisieren) sowohl einen ersten Magnetisierungswert M(x0) (in einem ersten Abschnitt des langen Magnetbereichs, der in dem ersten Magnetisierungsabstand x0 liegt), als auch - ohne erneutes teilweise Gegenmagnetisieren - einen oder mehrere weitere Magnetisierungswerte M(x1), M(x2),... zu erzeugen, die in anderen Abschnitten des langen Magnetbereichs gemessen werden. Die anderen Abschnitte waren beim ersten teilweisen Gegenmagnetisieren in weiteren Magnetisierungsabständen x1, x2,... von dem mindestens einen Magneten in dem statischen Magnetfeld positioniert, in dem die Magnetfeldstärke des statischen Magnetfelds größer oder kleiner ist als in dem ersten Magnetisierungsabstand x0. Da ein erneutes teilweise Gegenmagnetisieren und eine erneute Messung der Probe dann nicht nötig sind, wird so eine besonders schnelle Prüfung der Koerzitivfeldstärke ermöglicht.

Bei diesen Ausführungsbeispielen ist die Prüfeinrichtung vorzugsweise dazu eingerichtet, anhand mindestens zweier für verschiedene weitere Magnetisierungsabstände x1, x2,... gemessener weiterer Magnetisierungswerte M(x1), M(x2),... der Magnetpigmente, und/oder anhand des für den ersten Magnetisierungsabstand x0 gemessenen ersten Magnetisierungswerts M(x0) und mindestens eines für einen weiteren Magnetisierungsabstand x1 gemessenen weiteren Magnetisierungswerts M(x1), einen Magnetisierungsverlauf M(x) als Funktion des Magnetisierungsabstands x zu ermitteln und den Magnetisierungsverlauf M(x) zu analysieren, um einen Ziel-Magnetisierungsabstand xm zu bestimmen, in dem beim ersten teilweisen Gegenmagnetisieren die Koerzitivfeldstärke der Magnetpigmente erreicht wurde. Bei der Analyse des Magnetisierungsverlaufs M(x) wird als Ziel-Magnetisierungsabstand xm z.B. derjenige Magnetisierungsabstand gewählt, an dem die Magnetisierung M(x) als Funktion des Magnetisierungsabstands x oder deren erste Ableitung M'(x)=dM(x)/dx als Funktion des Magnetisierungsabstands x einen Nulldurchgang (M(xm)=0) aufweist oder ein Minimum einnimmt oder an dem eine Standardabweichung SM(x) der Magnetisierung M(x) eine minimale Modulation aufweist (Standardabweichung der an verschiedenen y- Positionen, aber an derselben x-Position gemessenen Magnetisierung), z.B. bei magnetischen Seriennummern.

Aus dem Ziel-Magnetisierungsabstand xm kann die Prüfeinrichtung anhand des Magnetfeldverlaufs K(x) die Koerzitivfeldstärke Km der Magnetpigmente bestimmen, z.B. durch Einsetzen des Ziel-Magnetisierungsabstands xm in die Funktion K(x). Die Koerzitivfeldstärke Km der Magnetpigmente wird dann von der Prüfeinrichtung an die Ausgabeeinrichtung übermittelt, welche dazu eingerichtet ist, die Koerzitivfeldstärke Km der Magnetpigmente für einen Bediener auszugeben. Ein Bestimmen und Ausgeben der Koerzitivfeldstärke (im Gegensatz zu einer einfachen Bestätigung oder Verneinung einer vorgegeneben Koerzitivfeldstärke) ermöglicht dem Bediener eine genauere Analyse der Probe, z.B. eine Klassifizierung, eine quantitative Qualitätskontrolle oder eine Fehleranalyse.

Die Erfindung betrifft auch eine Vorrichtung zur Prüfung der Koerzitivfeldstärke mit der o.g. Messeinrichtung und der o.g. Prüfeinrichtung, d.h. ohne die o.g. Magnetisiereinrichtung, die davon getrennt bereit gestellt ist. Die Messeinrichtung und Prüfeinrichtung können voneinander getrennte Geräte sein oder zusammen in einem Gerät, z.B. im selben Gehäuse untergebracht sein. Die Vorrichtung kann auch eine mit der Prüfeinrichtung verbundene Eingabeeinrichtung und/ oder die mit der Prüfeinrichtung verbundene Ausgabeeinrichtung aufweisen.

Die Messeinrichtung ist dazu eingerichtet, die erste und ggf. die jeweilige weitere Messung so durchzuführen, dass sich die Magnetpigmente während der ersten Messung, und ggf. während der jeweiligen weiteren Messung, nicht in einem zum Magnetisieren der Magnetpigmente geeigneten Magnetfeld befinden, insbesondere außerhalb des statischen Magnetfelds der Magnetisiereinrichtung befinden, d.h. soweit von dieser entfernt, dass die Magnetfeldstärke der Magnetisiereinrichtung am Ort der Messung vernachlässigbar gering ist. Vorzugsweise weist die Messeinrichtung eine Aufnahme zur Aufnahme der flächigen Probe auf, die so positioniert ist, dass sich die flächige Probe während der ersten und ggf. der mindestens einen weiteren Messung nicht in einem zum Magnetisieren der Magnetpigmente geeigneten Magnetfeld befinden, insbesondere außerhalb des statischen Magnetfelds der Magnetisiereinrichtung befindet. Während der ersten Messung und ggf. während der/den weiteren Messung/en befinden sich die Magnetpigmente bevorzugt in keinem zu deren Magnetisierung geeigneten Magnetfeld, d.h. allenfalls in einem sehr schwachen Magnetfeld(z.B. dem Erdmagnetfeld), das die Magnetisierung der Magnetpigmente um weniger als 1 % ändern kann.

Die Messeinrichtung ist dazu eingerichtet, eine erste Messung eines ersten Magnetisierungswerts der nach dem ersten teilweisen Gegenmagnetisieren durch die erste Magnetisierungsfeldstärke teilweise gegenmagnetisierten Magnetpigmente durchzuführen, sowie ggf. mindestens eine weitere Messung zur Messung mindestens eines weiteren Magnetisierungswerts der bei einem ggf. durchgeführten erneuten teilweisen Gegenmagnetisieren teilweise gegenmagnetisierten Magnetpigmente, wenn diese mit einer weiteren Magnetisierungsfeldstärke entgegengesetzt zur Aufmagnetisierungsrichtung teilweise gegenmagnetisiert sind, die größer oder kleiner ist als die erste Magnetisierungsfeldstärke, mit der die Magnetpigmente im ersten Magnetisierungsabstand gegenmagnetisiert wurden. Die Messeinrichtung ist dazu eingerichtet, den bei der ersten Messung und ggf. der mindestens einen weiteren Messung gemessenen mindestens einen ersten bzw. weiteren Magnetisierungswert der teilweise gegenmagnetisierten Magnetpigmente an die Prüfeinrichtung zu übermitteln.

Gegebenenfalls kann der Bediener auch eine oder mehrere Region of Interest (ROI) vorgeben, in der sich die zu prüfenden Magnetpigmente der jeweiligen flächigen Probe befinden. Die Messeinrichtung kann sich dann auf die Messung der Magnetisierung in dieser ROI beschränken. Die Prüfeinrichtung kann dazu eingerichtet sein, anhand der Informationen über die ROI auf der Probe die von der Messeinrichtung gemessenen Magnetisierungswerte auszuwählen, die zur Bestimmung des die Koerzitivfeldstärke der Magnetpigmente betreffenden Prüfergebnisses herangezogen werden. Die Prüfeinrichtung selektiert z.B. einen oder mehrere bestimmte Magnetisierungswerte der ROI oder mittelt die Magnetisierungswerte über die ROI.

Die Prüfeinrichtung ist dazu eingerichtet, die ersten und ggf. den/ die weiteren Magnetisierungswert/ e der teilweise gegenmagnetisierten Magnetpigmente zur Ermittlung eines Prüfergebnisses zu prüfen, das die Koerzitivfeldstärke der Magnetpigmente betrifft, und das die Koerzitivfeldstärke der Magnetpigmente betreffende Prüfergebnis an die mit der Prüfeinrichtung verbundene Ausgabeeinrichtung zu übermitteln. Die Prüfeinrichtung ist z.B. mit einer entsprechenden Software programmiert, mit deren Hilfe sie das die Koerzitivfeldstärke der Magnetpigmente betreffende Prüfergebnis ermitteln kann. Bevorzugt ist in der Prüfeinrichtung ein Magnetfeldverlauf K(x) der Magnetisiereinrichtung hinterlegt. Alternativ kann die Prüfeinrichtung auch mit einer anderen Einrichtung verbunden sein, in der ein Magnetfeldverlauf K(x) der Magnetisiereinrichtung hinterlegt ist. Insbesondere weist die Prüfeinrichtung einen Speicherbereich auf, in dem ein Magnetfeldverlauf K(x) der Magnetisiereinrichtung als Funktion des Abstands von dem Magneten der Magnetisiereinrichtung (als Funktion des Magnetisierungsabstands x der Magnetpigmente) hinterlegt ist. Der Magnetfeldverlauf K(x) kann im Vorfeld der Prüfung mit Hilfe eines entsprechenden Messgeräts empirisch bestimmt oder durch mathematische Simulation berechnet worden sein oder anhand von magnetischen Objekten mit bekannter Koerzitivfeldstärke empirisch bestimmt worden sein.

Gegebenenfalls kann eine Korrektur des auf diese Weise erhaltenen Magnetfeldverlaufs K(x) auf Basis einer Kalibriermessung eines entsprechenden Kalibriermediums durchgeführt werden, das - analog zur flächigen Probe - zuerst aufmagnetisiert, dann mittels der Magnetisiereinrichtung gegenmagnetisiert und dann mit Hilfe der Messeinrichtung gemessen wird. Das Kalibriermedium ist z.B. flächig ausgebildet und weist einen langen (mindestens 1 cm lang, bevorzugt mindestens 2 cm lang) oder vorzugsweise mehrere lange Magnetbereiche (mindestens 1 cm lang, bevorzugt mindestens 2 cm lang) auf, die jeweils durchgehend Magnetpigmente einer bestimmten Koerzitivfeldstärke aufweisen und räumlich voneinander getrennt auf dem Kalibriermedium vorliegen, wobei die Koerzitivfeldstärke der verschiedenen langen Magnetbereiche jeweils unterschiedlich gewählt ist. Das Kalibriermedium wird bei der teilweise Gegenmagnetisierung so auf der Magnetisiereinrichtung positioniert, dass sich die langen Magnetbereiche parallel, antiparallel oder schräg zum Magnetfeldgradienten des statischen Magnetfelds erstrecken. Eine solche Ausführung des Kalibriermediums ermöglicht eine Kalibrierung des Magnetfeldverlaufs K(x) anhand einer einzigen Messung, analog zur Messung einer Probe mit einem langen Magnetbereich. Das Kalibriermedium kann auch für eine Vergleichsmessung verwendet werden, bei der das Kalibriermedium und die flächige Probe (die Magnetpigmente einer unbekannten Koerzitivfeldstärke aufweist) aneinander befestigt werden, in einem Schritt mit der Magnetisiereinrichtung gegenmagnetisiert und in einem Schritt mittels der Messeinrichtung gemessen werden, wobei sowohl ein Magnetisierungsverlauf der flächigen Probe M(x) als auch ein Magnetisierungsverlauf des Kalibriermediums gemessen werden. Die Koerzitivfeldstärke der flächigen Probe kann dann durch Vergleichen der gemessenen Magnetisierungsverläufe überprüft werden.

Die Prüfeinrichtung ist insbesondere dazu eingerichtet,
- den Magnetfeldverlauf K(x) der Magnetisiereinrichtung zur Ermittlung des die Koerzitivfeldstärke der Magnetpigmente betreffenden Prüfergebnisses zu verwenden, und/oder
- den Magnetfeldverlauf K(x) der Magnetisiereinrichtung dazu zu verwenden, einen Magnetisierungsabstand zu ermitteln, der zwischen den Magnetpigmenten und dem Magneten für das erste und/oder ggf. das erneute teilweise Gegenmagnetisieren gewählt werden soll und diesen ersten/weiteren Magnetisierungsabstand an die Ausgabeeinrichtung zu übermitteln.

Die Prüfeinrichtung kann dazu eingerichtet sein, von einer mit der Prüfeinrichtung verbundenen Eingabeeinrichtung oder über eine mit der Prüfeinrichtung verbundene Schnittstelle eine Bedienervorgabe zu empfangen, die eine mit der Prüfeinrichtung zu verifizierende Soll-Koerzitivfeldstärke und/oder eine Angabe über einen die Soll-Koerzitivfeldstärke einschließenden Soll-Koerzitivitätsbereich betrifft (z.B. eine Toleranz um die Soll-Koerzitivfeldstärke). Auf Basis der Bedienervorgabe kann die Prüfeinrichtung dann, anhand des Magnetfeldverlaufs K(x) der Magnetisiereinrichtung, den ersten Magnetisierungsabstand ermitteln, der zwischen den Magnetpigmenten und dem Magneten für das erste teilweise Gegenmagnetisieren gewählt werden soll. Den ersten Magnetisierungsabstand kann die Prüfeinrichtung dann an die mit der Prüfeinrichtung verbundene Ausgabeeinrichtung übermitteln, welche dazu eingerichtet ist, den jeweiligen ersten Magnetisierungsabstand für einen Bediener der Magnetisiereinrichtung auszugeben, z.B. dem Bediener visuell anzuzeigen oder akustisch auszugeben. Diese Ausführungsform erlaubt eine besonders einfache Prüfung einer vorgegebenen Soll-Koerzitivfeldstärke, beispielsweise für die Qualitätskontrolle von Sicherheitsdokumenten oder für deren Echtheitsprüfung.

In manchen Ausführungsbeispielen umfasst das beim Prüfen ermittelte Prüfergebnis, das die Koerzitivfeldstärke der Magnetpigmente betrifft, eine Bestätigung (oder eine Verneinung), ob die Magnetpigmente eine vorgegebene Soll-Koerzitivfeldstärke aufweisen bzw. ob ihre Koerzitivfeldstärke in dem die Soll-Koerzitivfeldstärke einschließenden Soll-Koerzitivitätsbereich liegt.

In manchen Ausführungsbeispielen ist die Prüfeinrichtung dazu eingerichtet, beim Prüfen des ersten Magnetisierungswerts der teilweise gegenmagnetisierten Magnetpigmente zu überprüfen, ob der erste Magnetisierungswert einer Magnetisierung von Null entspricht oder in einem um eine Magnetisierung von Null liegenden Magnetisierungs-Akzeptanzbereich liegt. Der Akzeptanzbereich entspricht gemäß der Hysteresekurve der Magnetpigmente dem (die Soll-Koerzitivfeldstärke einschließenden) Soll-Koerzitivitätsbereich. Falls ja, übermittelt die Prüfeinrichtung an die Ausgabeeinrichtung die Bestätigung, dass die Magnetpigmente die vorgegebene Soll-Koerzitivfeldstärke aufweisen bzw. die Koerzitivfeldstärke der Magnetpigmente in dem vorgegebenen Soll-Koerzitivitätsbereich liegt. Falls nein, wird eine entsprechende Verneinung übermittelt. Gegebenenfalls wird an der Ausgabeeinrichtung eine Aufforderung an den Bediener ausgegeben zum erneuten teilweisen Gegenmagnetisieren und zur erneuten Messung, um mindestens einen weiteren Magnetisierungswert zu messen. Wenn die Prüfeinrichtung den weiteren Magnetisierungsabstand automatisch auswählt, wird auch dieser für den Bediener ausgegeben. Alternativ kann auch der Bediener einen vom Bediener selbst gewählten weiteren Magnetisierungsabstand wählen und an einer Eingabeeinrichtung bzw. über eine Schnittstelle eingeben.

In manchen Ausführungsbeispielen ist die Prüfeinrichtung dazu eingerichtet, von einer Eingabeeinrichtung oder Schnittstelle eine Bedienervorgabe zu empfangen, die einen mit der Prüfeinrichtung zu untersuchenden Koerzitivitätsbereich betrifft, und auf Basis der Bedienervorgabe, anhand des Magnetfeldverlaufs K(x) der Magnetisiereinrichtung, den ersten und mindestens einen (vorzugsweise mehrere) weiteren Magnetisierungsabstand zu ermitteln, der zwischen den Magnetpigmenten und dem Magneten für das erneute teilweise Gegenmagnetisieren gewählt werden soll. Den jeweiligen ersten bzw. weiteren Magnetisierungsabstand übermittelt die Prüfeinrichtung an die mit der Prüfeinrichtung verbundene Ausgabeeinrichtung, welche dazu eingerichtet ist, den jeweiligen ersten bzw. weiteren Magnetisierungsabstand für einen Bediener der Magnetisiereinrichtung auszugeben. Die Bedienervorgabe, die einen mit der Prüfeinrichtung zu untersuchenden Koerzitivitätsbereich betrifft, enthält z.B. den Koerzitivitätsbereich selbst und ggf. zusätzlich eine Schrittweite für die Koerzitivfeldstärke oder eine Anzahl an Prüfschritten in dem Koerzitivitätsbereich. Die Prüfeinrichtung ist insbesondere dazu eingerichtet, einen oder mehrere Koerzitivfeldstärken auszuwählen, die in dem vom Bediener vorgegebenen Koerzitivitätsbereich liegen, und diese in den Magnetfeldverlauf K(x) einzusetzen, um die weiteren Magnetisierungsabstände x1, x2 zu bestimmen. Ausgewählt werden z.B. die obere und untere Grenze des Koerzitivitätsbereichs und ggf. dazwischen liegende Koerzitivfeldstärken. Diese kann die Prüfeinrichtung äquidistant oder gemäß der vorgegebenen Anzahl oder Schrittweite für die Koerzitivfeldstärke automatisch wählen. Dieses Vorgehen ermöglicht eine beschleunigte Messung, wenn die Koerzitivfeldstärke der Probe näherungsweise bekannt ist.

In manchen Ausführungsbeispielen umfasst das beim Prüfen ermittelte Prüfergebnis, das die Koerzitivfeldstärke der Magnetpigmente betrifft, einen Wert für die Koerzitivfeldstärke der Magnetpigmente (und ggf. auch eine Genauigkeitsangabe dazu).

Die Prüfeinrichtung kann dazu eingerichtet sein, anhand des ersten Magnetisierungswerts und ggf. mindestens eines der weiteren Magnetisierungswerte die tatsächliche Koerzitivfeldstärke der Magnetpigmente anhand einer Look-up-Tabelle näherungsweise zu bestimmen oder abzuschätzen, die diskrete Werte für den Magnetfeldverlauf K(x) als Funktion des Magnetisierungabstands x angibt, z.B. durch Ermitteln des kleinsten gemessenen Magnetisierungswerts und Nachschlagen der zugehörigen Koerzitivfeldstärke bzw. eines zugehörigen Koerzitivitätsbereichs in der Look-up-Tabelle.

Alternativ oder zusätzlich kann die Prüfeinrichtung dazu eingerichtet sein, anhand mindestens zweier der weiteren Magnetisierungswerte oder anhand des ersten Magnetisierungswerts und mindestens eines der weiteren Magnetisierungswerte, einen Ziel-Magnetisierungsabstand xm zu bestimmen, an dem die Magnetisierung als Funktion des Magnetisierungsabstands einen Nulldurchgang aufweist oder zumindest ein Minimum einnimmt (und dabei verschwindend gering ist). Aus dem Ziel-Magnetisierungsabstand xm kann die Prüfeinrichtung anhand des Magnetfeldverlaufs K(x) die Koerzitivfeldstärke der Magnetpigmente bestimmen, z.B. durch Einsetzen des Ziel-Magnetisierungsabstands xm in die Funktion K(x). Die Prüfeinrichtung übermittelt die Koerzitivfeldstärke der Magnetpigmente dann an die mit der Prüfeinrichtung verbundene Ausgabeeinrichtung, welche dazu eingerichtet ist, die Koerzitivfeldstärke der Magnetpigmente für einen Bediener auszugeben, z.B. einen Zahlenwert der Koerzitivfeldstärke, ggf. mit einer Genauigkeitsangabe.

Um den Ziel-Magnetisierungsabstand zu bestimmen, an dem die Magnetisierung als Funktion des Magnetisierungsabstands ihren Nulldurchgang aufweist, kann die Prüfeinrichtung dazu eingerichtet sein, anhand des/der weiteren Magnetisierungswerts/ e und ggf. anhand des ersten Magnetisierungswerts einen Magnetisierungsverlauf M(x) als Funktion des Magnetisierungsabstands zu ermitteln und den Magnetisierungsverlauf automatisch zu analysieren. Sie kann den Magnetisierungsverlauf M(x) an die Ausgabeeinrichtung übermitteln, die dazu eingerichtet ist, für den Bediener den Magnetisierungsverlauf M(x) zur weiteren Analyse ausgeben, z.B. anzuzeigen.

Beispielsweise kann die Prüfeinrichtung dazu eingerichtet sein, den Ziel-Magnetisierungsabstand, an dem die Magnetisierung M(x) als Funktion des Magnetisierungsabstands x einen Nulldurchgang (M(xm)=0) aufweist, durch Anfitten oder Extrapolation oder Interpolation des ersten Magnetisierungswerts und mindestens eines der weiteren Magnetisierungswerte zu bestimmen oder durch Anfitten oder Extrapolation oder Interpolation mindestens zweier der weiteren Magnetisierungswerte. Für das Anfitten oder die Extrapolation oder die Interpolation werden zwei oder mehr Magnetisierungswerte verwendet.

In manchen Ausführungsbeispielen ist die Prüfeinrichtung dazu eingerichtet, auf Basis des (im Schritt e) gemessenen) von der Messeinrichtung übermittelten ersten Magnetisierungswerts automatisch einen weiteren Magnetisierungsabstand zu bestimmen, wobei der weitere Magnetisierungsabstand
- näher am Magneten der Magnetisiereinrichtung als der erste Magnetisierungsabstand gewählt wird (höhere Magnetfeldstärke), falls der erste Magnetisierungswert darauf schließen lässt, dass die nach ihrer teilweisen Gegenmagnetisierung resultierende Magnetisierung der Magnetpigmente (trotz der Gegenmagnetisierung) noch in die Aufmagnetisierungsrichtung zeigt, und
- weiter entfernt vom Magneten der Magnetisiereinrichtung als der erste Magnetisierungsabstand gewählt wird (geringere Magnetfeldstärke), falls die nach ihrer teilweisen Gegenmagnetisierung resultierende Magnetisierung der Magnetpigmente entgegen zur Aufmagnetisierungsrichtung zeigt. Da in diesem Fall die zum erneuten teilweisen Gegenmagnetisieren verwendete Magnetfeldstärke geringer ist als die beim ersten teilweisen Gegenmagnetisieren, muss vor dem erneuten teilweisen Gegenmagnetisieren das Aufmagnetisieren wiederholt werden, bei dem die Magnetpigmente der flächigen Probe bis zur Sättigung ihrer Magnetisierung in die Aufmagnetisierungsrichtung magnetisiert werden.

Den weiteren Magnetisierungsabstand übermittelt die Prüfeinrichtung dann an die Ausgabeeinrichtung, die dazu eingerichtet ist, den Bediener zum erneuten teilweisen Gegenmagnetisieren und zur erneuten Messung der Magnetpigmente für den weiteren Magnetisierungsabstand aufzufordern, damit dieser mittels der Messeinrichtung einen weiteren Magnetisierungswert bestimmt. Auf Basis des ersten Magnetisierungswerts und des weiteren Magnetisierungswerts können bei Bedarf weitere Magnetisierungsabstände automatisch bestimmt und ausgegeben werden, damit der Bediener durch nochmaliges teilweises Gegenmagnetisieren und durch nochmalige Messung noch weitere Magnetisierungswerte der Magnetpigmente bestimmt.

Die Erfindung betrifft auch eine Anordnung zum Magnetisieren der jeweiligen flächigen Probe und zum Prüfen der Koerzitivfeldstärke der Magnetpigmente der jeweiligen flächigen Probe mit der o.g. Magnetisiereinrichtung und der o.g. Vorrichtung, die die o.g. Messeinrichtung und die o.g Prüfeinrichtung aufweist. Die Magnetisiereinrichtung und die Messeinrichtung sind voneinander getrennt, so dass sich die Magnetpigmente während der ersten Messung und ggf. während der jeweiligen weiteren Messung außerhalb des statischen Magnetfelds der Magnetisiereinrichtung befinden. Das hat den Vorteil, dass die zum teilweisen Gegenmagnetisieren verwendete Magnetfeldstärke flexibel veränderbar ist, ohne die Messung der Messeinrichtung zu beeinflussen.

Die Magnetisiereinrichtung weist z.B. eine Magnetisierfläche zur Aufnahme der flächigen Probe auf und mindestens einen Magneten, der ein statisches Magnetfeld bereit stellt, das zum teilweisen Gegenmagnetisieren der Magnetpigmente der flächigen Probe eingerichtet ist. Die Magnetisiereinrichtung ist z.B. dazu eingerichtet, dass die (auf die Magnetisierfläche aufgelegte) flächige Probe und der mindestens eine Magnet für ein erstes teilweise Gegenmagnetisieren der Magnetpigmente relativ zueinander soweit aufeinander zu bewegbar sind, bis die Magnetpigmente in einem ersten Magnetisierungsabstand von dem mindestens einen Magneten positioniert sind, in dem das statische Magnetfeld eine erste Magnetisierungsfeldstärke aufweist. Für das erneute teilweise Gegenmagnetisieren der Magnetpigmente sind die flächige Probe und der mindestens eine Magnet relativ zueinander soweit aufeinander zu bewegbar, bis die Magnetpigmente in einem weiteren Magnetisierungsabstand von dem mindestens einen Magneten positioniert sind, in dem die Magnetfeldstärke des statischen Magnetfelds größer oder kleiner ist als die (im ersten Magnetisierungsabstand herrschende) erste Magnetisierungsfeldstärke. Die erfindungsgemäße Magnetisiereinrichtung ermöglicht eine wohldefinierte Magnetisierung der Magnetpigmente bei sehr unterschiedlicher Magnetfeldstärke. Mit den erreichbaren Magnetfeldstärken sind sowohl niederkoerzitive Magnetpigmente gegenmagnetisierbar, die eine Koerzitivfeldstärke von wenigen Oersted aufweisen, als auch hochkoerzitive Magnetpigmente mit einer Koerzitivfeldstärke von bis zu 3500 Oersted (natürlich auch Magnetpigmente mit dazwischen liegende Koerzitivfeldstärken). Außerdem ist die zum teilweisen Gegenmagnetisieren verwendete Magnetfeldstärke mit der erfindungsgemäßen Magnetisiereinrichtung sehr einfach, durch entsprechende Positionierung der Magnetpigmente bzw. des Magneten einstellbar.

Die Magnetisierfläche der Magnetisiereinrichtung ist bevorzugt so groß, dass die flächige Probe auf die Magnetisierfläche aufgelegt werden kann und entlang der Magnetisierfläche auf den Magneten der Magnetisiereinrichtung zu bewegt werden kann. Vorzugsweise ist die Magnetisierfläche breiter und - entlang der Bewegungsrichtung der Probe betrachtet - länger als die Probe. Der mindestens eine Magnet der Magnetisiereinrichtung ist z.B. so angeordnet, dass zwischen der Magnetisierfläche und dem mindestens einen Magneten ein Spalt gebildet ist, in den die flächige Probe für das Magnetisieren ihrer Magnetpigmente eingeführt werden kann, wobei der Spalt senkrecht zur Magnetisierfläche größer ist als die Dicke der flächigen Probe. Auf diese Weise kann ein möglichst großer Bereich von Magnetfeldstärken für das Magnetisieren der Probe genutzt werden. Die Probe kann für das Aufmagnetisieren vollständig durch den Spalt hindurchgeführt werden und für das teilweise Gegenmagnetisieren in den Spalt hineingeführt werden.

Bei einer ersten Ausführungsform der Magnetisiereinrichtung wird die Probe für das teilweise Gegenmagnetisieren so weit in den Spalt hineingeführt werden, bis die Magnetpigmente den gewünschten Magnetisierungsabstand zu dem Magneten erreicht haben. Bei einer zweiten Ausführungsform der Magnetisiereinrichtung wird die Probe für das teilweise Gegenmagnetisieren soweit in den Spalt hineingeführt, bis sich die Magnetpigmente in dem Spalt befinden (mittig unter dem Magnet oder etwas seitlich versetzt zu dem Magnet) und anschließend wird der Abstand des Magneten von der Magnetisierfläche soweit verringert, bis der gewünschte Magnetisierungsabstand zwischen dem Magneten und den Magnetpigmenten der Probe erreicht ist. Bei der ersten Ausführungsform der Magnetisiereinrichtung gibt der in der Prüfeinrichtung bzw. in der anderen Einrichtung hinterlegte Magnetfeldverlauf der Magnetisiereinrichtung die auf der Magnetisierfläche vorliegende Magnetfeldstärke als Funktion der Position (in der vorbestimmten Bewegungsrichtung der Probe) entlang der Magnetisierfläche, parallel oder antiparallel zum Magnetfeldgradienten des statischen Magnetfelds an. Das statische Magnetfeld der Magnetisiereinrichtung ist bei dieser ersten Ausführungsform (in Bezug auf die Magnetisierungseinrichtung) unveränderlich bzw. bleibt während des Magnetisierens und Prüfens der Magnetpigmente unverändert. Bei der zweiten Ausführungsform der Magnetisiereinrichtung gibt der in der Prüfeinrichtung bzw. in der anderen Einrichtung hinterlegte Magnetfeldverlauf der Magnetisiereinrichtung die auf der Magnetisierfläche vorliegende Magnetfeldstärke als Funktion der (variablen) Position des mindestens einen Magneten senkrecht zu der Magnetisierfläche an und ggf. zusätzlich als Funktion der Position der Probe entlang der Magnetisierfläche, parallel oder antiparallel zum Magnetfeldgradienten.

Die Magnetisierfläche der Magnetisiereinrichtung ist dazu ausgebildet, die Probe während des ersten und ggf. während des jeweiligen erneuten teilweisen Gegenmagnetisierens ihrer Magnetpigmente (und ggf. auch bei der Aufmagnetisierung) aufzunehmen. Die Magnetisierfläche ist dazu eingerichtet, dass die von der Magnetisierfläche aufgenommene flächige Probe für das teilweise Gegenmagnetisieren in einer vorbestimmten Bewegungsrichtung entlang der Magnetisierfläche geführt wird (wobei die Probe die Magnetisierfläche beim Entlangführen berührt) und die flächige Probe durch das Entlangführen entlang der Magnetisierfläche auf den Magneten zu bewegt werden kann (und dabei ggf. in den Spalt hineingeführt wird, der zwischen der Magnetisierfläche und dem mindestens einen Magneten gebildet ist). Die Magnetisierfläche weist eine Eingangsseite auf, die - entlang der vorbestimmten Bewegungsrichtung der Probe betrachtet - vor dem mindestens einen Magneten angeordnet ist, und eine Ausgangsseite auf, die - entlang der vorbestimmten Bewegungsrichtung der Probe betrachtet - nach dem mindestens einen Magneten angeordnet ist. Bevorzugt erstreckt sich die Magnetisierfläche zumindest auf ihrer Eingangsseite - entlang der vorbestimmten Bewegungsrichtung betrachtet - von ihrem Rand bis zu dem mindestens einen Magneten mindestens über die Länge der flächigen Probe, z.B. mindestens über 10 cm. Damit kann die flächige Probe beim teilweisen Gegenmagnetisieren bequem positioniert werden und es wird eine hohe Positionsgenauigkeit erreicht. Vorzugsweise ist die Magnetisierfläche der Magnetisiereinrichtung ein- oder beidseitig durch eine Führung begrenzt, die sich entlang der vorbestimmten Bewegungsrichtung erstreckt (und z.B. als Stufe ausgebildet ist). Dies ermöglicht es, eine Verdrehung der Probe zu vermeiden und so die Positionsgenauigkeit der Probe beim teilweisen Gegenmagnetisieren zu erhöhen.

Zur Bereitstellung des statischen Magnetfelds weist die Magnetisiereinrichtung mindestens einen Magneten auf. Der mindestens eine Magnet erstreckt sich - parallel zur Magnetisierfläche und in der Richtung senkrecht zur vorbestimmten Bewegungsrichtung der Probe betrachtet - mindestens über die Breite der flächigen Probe, damit diese senkrecht zu ihrer Bewegungsrichtung gleichmäßig und durchgehend magnetisierbar ist. Auf der Eingangsseite der Magnetisiereinrichtung (d.h. entlang der vorbestimmten Bewegungsrichtung diesseits des mindestens einen Magneten) ist das statische Magnetfeld in die umgekehrte Richtung gerichtet als auf der Ausgangsseite der Magnetisiereinrichtung (d.h. entlang der vorbestimmten Bewegungsrichtung jenseits des mindestens einen Magneten). Die Magnetisiereinrichtung weist entweder nur einen einzigen (entsprechend langen) Magneten auf oder mehrere, in einer Reihe senkrecht zur Bewegungsrichtung der Probe angeordnete (vorzugsweise gleiche) Magnete, die auch gleichgerichtet eingebaut sind. Der mindestens einen Magnet ist bevorzugt derart angeordnet, dass entweder sein magnetischer Nordpol oder sein magnetischer Südpol stirnseitig zur Magnetisierfläche weist und der jeweilige andere magnetische Pol von der Magnetisierfläche abgewandt ist. Bei einer Reihe von Magneten weisen entweder alle magnetischen Nordpole oder alle magnetischen Südpole stirnseitig zur Magnetisierfläche. Diese stirnseitige Anordnung der Magnetpole hat den Vorteil, dass das von dem mindestens einen Magnet zur Magnetisierung der Probe auf der Magnetisierfläche bereitgestellte Magnetfeld eine große Magnetfeldkomponente hat, die parallel bzw. antiparallel zur vorbestimmten Bewegungsrichtung der Probe gerichtet ist. Auf der Ausgangsseite der Magnetisiereinrichtung ist die parallel bzw. antiparallel zur vorbestimmten Bewegungsrichtung der Probe gerichtete Magnetfeldkomponente dabei in die umgekehrte Richtung gerichtet als auf der Eingangsseite (auf der Eingangsseite parallel und auf der Ausgangsseite antiparallel gerichtet oder auf der Eingangsseite antiparallel und auf der Ausgangsseite parallel). Im Vergleich zu dieser Magnetfeldkomponente ist die senkrecht zur vorbestimmten Bewegungsrichtung der Probe verlaufende Magnetfeldkomponente des statischen Magnetfelds vernachlässigbar gering. Auf der Magnetisierfläche der Magnetisiereinrichtung beträgt die senkrecht zur Aufmagnetisierungsrichtung gerichtete Magnetfeldkomponente des statischen Magnetfelds vorzugsweise weniger als 10% der parallel oder antiparallel zur Aufmagnetisierungsrichtung gerichteten Magnetfeldkomponente des statischen Magnetfelds. Eine solche Ausrichtung des Magnetfeldes ermöglicht eine teilweise Gegenmagnetisierung mit einem Magnetfeld geringer Stärke. Außerdem wird die Messung und die Auswertung der Magnetisierungswerte vereinfacht, da es ausreicht, nur die Magnetisierungskomponente in einer Raumrichtung, nämlich der Aufmagnetisierungsrichtung, zu betrachten.

Vorzugsweise weist die Magnetisiereinrichtung eine für einen Bediener ablesbare Skala auf, an der dieser ein Maß für den Magnetisierungsabstand zwischen den Magnetpigmenten und dem Magneten der Magnetsiereinrichtung ablesen kann. An der Skala kann der Abstand der Proben-Vorder- bzw. -Rückkante von dem Magneten abgelesen werden, aus welchem - unter Berücksichtigung des Abstands der Magnetpigmente von der Vorder- bzw. Rückkante der flächigen Probe - der Magnetisierungsabstand der Magnetpigmente von dem Magneten automatisch berechnet werden kann. Die ablesbare Skala kann sich entlang der vorbestimmten Bewegungsrichtung erstrecken, z.B. auf einer seitlichen Führung der Magnetisiereinrichtung aufgebracht sein. Dies kann sowohl bei der ersten als auch bei der zweiten Ausführungsform der Magnetisiereinrichtung nützlich sein. Sofern ein mechanischer Anschlag vorgesehen ist, kann an der Skala dann auch der Abstand des mechanischen Anschlags von dem Magneten abgelesen werden.

Bei der zweiten Ausführungsform der Magnetisiereinrichtung weist die Magnetisiereinrichtung vorzugsweise eine Verstelleinrichtung auf, mit deren Hilfe der Bediener den Abstand des mindestens einen Magneten von der Magnetisierfläche einstellen kann, um den Abstand zwischen den Magnetpigmenten und dem Magneten der Magnetsiereinrichtung zu verändern, wenn die Magnetpigmente zwischen dem Magneten und der Magnetisierfläche (im Spalt) positioniert sind. Auch diese Verstelleinrichtung kann eine vom Bediener ablesbare Skala aufweisen, an der dieser ein Maß für den Magnetisierungsabstand zwischen den Magnetpigmenten und dem Magneten der Magnetsiereinrichtung ablesen kann.

Die Magnetisiereinrichtung kann auch einen mechanischen Anschlag aufweisen, der entlang der vorbestimmten Bewegungsrichtung der flächigen Probe auf der Magnetisiereinrichtung verschiebbar ist. Der Anschlag wird z.B. bündig zur seitlichen Führung gelegt und die flächige Probe bis an die Vorderkante des mechanischen Anschlags bewegt, bis die Vorderkante der flächigen Probe den Anschlag berührt. Damit sind die Position und die Ausrichtung der flächigen Probe besser definiert.

Nachfolgend wird die Erfindung beispielhaft anhand der folgenden Figuren erläutert. Es zeigen:
Fig. 1 ein Beispiel einer Anordnung zur Magnetisierung und Prüfung der Koerzitivfeldstärke von flächigen Proben,
Fig. 2 ein Beispiel einer Messeinrichtung zur Messung der Magnetisierung der flächigen Proben,
Fig. 3 ein Beispiel einer Magnetisiereinrichtung zur Magnetisierung der flächigen Proben (Fig. 3a), ein Beispiel für die Magnete der Magnetisiereinrichtung,(Fig. 3b), eine auf einer Magnetisiereinrichtung positionierte flächige Probe (Fig. 3c) und eine flächige Probe in verschiedenen Abständen zum Magneten der Magnetisiereinrichtung (Fig. 3d),
Fig. 4 eine Hysteresekurve von Magnetpigmenten mit einer Koerzitivfeldstärke K0' (Fig. 4a), einen Magnetfeldverlauf K(x) der Magnetisiereinrichtung (Fig. 4b), die gemessene Magnetisierung M(x) als Funktion des Magnetisierungsabstands x (Fig. 4c),
Fig. 5a eine Magnetisiereinrichtung mit einem verschiebbaren mechanischen Anschlag und einer ablesbaren Skala,
Fig. 5b,c eine Magnetisiereinrichtung mit vertikal verstellbarem Magneten,
Fig. 6 eine auf einer Magnetisiereinrichtung positionierte flächige Probe, deren Magnetbereich sich parallel zu dem Magnetfeldgradienten erstreckt (Fig. 6a), bzw. schräg zu dem Magnetfeldgradienten erstreckt (Fig. 6d), den Magnetisierungsverlauf M(x) des Magnetbereichs aus Fig. 6a als Funktion des Magnetisierungsabstands x (Fig. 6b) und dessen erste Ableitung (Fig. 6c) und die erste Ableitung des Magnetisierungsverlaufs M'(x) des Magnetbereichs aus Fig. 6d als Funktion des Magnetisierungsabstands x (Fig. 6e),
Fig. 7 eine auf einer Magnetisiereinrichtung positionierte flächige Probe, deren magnetische Seriennummer antiparallel zum Magnetfeldgradienten orientiert ist (Fig. 7a) und die Ermittlung des Ziel-Magnetisierungs-abstands xm mit Hilfe der Standardabweichung (Fig. 7b, c).

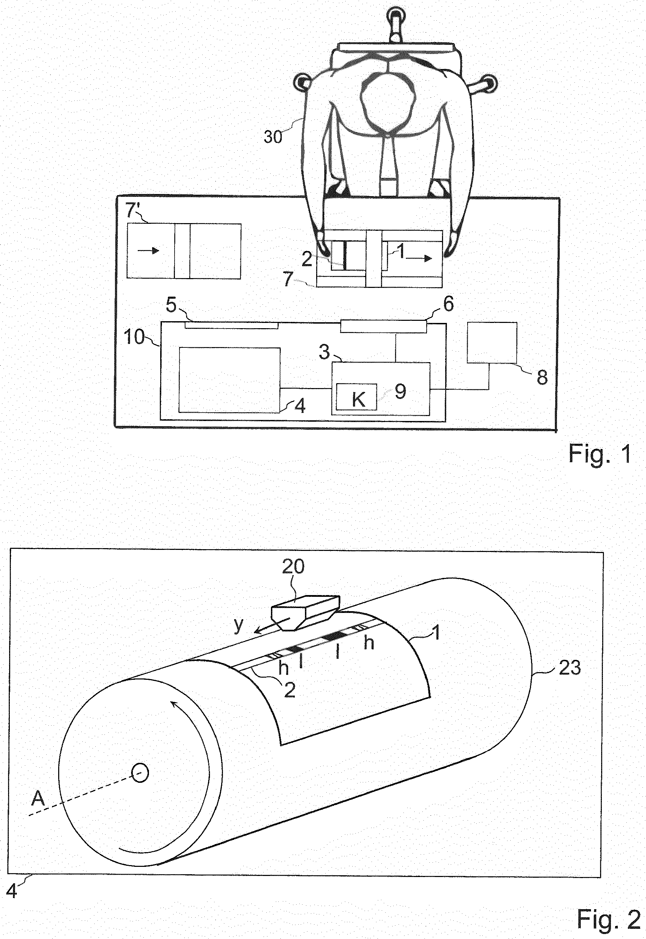

Anhand von Figur 1 wird beispielhaft die Prüfung der Koerzitivfeldstärke von Magnetpigmenten einer flächigen Probe 1 erläutert. Die Magnetpigmente liegen in einem Magnetbereich der Probe 1 vor, der in diesem Beispiel durch einen magnetischen Sicherheitsfaden 2 gebildet wird. Die Magnetpigmente können durchgehend entlang des Sicherheitsfadens aufgebracht sein oder nur lokal, z.B. als Teil einer magnetischen Kodierung aus hochkoerzitiven und/oder niederkoerzitiven Magnetbereichen h, l, vgl. Fig. 2. Der Magnetbereich der Magnetpigmente kann aber auch durch ein anderes Sicherheitselement gebildet werden, z.B. einen Magentaufdruck. Die flächige Probe ist in diesem Beispiel als Wertdokument ausgebildet.

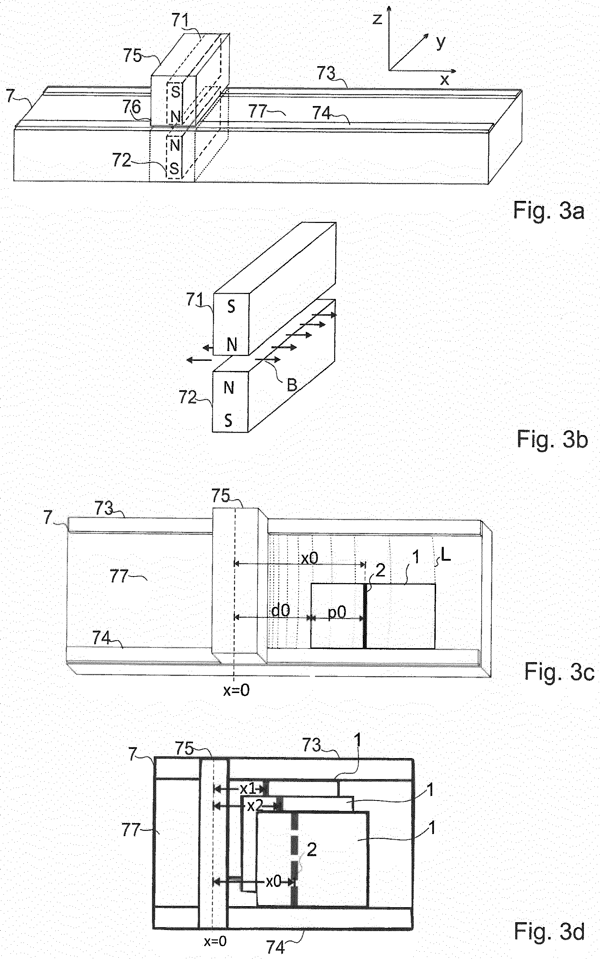

Zur Magnetisierung werden die Magnetpigmente zunächst mittels einer Magnetisiereinrichtung aufmagnetisiert, die ein statisches Magnetfeld bereit stellt. Dazu kann die in Fig. 1 gezeigte Magnetisiereinrichtung 7 verwendet werden oder eine andere Magnetisiereinrichtung 7', die ein Magnetfeld mit größerer Magnetfeldstärke bereit stellt. Zum Aufmagnetisieren der Probe wird z.B. dann eine andere Magnetisiereinrichtung 7'(mit größerer Magnetfeldstärke) verwendet, wenn das Magnetfeld der Magnetisiereinrichtung 7 zwar die Koerzitivfeldstärke der Probe überschreitet, aber nicht zur Sättigung ihrer Magnetisierung ausreicht. Zum Aufmagnetisieren wird die Probe 1 von einem Bediener 30 entlang der Pfeilrichtung vollständig durch die Magnetisiereinrichtung 7 (oder 7') hindurch geschoben, was noch genauer in Bezug auf Fig. 3a erläutert wird. Beim Aufmagnetisieren wird die Probe 1 bis zur Sättigung ihrer Magnetisierung in eine Aufmagnetisierungsrichtung (die hier entlang des Pfeils gerichtet ist) magnetisiert. Danach wird die Probe aus dem statischen Magnetfeld der Magnetisiereinrichtung entfernt. Vorzugsweise weist der Magnet der Magnetisiereinrichtung eine Magnetfeldstärke auf, die die (erwartete) Koerzitivfeldstärke der Probe um einen Faktor 2, besonders bevorzugt um einen Faktor 5 übersteigt. Beispielsweise weist der Magnet der Magnetisiereinrichtung eine Magnetfeldstärke von mindestens 0,75 T auf, bevorzugt von mindestens 1 T.

Um eine Bezugsgröße für die späteren Magnetisierungsmessungen zu erhalten, kann die durch das Aufmagnetisieren erreichte Magnetisierung gemessen werden (Remanenzmessung). Die weiter unten beschriebenen Magnetisierungswerte können aber auch ohne eine solche Bezugsgröße ausgewertet werden. Die jeweilige Messung des jeweiligen Magnetisierungswerts, die nach der jeweiligen teilweisen Gegenmagnetisierung der Probe 1 durchgeführt wird, wird mit einer Messeinrichtung 4 durchgeführt. Auch die optionale Remanenzmessung kann mit der Messeinrichtung 4 durchgeführt werden.

Zur Messung der Magnetisierung der Probe 1 wird z.B. eine Messeinrichtung 4 verwendet, die in einem Gerät 10 enthalten ist und von außen für den Bediener 30 des Geräts 10 durch ein aufklappbares Fenster 5 zugänglich ist. Die Messeinrichtung 4 weist in diesem Beispiel eine Trommel 23 auf, auf welche der Bediener die aufmagnetisierte Probe 1 auflegt, vgl. Fig. 2. Die Probe wird zur Befestigung von der Trommel angesaugt. Ein Magnetdetektor 20 ist auf einer Scaneinrichtung (nicht gezeigt) montiert, die in geringem Abstand zur Trommel 23 entlang der Richtung y transportierbar ist. Die Trommel 23 ist um eine Achse A rotierbar, die parallel zur y-Richtung verläuft. Durch die Rotation der Trommel 23 lässt sich die Probe 1 entlang des Umfangs der Trommel 3 wiederholt an dem Magnetdetektor 20 vorbeitransportieren. Bei jeder Trommelrotation kann dabei die Magnetisierung derjenigen Magnetbereiche h, l des Sicherheitsfadens 2 detektiert werden, die sich, je nach y-Position des Magnetdetektors 20, gerade im Erfassungsbereich des Magnetdetektors 20 befinden. Durch langsames Bewegen des Magnetdetektors 20 entlang der y-Richtung und gleichzeitige, schnelle Rotation der Trommel 23 kann die Magnetisierung verschiedener Abschnitte bzw. Magnetbereiche h. l, des Sicherheitsfadens nacheinander detektiert werden. Die Magnetisierung wird dabei ohne Einwirkung eines Magnetfelds gemessen.

Das Gerät 10 und die Magnetisiereinrichtung 7 sind in Reichweite für den Bediener 30 angeordnet, der die Probe 1 ggf. abwechselnd der Magnetisiereinrichtung 7 und der Messeinrichtung 4 des Geräts 10 zuführt. Das Gerät 10 weist eine mit der Messeinrichtung 4 verbundene Prüfeinrichtung 3 auf, die zur Auswertung der von der Messeinrichtung 4 gemessenen Magnetisierungswerte eingerichtet ist und in der ein Magnetfeldverlauf K(x) der Magnetisiereinrichtung 7 hinterlegt ist, der zur Prüfung der Koerzitivfeldstärke der Magnetpigmente verwendet wird. Das Gerät 10 weist außerdem eine Ausgabeeinrichtung auf, z.B. eine Anzeigeeinrichtung, und eine Eingabeeinrichtung für den Bediener 30. Bei dem Gerät 10 ist beides zusammen als Ein- und Ausgabeeinrichtung 6, z.B. in Form eines Touchscreens vorhanden. Ferner kann eine andere Einrichtung 8, z.B. ein Computer, mit dem Gerät 10 verbunden sein, in der der Magnetfeldverlauf K(x) der Magnetisiereinrichtung 7 hinterlegt sein kann und die ggf. zur Auswertung der Messergebnisse verwendet wird. Die Messeinrichtung 4 und die Prüfeinrichtung 3 brauchen nicht in einem gemeinsamen Gerät 10 untergebracht zu sein, sondern können auch eigenständig sein.

### Magnetisiereinrichtung

In Fig. 3a ist beispielhaft eine Magnetisiereinrichtung 7 gezeigt, die zur Aufnahme der Probe 1 eine Magnetisierfläche 77 bereitstellt, die dazu ausgebildet ist, die Probe während der Magnetisierung ihrer Magnetpigmente aufzunehmen. Zum Zweck ihrer Magnetisierung wird die Probe 1 vom Bediener 30 an der Eingangsseite (rechts) auf die Magnetisierfläche 77 aufgelegt und in einer vorbestimmten Bewegungsrichtung der Probe (hier die -x-Richtung) entlang der Magnetisierfläche (ggf. in den Spalt 76 hinein) geführt. Die Probe gleitet beim Entlangführen auf der Magnetisierfläche 77. Die Magnetisierfläche 77 ist beidseitig durch Führungen 73, 74 begrenzt, die als Stufe ausgebildet sind und sich entlang der vorbestimmten Bewegungsrichtung -x erstrecken. Die Magnetisiereinrichtung 7 weist mindestens einen Magneten 71 auf, dessen magnetischer Nordpol (alternativ Südpol) stirnseitig zur Magnetisierfläche 77 weist. Es kann nur ein einziger, breiter Magnet 71 oder es können mehrere, in einer Reihe senkrecht zur Bewegungsrichtung -x der Probe angeordnete, gleichgerichtete und gleichartige Magnete 71 verwendet werden, deren magnetische Nordpole (alternativ Südpole) stirnseitig zur Magnetisierfläche 77 weisen. Der mindestens eine Magnet 71 erstreckt sich - parallel zur Magnetisierfläche 77 und in der Richtung senkrecht zur Bewegungsrichtung -x der Probe betrachtet - über die ganze Breite der Probe, wodurch eine homogene Magnetisierung der Probe 1 über ihre gesamte Breite erreicht wird.

Gegenüberliegend zu dem Magneten 71 kann mindestens ein weiterer Magnet 72 angeordnet sein, der spiegelverkehrt zum Magneten 71 orientiert ist, so dass ebenfalls dessen magnetischer Nordpol (alternativ der Südpol) stirnseitig zur Magnetisierfläche 77 weist. Analog zum Magneten 71 können auch mehrere gleichgerichtete Magnete 72 verwendet werden. Das von den Magneten 71, 72 zur Magnetisierung der Probe auf der Magnetisierfläche 77 bereitgestellte Magnetfeld B hat daher eine Magnetfeldkomponente, die parallel bzw. antiparallel zur Bewegungsrichtung der Probe gerichtet ist. Die Magnetisierfläche 77 weist (rechts) eine Eingangsseite auf, die - entlang der vorbestimmten Bewegungsrichtung (-x) der Probe betrachtet - vor dem mindestens einen Magneten angeordnet ist, und (links) eine Ausgangsseite auf, die - entlang der vorbestimmten Bewegungsrichtung der Probe betrachtet - nach dem mindestens einen Magneten angeordnet ist. Auf der (in Fig. 3a rechts befindlichen) Eingangsseite der Magnetisiereinrichtung 7 weist diese Magnetfeldkomponente in die positive x-Richtung. Auf der (in Fig. 3a links befindlichen) Ausgangsseite der Magnetisiereinrichtung 7 weist diese Magnetfeldkomponente in die negative x-Richtung, ist also umgekehrt gerichtet als auf der Eingangsseite der Magnetisiereinrichtung 7, vgl. Fig. 3b.

Die Magnetisiereinrichtung kann - statt der gegenüberliegenden Magnete 71, 72 - auch nur einseitig mit einem oder mehreren Magneten (entweder Magnet/e 71 oberhalb oder Magnet/ e 72 unterhalb der Magnetisierfläche 77) ausgestattet sein. Das damit auf der Magnetisierfläche 77 erzeugte Magnetfeld B verläuft dann nicht genau parallel oder antiparallel zur x-Richtung, sondern hat auch noch eine Komponente in z-Richtung. Bei der Auswertung der Magnetisierungswerte kann man sich aber auf die x-Richtung beschränken, wenn die Prüfeinrichtung 3 nur auf die Magnetisierung in x-Richtung empfindlich ist.

Der mindestens eine Magnet 71 befindet sich in einem Querbalken 75, der in einem geringen (z-)Abstand über der Magnetisierfläche 77 angeordnet ist. Der Abstand zwischen Querbalken 75 und Magnetisierfläche beträgt mindestens die Dicke der Probe 1. Der mindestens eine Magnet 72 ist unterhalb der Magnetisierfläche 77 angeordnet, vgl. Fig. 3a. Zwischen der Magnetisierfläche 77 und dem Querbalken 75, in dem sich der mindestens eine Magnet 71 befindet, ist ein Spalt 76 gebildet, in den die flächige Probe 1 für das Magnetisieren ihrer Magnetpigmente eingeführt werden kann. Für das Aufmagnetisieren kann die Probe 1 vollständig (in Fig. 3a von rechts nach links) durch den Spalt 76 hindurch geführt werden. Da das Magnetfeld B auf der Ausgangsseite der Magnetisiereinrichtung in die negative x-Richtung weist, werden die Magnetpigmente dabei in die negative x-Richtung bis zur Sättigung aufmagnetisiert. Für das teilweise Gegenmagnetisieren wird die Probe 1 von der Eingangsseite (rechts) beginnend, in Richtung des Querbalkens 75 (in -x-Richtung) bewegt, bis sich die Magnetpigmente an dem gewünschten Magnetisierungsabstand x0 zu den Magneten 71, 72 befinden, vgl. Fig. 3c. Beim Anhalten der Bewegung der Probe 1 befinden sich die der teilweisen Gegenmagnetisierung zu unterziehenden Magnetpigmente rechts von den Magneten 71, 72 und damit in dem Abschnitt des Magnetfelds B, in dem die Magnetfeldrichtung in die positive x-Richtung gerichtet ist, vgl. Fig. 3b, 3c. Je nach Lage der Magnetpigmente auf der Probe 1 und je nach gewähltem Magnetisierungsabstand x0 kann es dabei notwendig sein, dass die Probe (deren Vorderkante) teilweise in den Spalt 76 hinein geführt wird. Die Magnetfeldstärke des Magnetfelds B fällt - ausgehend von der Position x=0, an der sich die Magnete 71, 72 befinden - nach rechts ab, entsprechend den in Fig. 3c skizzierten Linien konstanten Magnetfelds L (in der x-y-Ebene). Falls die Magnetpigmente in einem langen Magnetbereich auf der Probe 1 vorliegen, wird als Magnetisierungsabstand x0 der Magnetisierungsabstand eines repräsentativen Teils des Magnetbereichs betrachtet, z.B. der Mittelpunkt des jeweiligen Magnetbereichs oder der am nächsten zum Magneten liegende Punkt des Magnetbereichs.

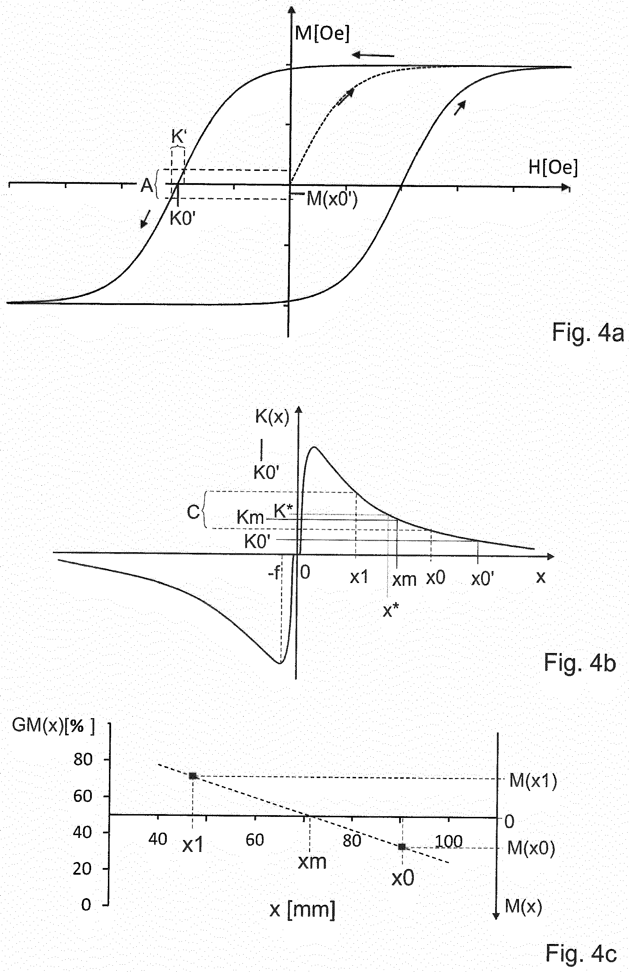

In Fig. 4b ist beispielhaft der Magnetfeldverlauf K(x) der Magnetisiereinrichtung 7 skizziert, d.h. der Verlauf der x-Komponente der Magnetfeldstärke des Magnetfelds B als Funktion des Magnetisierungsabstands x, vgl. Fig. 3c. Im Punkt x=0, d.h. direkt unter dem Magneten 71 ist die x-Komponente des Magnetfelds B verschwindend gering, doch bereits bei geringen Magnetisierungsabständen x (am Rand des Magneten 71) steigt die Magnetfeldstärke stark an und fällt anschließend mit zunehmendem Magnetisierungsabstand x monoton ab. Zum jeweiligen teilweisen Gegenmagnetisieren werden die Magnetpigmente in einen Magnetisierungsabstand gebracht, der in dem monoton abfallenden Ast des Magnetfeldverlauf K(x) liegt, allenfalls bis zu dem Punkt, an dem das Maximum des Magnetfeldverlauf K(x) erreicht wird.

### Teilweises Gegenmagnetisieren

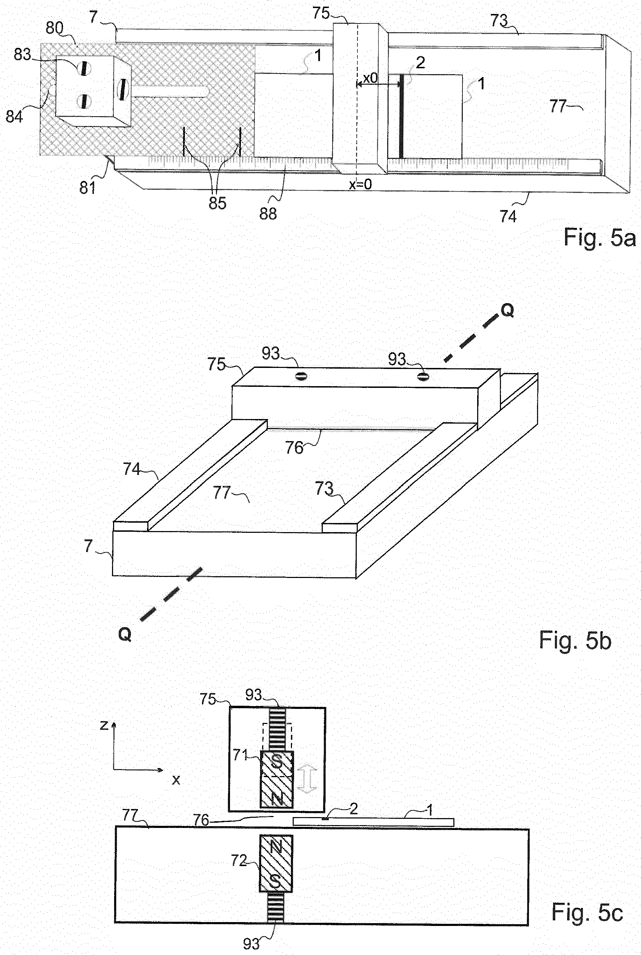

Nach dem Aufmagnetisieren (und ggf. nach der Remanenzmessung) wird das erste teilweise Gegenmagnetisieren der Magnetpigmente durchgeführt, bei dem die Magnetpigmente der Probe durch das statische Magnetfeld der Magnete 71, 72 teilweise gegenmagnetisiert werden. Zum ersten teilweisen Gegenmagnetisieren wird die Probe auf die Magnetisierfläche 77 der Magnetisiereinrichtung 7 aufgelegt und die Magnetpigmente in eine solche Position in das statische Magnetfeld B eingebracht, in der das statische Magnetfeld B in die positive x-Richtung, also entgegengesetzt zur Aufmagnetisierungsrichtung der Probe (negative x-Richtung) gerichtet ist, d.h. in einen Magnetisierungsabstand auf der positiven x-Achse. Die Probe und der Magnet werden relativ zueinander soweit aufeinander zu bewegt, bis die Magnetpigmente in einem ersten Magnetisierungsabstand von dem Magneten in dem statischen Magnetfeld positioniert sind. Zum Positionieren kann die Probe 1 auf den Magneten 71 zu bewegt werden (bei dem Ausführungsbeispiel zu Fig. 3d und 5a). Zusätzlich kann ggf. der Magnet 71 auf die Probe 1 zu bewegt werden (bei dem Ausführungsbeispiel zu Fig. 5b,5c). Nach diesem teilweisen Gegenmagnetisieren wird die Probe in umgekehrter Richtung, d.h. in positive x-Richtung von dem Magneten 71, 72 wegbewegt und aus dem statischen Magnetfeld B entfernt.

Die nach dem teilweise Gegenmagnetisieren resultierende Magnetisierung der Magnetpigmente kann verschwindend gering sein oder in oder entgegengesetzt zur Aufmagnetisierungsrichtung gerichtet sein, je nachdem, ob in dem Magnetisierungsabstand x0, in den die Probe zum teilweisen Gegenmagnetisieren gebracht wird, genau die Koerzitivfeldstärke KO der Magnetpigmente vorliegt oder die Koerzitivfeldstärke der Magnetpigmente in dem Magnetisierungsabstand überschritten wird oder unterschritten wird. Falls in dem gewählten Magnetisierungsabstand x0 genau die Koerzitivfeldstärke erreicht wird, werden die Magnetpigmente beim teilweisen Gegenmagnetisieren so gegenmagnetisiert, dass ihre resultierende Magnetisierung verschwindend gering ist bzw. idealerweise Null ist. Falls der gewählte Magnetisierungsabstand bei x>x0 liegt, wird beim teilweisen Gegenmagnetisieren eine Magnetfeldstärke K<K0 erreicht, die geringer ist als die Koerzitivfeldstärke K0, so dass die Magnetpigmente beim teilweisen Gegenmagnetisieren weniger als zur Hälfte gegenmagnetisiert werden und die resultierende Magnetisierung der Magnetpigmente weiterhin in die Aufmagnetisierungsrichtung (negative x-Richtung) weist. Falls der gewählte Magnetisierungsabstand bei x<x0 liegt, wird beim teilweisen Gegenmagnetisieren eine Magnetfeldstärke K>K0 erreicht, die größer ist als die Koerzitivfeldstärke K0, so dass die Magnetpigmente beim teilweisen Gegenmagnetisieren mehr als zur Hälfte gegenmagnetisiert werden und die resultierende Magnetisierung der Magnetpigmente umgekehrt zur Aufmagnetisierungsrichtung, d.h. in positive x-Richtung weist.

Nach dem ersten teilweisen Gegenmagnetisieren der Probe 1 wird mittels der Messeinrichtung 4 ein erster Magnetisierungswert gemessen, der für die in dem jeweils gewählten Magnetisierungsabstand erreichte teilweise Gegenmagnetisierung der Magnetpigmente charakteristisch ist. Die Magnetpigmente befinden sich während der Messung des ersten Magnetisierungswerts außerhalb des statischen Magnetfelds der Magnetisiereinrichtung (d.h. in einem so großen Abstand zur Magnetisiereinrichtung, dass deren statisches Magnetfeld keine/ eine vernachlässigbar geringe Magnetisierung bewirkt). In Fig. 4a ist ein Beispiel für den gemessenen ersten Magnetisierungswert M(x0') eingezeichnet, der durch die erste teilweise Gegenmagnetisierung mittels der Magnetisiereinrichtung 7 in einem Magnetisierungsabstand x0' erreicht wurde.

### Optionale erneute teilweise Gegenmagnetisierung und Messung

Das oben beschriebene teilweise Gegenmagnetisieren und die anschließende Messung eines Magnetisierungswerts kann bei Bedarf wiederholt bzw. erneut durchgeführt werden, z.B. in Abhängigkeit des zuvor gemessenen ersten Magnetisierungswerts. Das teilweise Gegenmagnetisieren und die anschließende Messung eines weiteren Magnetisierungswerts werden z.B. dann erneut durchgeführt, wenn der Magnetbereich der Magnetpigmente, deren Koerzitivfeldstärke geprüft wird, sich senkrecht zum Magnetfeldgradienten der Magnetisiereinrichtung erstreckt. Auf das erneute teilweise Gegenmagnetisieren und Messen kann verzichtet werden, wenn der Magnetbereich der Magnetpigmente sich parallel oder antiparallel zum Magnetfeldgradienten bzw. zur x-Richtung erstreckt.

Je nach Wahl des zum erneuten teilweisen Gegenmagnetisieren gewählten Magnetisierungsabstands kann (vor dem teilweise Gegenmagnetisieren) ein Wiederholen des Aufmagnetisierens notwendig sein, und zwar dann, wenn die zum erneuten teilweisen Gegenmagnetisieren verwendete Magnetfeldstärke geringer ist als die beim vorherigen teilweisen Gegenmagnetisieren. Falls die zum erneuten teilweisen Gegenmagnetisieren verwendete Magnetfeldstärke jedoch größer ist als die beim vorherigen teilweisen Gegenmagnetisieren, ist keine Wiederholung der Aufmagnetisierung nötig.

Bei dem erneuten teilweisen Gegenmagnetisieren wird - wie beim ersten teilweisen Gegenmagnetisieren - die Probe auf eine Magnetisierfläche 77 der Magnetisiereinrichtung 7 aufgelegt und die Probe 1 und der Magnet 71 relativ zueinander soweit aufeinander zu bewegt, bis die Magnetpigmente in einem (von dem ersten Magnetisierungsabstand x0 verschiedenen) weiteren Magnetisierungsabstand x1 von dem Magneten in dem statischen Magnetfeld positioniert sind, in dem die Magnetfeldstärke größer oder kleiner ist als in dem ersten Magnetisierungsabstand (und größer oder kleiner als bei einem ggf. bereits zuvor durchgeführten erneuten teilweisen Gegenmagnetisieren). Nach der erneuten teilweisen Gegenmagnetisierung der Probe 1 wird mittels der Messeinrichtung 4 ein weiterer Magnetisierungswert gemessen, der für die teilweise Gegenmagnetisierung der Magnetpigmente charakteristisch ist, die in dem beim erneuten teilweisen Gegenmagnetisieren gewählten Magnetisierungsabstand erreicht wird. Auch hier befinden sich die Magnetpigmente während der/den weiteren Messung/ en außerhalb des statischen Magnetfelds des Magneten,

### Prüfeinrichtung und Prüfergebnis

Der bei der ersten Messung gemessene erste Magnetisierungswert und ggf. der/die bei der/den weiteren Messung/ en gemessenen weiteren Magnetisierungswert/e der teilweise gegenmagnetisierten Magnetpigmente werden von der Messeinrichtung 4 an die mit der Messeinrichtung verbundene Prüfeinrichtung 3 übermittelt. Das Übermitteln kann nach jeder einzelnen Messung, also vor dem erneuten teilweisen Gegenmagnetisieren, oder erst nach Ende der erneuten Messungen erfolgen. In der Prüfeinrichtung 3 ist ein Magnetfeldverlauf K(x) der Magnetisiereinrichtung 7 hinterlegt. Zum Beispiel weist die Prüfeinrichtung einen Speicherbereich 9 auf, in dem der Magnetfeldverlauf K(x) der Magnetisiereinrichtung als Funktion des Abstands x von dem Magneten der Magnetisiereinrichtung hinterlegt ist, vgl. Fig. 1. Die Prüfeinrichtung 3 prüft den bei der ersten Messung gemessenen ersten Magnetisierungswert (und ggf. den/ die bei der/ den weiteren Messung/ en gemessenen weiteren Magnetisierungswert/ e der teilweise gegenmagnetisierten Magnetpigmente), um ein Prüfergebnis zu ermitteln, das die Koerzitivfeldstärke der Magnetpigmente betrifft.

In einem ersten Ausführungsbeispiel umfasst dieses Prüfergebnis z.B. die Bestätigung einer vorgegebenen Soll-Koerzitivfeldstärke oder eines vorgegebenen Soll-Koerzitivitätsbereichs. Bei diesem ersten Ausführungsbeispiel wird der Magnetfeldverlauf der Magnetisiereinrichtung 7 dazu verwendet, einen (und ggf. mindestens einen weiteren) Magnetisierungsabstand zu ermitteln, der für das erste (und ggf. das weitere) Gegenmagnetisieren zwischen den Magnetpigmenten und dem Magneten gewählt werden soll, und dieser Magnetisierungsabstand wird für den Bediener der Magnetisiereinrichtung, z.B. durch Anzeige an der mit der Prüfeinrichtung verbundenen Ein- und Ausgabeeinrichtung 6, ausgegeben.

In anderen Ausführungsbeispielen (2-7) umfasst das Prüfergebnis einen Zahlenwert der Koerzitivfeldstärke, der bei dem Prüfen durch die Prüfeinrichtung 3 bestimmt wird. Bei diesen anderen Ausführungsbeispielen 2-7 wird der Magnetfeldverlauf K(x) der Magnetisiereinrichtung zur Ermittlung des die Koerzitivfeldstärke betreffenden Prüfergebnisses verwendet.

Das die Koerzitivfeldstärke der Magnetpigmente betreffende Prüfergebnis, insbesondere die Bestätigung einer vorgegebenen Soll-Koerzitivfeldstärke oder eines vorgegebenen Soll-Koerzitivitätsbereichs bzw. der Zahlenwert der Koerzitivfeldstärke, wird anschließend durch eine mit der Prüfeinrichtung 3 verbundene Ein- und Ausgabeeinrichtung 6 ausgegeben, an welche die Prüfeinrichtung das Prüfergebnis übermittelt.

### Erstes Ausführungsbeispiel

Beim ersten Ausführungsbeispiel wird überprüft, ob die Magnetpigmente eine vorgegebene Soll-Koerzitivfeldstärke K0' haben. Dabei werden folgende Schritte durchgeführt:
- Vorgeben einer Soll-Koerzitivfeldstärke K0' durch den Bediener 30, ggf. über eine Auswahl einer von mehreren vorgegebenen Magnetpigmentsorten, die der Bediener an der Ein- und Ausgabeeinrichtung 6 auswählt. Alternativ kann der Bediener die Magnetpigmentsorte indirekt über eine Auswahl der Proben- oder Wertdokumentsorte wählen, für die die Koerzitivfeldstärke des jeweiligen Magnetpigments und ggf. die jeweilige Lage des jeweiligen Magnetbereichs auf der Probe in der Prüfeinrichtung 3 hinterlegt ist. Zum Beispiel erhält der Bediener eine entsprechende Eingabeaufforderung an der Ein- und Ausgabeeinrichtung 6. Im Idealfall, bei einer teilweisen Gegenmagnetisierung der Magnetpigmente mit genau der Koerzitivfeldstärke, ist ein (erster) Magnetisierungswert von Null zu erwarten.
- Automatisches Bestimmen des für das jeweilige Magnetpigment mit der Soll-Koerzitivfeldstärke K0' zu wählenden Magnetisierungsabstands x0', in dem die Magnetpigmente von dem Magneten 71 positioniert werden sollen und in dem die teilweise Gegenmagnetisierung im Idealfall zu einer resultierenden Magnetisierung der Magnetpigmente von Null führen sollte. Dieser Magnetisierungsabstand x0' wird mittels der Prüfeinrichtung 3 anhand des hinterlegten Magnetfeldverlaufs K(x) automatisch bestimmt. Dazu wird anhand des Magnetfeldverlaufs K(x) derjenige Magnetisierungsabstand x0' herausgesucht, bei dem die Magnetfeldstärke der Soll-Koerzitivfeldstärke K0' entspricht, vgl. Fig. 4b. Der für die gewählten Magnetpigmente zu wählende Magnetisierungsabstand x0' wird dem Bediener 30 an der Ein- und Ausgabeeinrichtung 6 angezeigt.

- Aufmagnetisieren der Magnetpigmente bis zur Sättigung ihrer Magnetisierung mittels der Magnetisiereinrichtung 7 oder 7' durch den Bediener.
- Teilweises Gegenmagnetisieren der Magnetpigmente in dem zuvor bestimmten Magnetisierungsabstand x0' mittels der Magnetisiereinrichtung 7 durch den Bediener. Der Bediener legt die Probe z.B. ganz rechts auf die Magnetisiereinrichtung und bewegt sie solange in die negative x-Richtung, bis die Magnetpigmente, z.B. der Sicherheitsfaden 2, von dem Magneten 71 den Magnetisierungsabstand x0' hat. Danach wird die Probe wieder in positive x-Richtung zurückgezogen, von der Magnetisiereinrichtung 7 abgehoben und in das Gerät 10 eingelegt, um die Magnetisierung M(x0') zu messen, vgl. Fig. 4a.
- Die Prüfeinrichtung 3 erhält den Magnetisierungswert M(x0') von der Messeinrichtung 4 und überprüft dann, ob die Magnetisierung M(x0') verschwindet bzw. in einem um Null liegenden Akzeptanzbereich A liegt. Falls ja, veranlasst die Prüfeinrichtung 3 die Ein- und Ausgabeeinrichtung 6 dazu, eine Bestätigung auszugeben, dass die Magnetpigmente die vorgegebene Soll-Koerzitivfeldstärke K0' haben. Im Beispiel aus Fig. 4a liegt der erste Magnetisierungswert M(x0') zwar nicht bei Null, aber in dem Akzeptanzbereich A. An der Ein- und Ausgabeeinrichtung 6 des Geräts 10 wird daher eine solche Bestätigung ausgegeben.

Andernfalls, wenn die Prüfeinrichtung 3 festgestellt hat, dass der erste Magnetisierungswert außerhalb des Akzeptanzbereichs A liegt, wird an der Ein- und Ausgabeeinrichtung 6 des Geräts 10 ausgegeben, dass die Magnetpigmente nicht die vorgegebene Soll-Koerzitivfeldstärke K0' haben. Falls die Prüfeinrichtung 3 festgestellt hat, dass die gemessene Magnetisierung trotz teilweiser Gegenmagnetisierung noch in Richtung der Aufmagnetisierungsrichtung zeigt (wenn M(x0') oberhalb des Akzeptanzbereichs A liegt, vgl. Fig. 4a), kann auch ausgegeben werden, dass die Koerzitivfeldstärke der Magnetpigmente größer ist als die vorgegebene Koerzitivfeldstärke K0'. Falls die gemessene Magnetisierung nach der teilweise Gegenmagnetisierung entgegen zur Aufmagnetisierungsrichtung zeigt (wenn M(x0') unterhalb des Akzeptanzbereichs A liegt, vgl. Fig. 4a), kann ausgegeben werden, dass die Koerzitivfeldstärke der Magnetpigmente geringer ist als die vorgegebene Koerzitivfeldstärke K0'.

Optional kann der Bediener zusätzlich den Akzeptanzbereich A für den zu messenden (ersten) Magnetisierungswert angeben. Der Akzeptanzbereich A schließt den im Idealfall zu erwartenden Magnetisierungswert von Null ein und gibt an, wie groß die Abweichung des gemessenen (ersten) Magnetisierungswerts von dem Wert Null sein darf, damit die Koerzitivfeldstärke der Magnetpigmente - trotz einer (akzeptablen) Abweichung von Null - bestätigt wird, vgl. Fig. 4a. Die Abweichung kann z.B. aufgrund von Schwankungen der Magnetpigmente selbst oder aufgrund von Messungenauigkeiten, oder aufgrund einer Positionierungenauigkeit der Probe auf der Magnetisiereinrichtung 7 zustande kommen. Alternativ kann der Akzeptanzbereich A auch fest vorgegeben sein. Der Akzeptanzbereich A kann auch über einen Koerzitivitätsbereich K' gewählt werden oder vorgegeben sein, der gemäß der Hysteresekurve der jeweiligen Magnetpigmente dem Akzeptanzbereich A entspricht, vgl. Fig. 4a.

In einer Weiterbildung des ersten Ausführungsbeispiels wird in dem Fall, dass die Prüfeinrichtung festgestellt hat, dass die gemessene Magnetisierung trotz teilweiser Gegenmagnetisierung nicht im Akzeptanzbereich A liegt, die teilweise Gegenmagnetisierung und Messung erneut durchgeführt, mit dem Ziel, die tatsächliche Koerzitivfeldstärke der untersuchten Magnetpigmente zu bestimmen, wie es im Folgenden beschrieben ist: Dazu wird das teilweise Gegenmagnetisieren mit einem weiteren Magnetisierungsabstand x1' an Stelle des Magnetisierungsabstands x0' wiederholt bzw. erneut durchgeführt und anschließend wird mit der Messeinrichtung 4 ein weiterer Magnetisierungswert gemessen. Der weitere Magnetisierungsabstand x1' wird näher am Magneten 71 gewählt, (höhere Magnetfeldstärke), falls der erste Magnetisierungswert trotz teilweiser Gegenmagnetisierung noch in Richtung der Aufmagnetisierungsrichtung zeigt, und weiter entfernt vom Magneten 71 gewählt (geringere Magnetfeldstärke), falls der erste Magnetisierungswert entgegen zur Aufmagnetisierungsrichtung zeigt. Dann wird der weitere Magnetisierungswert M(x1') überprüft, ob dieser verschwindet bzw. in dem um Null liegenden Akzeptanzbereich A liegt. Bei Bedarf kann das teilweise Gegenmagnetisieren und anschließende Messen eines weiteren Magnetisierungswerts unter Variation des Magnetisierungsabstands x mehrfach erneut durchgeführt werden, z.B. solange bis ein weiterer Magnetisierungswert erreicht wird, der verschwindend gering ist bzw. in dem um Null liegenden Akzeptanzbereich A liegt. Für diesen Magnetisierungsabstand wird dann anhand des Magnetfeldverlaufs K(x) die zugehörige Koerzitivfeldstärke bestimmt und dem Bediener ausgegeben.

Die Prüfeinrichtung überprüft nach einer oder mehreren Magnetisierungsmessungen anhand eines Abbruchkriteriums ggf. automatisch, ob die Koerzitivfeldstärke anhand der bisherigen Magnetisierungsmesswerte bestimmt werden kann. Zum Beispiel kann die Prüfeinrichtung prüfen, ob genügend Magnetisierungswerte vorliegen, um die Koerzitivfeldstärke mit ausreichender Genauigkeit zu berechnen, z.B. mindestens 2 sehr geringe Magnetisierungsmesswerte (z.B. <20% der Remanenz). Als Abbruchkriterium kann auch geprüft werden, ob aufeinanderfolgende Magnetisierungsmessungen zu Magnetisierungswerten mit umgekehrten Vorzeichen führen.

Im ersten Ausführungsbeispiel wurde eine vorgegebene Koerzitivfeldstärke überprüft und der zum ersten teilweisen Gegenmagnetisieren verwendete erste Magnetisierungsabstand gezielt so gewählt, dass die Magnetpigmente dabei einer Magnetfeldstärke ausgesetzt werden, die etwa die (angebliche) Koerzitivfeldstärke der Magnetpigmente ist.

### Zweites Ausführungsbeispiel

In dem zweiten Ausführungsbeispiel wird der zum ersten teilweisen Gegenmagnetisieren verwendete erste Magnetisierungsabstand jedoch gezielt anders gewählt.

Zunächst werden die Magnetpigmente durch den Bediener bis zur Sättigung ihrer Magnetisierung mittels der Magnetisiereinrichtung 7 oder 7' aufmagnetisiert, wie oben beschrieben. Analog zum ersten Ausführungsbeispiel wird vom Bediener eine Koerzitivfeldstärke K* gewählt, die der Bediener für die zu untersuchenden Magnetpigmente vermutet. Anders als im ersten Ausführungsbeispiel werden dann jedoch zwei teilweise Gegenmagnetisierungen und Messungen bei zwei Magnetisierungsabständen x0 und x1 durchgeführt, die diesseits und jenseits desjenigen Magnetisierungsabstands x* liegen, der gemäß dem Magnetfeldverlauf K(x) der vorgegebenen Koerzitivfeldstärke K* entspricht, vgl. Fig. 4b. Beispielsweise wird der erste Magnetisierungsabstand x0 so gewählt, dass nach der ersten teilweisen Gegenmagnetisierung noch eine beträchtliche Magnetisierung in der Aufmagnetisierungsrichtung verbleibt und bei der folgenden Messung ein entsprechend großer erster Magnetisierungswert M(x0) gemessen, der deutlich größer als Null ist. Danach wird eine zweite teilweise Gegenmagnetisierung durchgeführt, die eine beträchtliche Magnetisierung entgegengesetzt zur Aufmagnetisierungsrichtung erzeugt, und bei der folgenden Messung ein entsprechend großer weiterer Magnetisierungswert M(x1) gemessen, der deutlich unter Null liegt. Zur Erhöhung der Genauigkeit können noch weitere teilweise Gegenmagnetisierungen bei anderen Magnetisierungsabständen und Messungen durchgeführt werden, um weitere "Stützstellen" an Magnetisierungswerten zu erhalten.

Dann werden der erste und der mindestens eine weitere Magnetisierungswert M(x0), M(x1) interpoliert, um den gesuchten Ziel-Magnetisierungsabstand xm zu bestimmen, bei dem die Magnetisierung M(x) gleich Null ist, vgl. Fig. 4c. Aus dem so ermittelten Ziel-Magnetisierungsabstand xm kann die Prüfeinrichtung 3 anhand des Magnetfeldverlaufs K(x) die tatsächliche Koerzitivfeldstärke Km der Magnetpigmente bestimmen, vgl. Fig. 4b, die dann an der Ein- und Ausgabeeinrichtung 6 ausgegeben wird.

### Drittes Ausführungsbeispiel

Im dritten Ausführungsbeispiel werden zwei Magnetisierungsabstände für die teilweise Gegenmagnetisierung vom Bediener vorgegeben und anhand der jeweils gemessenen Magnetisierungswerte automatisch die Koerzitivfeldstärke bestimmt.

Zunächst werden die Magnetpigmente durch den Bediener bis zur Sättigung ihrer Magnetisierung mittels der Magnetisiereinrichtung 7 oder 7' aufmagnetisiert, wie oben beschrieben. Gegebenenfalls wird zunächst die remanente Magnetisierung R gemessen, die nach der Aufmagnetisierung der Magnetpigmente bis zu ihrer Sättigung erreicht wird (Remanenzmessung). Danach wird ein erster Magnetisierungswert M(x0) nach einer teilweisen Gegenmagnetisierung in einem ersten Magnetisierungsabstand x0 gemessen und ein weiterer Magnetisierungswert M(x1) nach einer teilweisen Gegenmagnetisierung in einem weiteren Magnetisierungsabstand x1. Die Magnetisierungsabstände x0 und x1 können von dem Bediener selbst gewählt werden, der diese an der Ein- und Ausgabeeinrichtung 6 für die Prüfeinrichtung eingibt.

Der erste und weitere Magnetisierungswert können gemäß der Formel GM(x)=(R-M(x))/2R auf die zuvor gemessene remanente Magnetisierung R bezogen werden und so in Prozent der remanenten Magnetisierung angegeben werden, vgl. Fig. 4c. Bei der linken Skala GM(x) in Fig. 4c entspricht GM=0% einem Magnetisierungswert, der gleich der remanenten Magnetisierung R ist, und GM=100% bedeutet, dass beim teilweisen Gegenmagnetisieren eine Sättigung und damit eine remanente Magnetisierung in entgegengesetzter Richtung erreicht wurde, d.h. M(x)=-R. Der Wert GM=50% entspricht einem Magnetisierungswert M(x)=0.

Aus dem ersten und weiteren Magnetisierungswert M(x0) und M(x1) ermittelt die Prüfeinrichtung den Ziel-Magnetisierungsabstand xm, an der der Magnetisierungsverlauf M(x) einen Nulldurchgang hat (M(xm)=0 bzw. GM=50%). Der gesuchte Ziel-Magnetisierungsabstand xm kann z.B. durch Interpolation der für die beiden Magnetisierungsabstände x0, x1 gemessenen Magnetisierungen M(x0), M(x1) der Magnetpigmente bestimmt werden, vgl. Fig. 4c. Falls beide Magnetisierungswerte auf derselben Seite des Nulldurchgangs liegen, wird entsprechend eine Extrapolation durchgeführt. Aus dem so ermittelten Ziel-Magnetisierungsabstand xm kann die Prüfeinrichtung dann anhand des Magnetfeldverlaufs K(x) die tatsächliche Koerzitivfeldstärke Km der Magnetpigmente bestimmen, vgl. Fig. 4b, und an der Ein- und Ausgabeeinrichtung 6 ausgeben.

### Viertes Ausführungsbeispiel

Beim vierten Ausführungsbeispiel wird unter Vorgabe eines durchzuprüfenden Koerzitivitätsbereichs eine unbekannte Koerzitivfeldstärke bestimmt. Der Bediener gibt z.B. einen Koerzitivitätsbereich C an, in dem er die Koerzitivfeldstärke der zu prüfenden Magnetpigmente vermutet, vgl. Fig. 4b, z.B. durch Eingabe einer unteren und oberen Grenze des Koerzitivitätsbereichs C an der Ein- und Ausgabeeinrichtung 6.

Zunächst werden die Magnetpigmente durch den Bediener bis zur Sättigung ihrer Magnetisierung mittels der Magnetisiereinrichtung 7 oder 7' aufmagnetisiert, wie oben beschrieben. Die Prüfeinrichtung bestimmt anhand des Magnetfeldverlaufs K(x) zwei oder mehr als zwei Magnetisierungsabstände x0, x1, ... , in denen der Bediener die Magnetpigmente zur jeweiligen teilweisen Gegenmagnetisierung auf der Magnetisiereinrichtung 7 platzieren soll. Beispielsweise werden die Magnetisierungsabstände der Grenzen des vorgegebenen Koerzitivitätsbereichs C gewählt (in Fig. 4b sind das x0 und x1). Es können dann erneute Messungen der jeweiligen weiteren Magnetisierungswerte bei schrittweiser Variation des Magnetisierungsabstands x=x0, x1, x2,... durchgeführt werden, wie es in Fig. 3d skizziert ist. Zwischen x0 und x1 können auch weitere Magnetisierungsabstände für nochmalige teilweise Gegenmagnetisierungen gewählt werden, die den Bereich x0 bis x1 z.B. äquidistant abdecken, und entsprechende Messungen durchgeführt werden. Wie bereits zuvor beschrieben, werden zumindest ein erster Magnetisierungswert M(x0) nach der ersten teilweisen Gegenmagnetisierung in dem ersten Magnetisierungsabstand x0 gemessen und ein weiterer Magnetisierungswert M(x1) nach der erneuten teilweisen Gegenmagnetisierung in dem zweiten Magnetisierungsabstand x1, sowie ggf. weitere Magnetisierungswerte M(x2),... nach der erneuten teilweisen Gegenmagnetisierung in weiteren Magnetisierungsabständen x2,....

Wie im dritten Ausführungsbeispiel werden anschließend der erste und der mindestens eine weitere Magnetisierungswert interpoliert, um den gesuchten Ziel-Magnetisierungsabstand xm zu bestimmen, bei dem die Magnetisierung M(x) gleich Null ist, vgl. Fig. 4c. Aus dem so ermittelten Ziel-Magnetisierungsabstand xm kann die Prüfeinrichtung 3 anhand des Magnetfeldverlaufs K(x) die tatsächliche Koerzitivfeldstärke Km der Magnetpigmente bestimmen, vgl. Fig. 4b, die dann an der Ein -und Ausgabeeinrichtung 6 ausgegeben wird.

### Fünftes Ausführungsbeispiel:

Beim fünften Ausführungsbeispiel wird eine unbekannte Koerzitivfeldstärke bestimmt, wobei keine Vorgabe durch den Bediener erforderlich ist.

Zunächst werden die Magnetpigmente durch den Bediener bis zur Sättigung ihrer Magnetisierung mittels der Magnetisiereinrichtung 7 oder 7' aufmagnetisiert, wie oben beschrieben. Die Prüfeinrichtung legt automatisch einen ersten Magnetisierungsabstand x0 für die erste teilweise Gegenmagnetisierung fest, z.B. in der Mitte zwischen dem Querbalken und dem rechten Rand der Magnetisiereinrichtung 7 oder in einem bestimmten Magnetisierungsabstand von dem Magneten 71, der einer üblichen Koerzitivfeldstärke oder der zuletzt gemessenen Koerzitivfeldstärke entspricht. Die Prüfeinrichtung 3 gibt diesen Magnetisierungsabstand x0 an der Ein- und Ausgabeeinrichtung 6 für den Bediener aus.

Nach dem Aufmagnetisieren der Magnetpigmente bis zur Sättigung ihrer Magnetisierung führt der Bediener mittels der Magnetisiereinrichtung 7 die teilweise Gegenmagnetisierung der Magnetpigmente in dem automatisch festgelegten Magnetisierungsabstand x0 durch. Danach wird die Probe in das Gerät 10 eingelegt, um mittels der Messeinrichtung 4 die Magnetisierung M(x0) zu messen. Die Prüfeinrichtung 3 erhält den Magnetisierungswert M(x0) von der Messeinrichtung 4 und überprüft dann, ob die Magnetisierung M(x0) verschwindet bzw. in dem um Null liegenden Akzeptanzbereich A liegt. Falls ja, sucht die Prüfeinrichtung 3 anhand des Magnetfeldverlaufs K(x) die zu dem Magnetisierungsabstand x0 gehörige Koerzitivfeldstärke K0 heraus, vgl. Fig. 4b, und veranlasst die Ein- und Ausgabeeinrichtung 6 dazu, eine Information auszugeben, dass die Magnetpigmente die Koerzitivfeldstärke K0 haben.

Falls die Magnetisierung M(x0) jedoch nicht verschwindet bzw. nicht in dem um Null liegenden Akzeptanzbereich A liegt, wird automatisch ein weiterer Magnetisierungsabstand x1 bestimmt, der näher am Magneten 71 gewählt wird (höhere Magnetfeldstärke), falls die im vorherigen Schritt gemessene Magnetisierung M(x0) trotz teilweiser Gegenmagnetisierung noch in Richtung der Aufmagnetisierungsrichtung zeigt (M(x0)>>0) und die weiter entfernt vom Magneten 71 gewählt wird (geringere Magnetfeldstärke), falls die im vorherigen Schritt gemessene Magnetisierung M(x0) entgegen zur Aufmagnetisierungsrichtung zeigt (M(x0)<<0). Im letzteren Fall muss vor dem erneuten teilweisen Gegenmagnetisieren das Aufmagnetisieren der Magnetpigmente der flächigen Probe bis zur Sättigung ihrer Magnetisierung wiederholt werden. Dann wird die teilweise Gegenmagnetisierung in dem weiteren Magnetisierungsabstand x1 erneut durchgeführt, ein weiterer Magnetisierungswert M(x1) gemessen und überprüft, ob dieser verschwindet bzw. in dem um Null liegenden Akzeptanzbereich A liegt. Falls ja, sucht die Prüfeinrichtung 3 anhand des Magnetfeldverlaufs K(x) die zu dem Magnetisierungsabstand x1 gehörige Koerzitivfeldstärke K1 heraus, vgl. Fig. 4b, und veranlasst die Ein- und Ausgabeeinrichtung 6 dazu, eine Information auszugeben, dass die Magnetpigmente die Koerzitivfeldstärke K1 haben.

Falls dies wieder nicht der Fall ist, wird das teilweise Gegenmagnetisieren und anschließende Messen eines weiteren Magnetisierungswerts M(x) unter Variation des Magnetisierungsabstands x nochmals erneut durchgeführt, und zwar solange, bis ein weiterer Magnetisierungswert (z.B. M(xm)) erreicht wird, der verschwindend gering ist bzw. in dem um Null liegenden Akzeptanzbereich A liegt. Bei jeder Variation wird dabei automatisch ein weiterer Magnetisierungsabstands x2, x3... bestimmt, der näher am Magneten gewählt wird (höhere Magnetfeldstärke), falls die im vorherigen Schritt gemessene Magnetisierung trotz teilweiser Gegenmagnetisierung noch in Richtung der Aufmagnetisierungsrichtung zeigt und die weiter entfernt vom Magneten gewählt wird (geringere Magnetfeldstärke), falls die im vorherigen Schritt gemessene Magnetisierung entgegen zur Aufmagnetisierungsrichtung zeigt. Sofern bei der Variation der Magnetisierungsabstände die Richtung der Schritte umgekehrt werden muss (d.h. zuerst Verringern des Magnetisierungsabstands und im nächsten Schritt Vergrößern des Magnetisierungsabstands oder umgekehrt), wird die Schrittweite des Magnetisierungsabstands bevorzugt kleiner gewählt als im vorherigen Schritt. Damit lässt sich der gesuchte Ziel-Magnetisierungsabstand xm mit wenigen Schritten erreichen.

Sobald eine Messung durchgeführt wurde, bei der der weitere Magnetisierungswert verschwindet bzw. in dem um Null liegenden Akzeptanzbereich A liegt, sucht die Prüfeinrichtung 3 anhand des Magnetfeldverlaufs K(x) die zu diesem Ziel-Magnetisierungsabstand xm gehörige Koerzitivfeldstärke Km heraus, vgl. Fig. 4b, und veranlasst die Ein- und Ausgabeeinrichtung 6 dazu, eine Information auszugeben, dass die Magnetpigmente die Koerzitivfeldstärke Km haben.

### Sechstes Ausführungsbeispiel

Beim sechsten Ausführungsbeispiel wird eine unbekannte Koerzitivfeldstärke der Magnetpigmente eines oder mehrerer langer Magnetbereiche bestimmt, in dem die Magnetpigmente homogen enthalten sind. Zur teilweisen Gegenmagnetisierung wird der Magnetbereich entlang des Magnetfeldgradienten bzw. entlang der Abstandskoordinate x des Magnetfeldverlaufs K(x) oder schräg dazu auf die Magnetisiereinrichtung 7 gelegt.

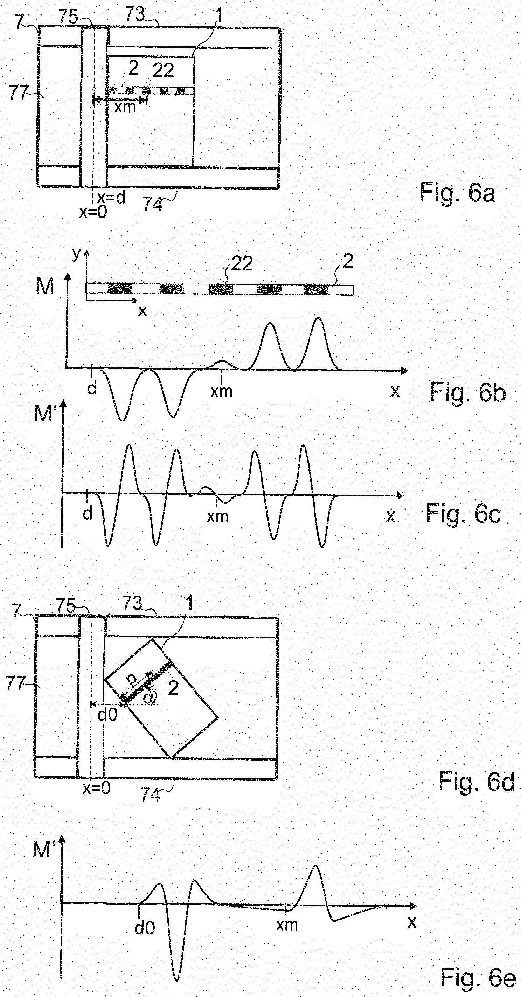

Der lange Magnetbereich kann z.B. ein magnetischer Sicherheitsfaden sein, der durchgehend und homogen mit demselben Magnetpigment versehen ist. Der Sicherheitsfaden kann aber auch mehrere Magnetbereiche desselben Magnetpigments aufweisen, in denen das Magnetpigment jeweils bevorzugt homogen verteilt ist, wie es im Beispiel aus Fig. 6a gezeigt ist. Der Sicherheitsfaden 2 aus Fig. 6a weist eine magnetische Kodierung aus 5 Magnetbereichen 22 derselben Koerzitivfeldstärke auf. Alternativ zu magnetischen Sicherheitsfäden können aber auch andere lange Magnetbereiche auf die im Folgenden beschriebene Weise geprüft werden.

Zunächst werden die Magnetpigmente durch den Bediener bis zur Sättigung ihrer Magnetisierung mittels der Magnetisiereinrichtung 7 oder 7' aufmagnetisiert, wie oben beschrieben. Die Probe wird dazu auf der Eingangsseite so auf die Magnetisiereinrichtung 7 gelegt, dass der lange Magnetbereich entlang des Magnetfeldgradienten (-x-Richtung) orientiert ist und von rechts nach links unter dem Querbalken 75 durchgezogen. Anschließend kann mittels der Messeinrichtung 4 ggf. ein Remanenz-Magnetisierungsverlauf R(x) der aufmagnetisierten Magnetpigmente entlang der Abstandskoordinate x auf der Probe gemessen werden.

Auch zum teilweisen Gegenmagnetisieren wird der Sicherheitsfaden 2 in Fig. 6a parallel zur Bewegungsrichtung, d.h. parallel zum Magnetfeldgradienten orientiert auf die Magnetisiereinrichtung 7 gelegt, d.h. der Sicherheitsfaden verläuft entlang der Abstandskoordinate x des Magnetfeldverlaufs K(x). Die Position der Probe 1 kann automatisch oder durch den Bediener festgelegt werden. Zum Beispiel wird dazu die Vorderkante des langen Magnetbereichs 2 am Rand des Querbalkens 75 positioniert (x=d), vgl. Fig. 6a. Aufgrund dieser Orientierung des langen Magnetbereichs werden die in verschiedenen Abschnitten des langen Magnetbereichs befindlichen Magnetpigmente unterschiedlich stark gegenmagnetisiert. Die beim teilweisen Gegenmagnetisieren näher am Magneten 71 liegenden Abschnitte werden stärker gegenmagnetisiert als die weiter weg liegenden Abschnitte.

Anschließend wird mittels der Messeinrichtung 4 ein Magnetisierungsverlauf M(x) der teilweise gegenmagnetisierten Magnetpigmente entlang der Abstandskoordinate x auf der Probe gemessen, vgl. Fig. 6b. Im Unterschied zu den vorherigen Ausführungsbeispielen ist die gemessene Magnetisierung M(x) eine kontinuierliche Funktion des Abstands x. Der Magnetisierungsverlauf M(x) enthält einen ersten Magnetisierungswert M(x0) und viele weitere Magnetisierungswerte M(x1), M(x2),... entlang des langen Magnetbereichs. Als erster Magnetisierungswert M(x0) wird beispielsweise die Magnetisierung an der Vorderkante des langen Magnetbereichs betrachtet (x=d). Die weitere Magnetisierungswerte entsprechen Magnetisierungsabständen von x>d. Bei dem Beispiel des Sicherheitsfadens 2 mit fünf Magnetbereichen 22 verläuft die Magnetisierung M(x) wie in Fig. 6b gezeigt. Für jeden Magnetbereich 22 wird als Funktion des Magnetisierungsabstands ein Peak erzeugt. Die beiden linken Magnetbereiche 22 wurden aufgrund ihres geringen Abstands zum Magneten 71 so stark teilweise gegenmagnetisiert, dass ihre Magnetisierung entgegen gesetzt zur Aufmagnetisierungsrichtung zeigt (M negativ). Die beiden rechten Magnetbereiche 22 wurden aufgrund ihres gro-βen Abstands zum Magneten 71 nur in geringem Maße teilweise gegenmagnetisiert, so dass ihre Magnetisierung immer noch in die Aufmagnetisierungsrichtung zeigt (M positiv). Für den mittleren Magnetbereich 22 werden sehr geringe Magnetisierungswerte gemessen. Dieser mittlere Magnetbereich 22 wurde also näherungsweise mit der Koerzitivfeldstärke der Magnetpigmente gegenmagnetisiert. Die Lage des mittleren Magnetbereichs entspricht daher zumindest näherungsweise dem Ziel-Magnetisierungsabstand xm, an dem der Magnetisierungsverlauf M(x) ein Minimum oder einen Nulldurchgang hat (M(xm)=0).

Die Prüfeinrichtung 3 kann den Ziel-Magnetisierungsabstand xm mit Hilfe einer entsprechenden Signalauswertung der Kurve M(x) automatisch bestimmen, z.B. durch Auswahl des Peaks mit der geringsten Höhe oder durch Interpolation zwischen den beiden niedrigsten Peaks. Gegebenenfalls kann der bei dem Ziel-Magnetisierungsabstand xm gefundene (minimale) Magnetisierungswert mit einem Remanenz-Messwert R der Remanenzmessung verglichen werden (z.B. mit dem Maximum der gemessenen Funktion R(x)), um sicherzustellen, dass dessen absolute Höhe tatsächlich sehr gering ist (z.B. unter einer Schwelle liegt). Damit wird sichergestellt, dass das Gegenmagnetisierungs-Magnetfeld bei dem gefundenen Magnetisierungsminimum tatsächlich etwa der Koerzitivfeldstärke entspricht. Die Prüfeinrichtung 3 kann dann aus dem so bestimmten Ziel-Magnetisierungsabstand xm anhand des Magnetfeldverlaufs K(x) die tatsächliche Koerzitivfeldstärke Km der Magnetpigmente bestimmen, die dann an der Ein- und Ausgabeeinrichtung 6 ausgegeben wird.

Alternativ kann auch die erste Ableitung des Magnetisierungsverlaufs M'(x)=dM(x)/dm nach der Koordinate des Magnetisierungsabstands x zur Bestimmung des gesuchten Ziel-Magnetisierungsabstands xm herangezogen werden und deren niedrigster Peak bestimmt werden, vgl. Fig. 6c. An Stelle eines eindimensionalen Magnetisierungsverlaufs M(x) kann die Messeinrichtung 4 auch eine zweidimensionale Verteilung der Magnetisierung M(x, y) messen und mit Hilfe einer Bildverarbeitung auswerten, um xm zu bestimmen. Alternativ kann die Prüfeinrichtung aber auch lediglich den Magnetisierungsverlauf M(x), deren erste Ableitung M'(x) oder eine zweidimensionale Verteilung der Magnetisierung M(x, y) oder deren ersten Ableitung M'(x,y), z.B. als Graustufenbild, an der Ein- und Ausgabeeinrichtung ausgeben und die Bestimmung von xm kann vom Bediener durchgeführt werden, z.B. indem dieser mit einem Cursor an der Ein- und Ausgabeeinrichtung 6 am niedrigsten Peak von M(x) bzw. M'(x) oder M(x,y) bzw. M'(x,y) eine entsprechende Markierung setzt.

Falls der gemessene Magnetisierungsverlauf M(x) bzw. M(x,y) keinen Nulldurchgang bzw. kein Minimum zeigt (z.B. weil der lange Magnetbereich beim teilweisen Gegenmagnetisieren nicht in einem entsprechenden Magnetisierungsabstand positioniert wurde oder eine ungewöhnliche Koerzitivfeldstärke aufweist), kann die teilweise Gegenmagnetisierung in einem anderen Bereich der Magnetisiereinrichtung 7 erneut durchgeführt werden, in welchem andere Magnetisierungsabstände und damit andere Koerzitivfeldstärken für den langen Magnetbereich erreicht werden. Die Messung des Magnetisierungsverlaufs M(x) bzw. M(x,y) und die oben beschriebene Auswertung wird dann ebenfalls erneut durchgeführt.

Falls der Sicherheitsfaden zusätzlich Magnetbereiche einer anderen Koerzitivfeldstärke aufweist, kann die eben beschriebene Vorgehensweise einfach wiederholt werden, wobei die teilweise Gegenmagnetisierung - entsprechend der anderen Koerzitivfeldstärke - ggf. in einem anderen Bereich der Magnetisiereinrichtung 7 erfolgen muss. Der Bediener gibt für die Magnetbereiche unterschiedlicher Koerzitivfeldstärke ggf. voneinander getrennte ROIs auf der flächigen Probe vor. Die Messung des Magnetisierungsverlaufs M(x) bzw. M(x,y) und dessen Auswertung wird für die Magnetbereiche der anderen Koerzitivfeldstärke analog zu oben durchgeführt.

Fig. 6d zeigt die zum teilweisen Gegenmagnetisieren gewählte Orientierung des langen Magnetbereichs 2 bei einer Abwandlung des sechsten Ausführungsbeispiels. Dort verläuft der Magnetbereich 2 nicht parallel zum Magnetfeldgradienten (-x-Richtung), sondern schräg dazu in einem Winkel α zur x-Richtung. Außerdem weist der Magnetbereich hier entlang seiner Erstreckungsrichtung durchgehend Magnetpigmente auf. Auch hier erstreckt sich der lange Magnetbereich 2 aber über einen so großen Abschnitt des statischen Magnetfelds, dass der Magnetbereich 2 eine Vielzahl von Magnetisierungsabständen x0, x1, x2, ... abdeckt. Die Aufmagnetisierung der Magnetpigmente erfolgt in derselben schrägen Orientierung, mittels Durchziehen der Probe unter dem Querbalken 75. In Fig. 6e ist die erste Ableitung des nach dem ersten teilweisen Gegenmagnetisieren gemessenen Magnetisierungsverlaufs M'(x) nach dem Magnetisierungsabstand x dargestellt. Der Magnetisierungsabstand x ergibt sich dabei mittels der Beziehung x=d0+p▪cos(α) aus der Koordinate p entlang des (schrägen) Magnetbereichs 2. Anhand der ersten Ableitung aus Fig. 6e kann der gesuchte Ziel-Magnetisierungsabstand xm bestimmt werden, der in diesem Fall an einem lokalen Minimum von M'(x) liegt (die großen Peaks der Funktion M(x) markieren den Anfang und das Ende des durchgehenden Magnetbereichs 2).

### Siebtes Ausführungsbeispiel

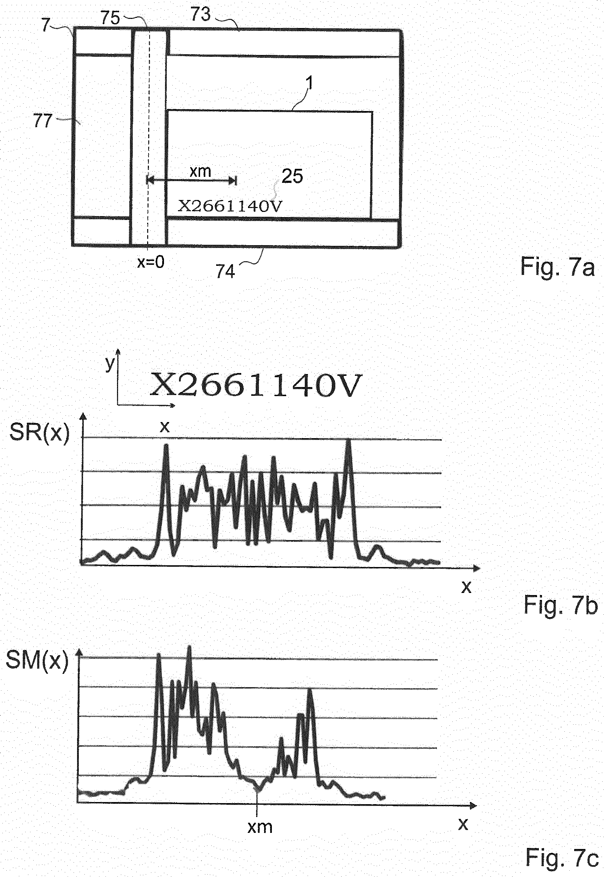

Wie im sechsten, so wird auch im siebten Ausführungsbeispiel eine unbekannte Koerzitivfeldstärke der Magnetpigmente eines langen Magnetbereichs bestimmt. Der Magnetbereich ist in diesem Fall jedoch nicht homogen mit dem Magnetpigment versehen, sondern fein strukturiert. Als Beispiel wird eine Seriennummer 25 aus magnetischer Druckfarbe betrachtet, wie sie in Fig. 7a gezeigt ist.

Zunächst werden die Magnetpigmente durch den Bediener bis zur Sättigung ihrer Magnetisierung mittels der Magnetisiereinrichtung 7 oder 7'aufmagnetisiert, wie oben beschrieben. Anschließend kann mittels der Messeinrichtung 4 der Verlauf der remanenten Magnetisierung R(x) der aufmagnetisierten Magnetpigmente entlang der Abstandskoordinate x auf der Probe gemessen werden. In Fig. 7b ist die Standardabweichung SR(x) der remanenten Magnetisierung R(x) in der y-Richtung (d.h. die senkrecht zur Seriennummer-Richtung berechnete Standardabweichung) gezeigt. Im Bereich der Seriennummer weist diese durchgehende Modulationen auf, die auf die feine Struktur der Seriennummer zurückzuführen sind.

Zur teilweisen Gegenmagnetisierung wird die Probe 1 so auf die Magnetisiereinrichtung 7 gelegt, dass die magnetische Seriennummer parallel, antiparallel oder schräg zum Magnetfeldgradienten verläuft, z.B. analog zu Fig. 6a oder Fig. 6d. Aufgrund dieser Orientierung der Seriennummer werden die in verschiedenen Abschnitten der Seriennummer befindlichen Magnetpigmente unterschiedlich stark gegenmagnetisiert.

Anschließend wird mittels der Messeinrichtung 4 mit dem Magnetisierungsverlauf M(x) die Magnetisierungswerte der teilweise gegenmagnetisierten Magnetpigmente entlang der Abstandskoordinate x auf der Probe gemessen und erneut die Standardabweichung SM(x) der Magnetisierung M(x) in der y-Richtung bestimmt, vgl. Fig. 7c. Die Standardabweichung SM(x) zeigt keine durchgehende Modulation, sondern die Modulation ist im Bereich der Position xm minimal bzw. weist ein Unterbrechung auf, wobei die Standardabweichung SM auch relativ geringe Werte annimmt. Die bei xm schwache Modulation und die geringen Werte SM weisen darauf hin, dass an dieser Position xm die Seriennummer eine geringe Magnetisierung aufweist, d.h. die teilweise Gegenmagnetisierung mit näherungsweise der Koerzitivfeldstärke durchgeführt wurde.

Die Prüfeinrichtung 3 kann den Ziel-Magnetisierungsabstand xm mit Hilfe einer entsprechenden Signalauswertung der Kurve SM(x) automatisch bestimmen. Gegebenenfalls kann bei der Auswertung auch die Kurve SR(x) zum Vergleich herangezogen werden. Die Prüfeinrichtung 3 kann dann aus dem so bestimmten Ziel-Magnetisierungsabstand xm anhand des Magnetfeldverlaufs K(x) die tatsächliche Koerzitivfeldstärke Km der Magnetpigmente bestimmen, die dann an der Ein- und Ausgabeeinrichtung 6 ausgegeben wird.

### Erste Ausführungsform der Magnetisiereinrichtung

Die in Fig. 5a gezeigte Magnetisiereinrichtung 7 basiert auf der aus Fig. 3a, weist aber zusätzlich eine für einen Bediener ablesbare Skala 88 auf, an der dieser ein Maß für den Abstand zwischen den Magnetpigmenten und dem Magneten 71 der Magnetsiereinrichtung ablesen kann, insbesondere den Magnetisierungsabstand x0, x1, x2, .... Die Skala erstreckt sich z.B. entlang einer der (oder beider) seitlichen Führungen 74, 75. Sofern für den Bediener die Position der Magnetpigmente auf der Probe ersichtlich ist, kann er an der Skala direkt und millimetergenau die Position der Magnetpigmente und damit den Magnetisierungsabstand ablesen.

Falls der Bediener die Position der Magnetpigmente auf der Probe nicht kennt, kann er an der Skala alternativ auch die Position der Proben-Vorderkante d0 oder die Position der Proben-Rückkante ablesen, aus der - anhand des Abstands p0 der Magnetpigmente von der Vorder- bzw. Rücckante der Probe - der Magnetisierungsabstand der Magnetpigmente x0, x1, x2,... bestimmt werden kann, vgl. Fig. 3c. In der Prüfeinrichtung 3 können mehrere Werte für p0 für verschiedene Proben hinterlegt sein, damit diese eine automatische Umrechnung der von dem Bediener leicht bestimmbaren Vorderkantenpositionen d0, d1, d2 in den Magnetisierungsabstand x0, x1, x2, ... oder umgekehrt durchführen kann.

Für die in Fig. 5a gezeigte Magnetisiereinrichtung kann ggf. zusätzlich ein verstellbarer mechanischer Anschlag 80 vorgesehen sein, der die Positionierung der flächigen Probe 1 auf der Magnetisiereinrichtung 7 erleichtert. Der mechanische Anschlag 80 erstreckt sich bevorzugt über die gesamte Breite der Magnetisierfläche 77 und weist eine so geringe Dicke auf, dass er ggf. in den Spalt 76 zwischen Querbalken 75 und Magnetisierfläche 77 eingeschoben werden kann, z.B. falls die Vorderkante der Probe 1 unter dem Querbalken positioniert werden soll. Er ist von der Magnetisiereinrichtung 7 vorzugsweise abnehmbar. Für bestimmte Fälle sind auch Markierungen 85 auf dem mechanischen Anschlag nützlich, deren Position entlang der Skala alternativ zur Position der Vorderkante der Probe bzw. des Anschlags ablesbar ist, z.B. falls die Vorderkante von dem Querbalken 75 verdeckt ist.

Der mechanische Anschlag 80 weist an seiner Unterseite ggf. eine vertikale Platte 81 auf, deren Position sich entlang des Anschlags 80 variieren lässt. Zur Veränderung der Position wird diese Platte 81 entlang eines Langlochs 84 mit Hilfe einer oder mehreren Stellschrauben 83 bewegt. Es kann eine Grob- und eine Feinjustierung vorgesehen sein, die eine mindestens auf 0,5 mm genaue Positionierung ermöglicht. Die vertikale Platte 81 verhindert ein Verrutschen des mechanischen Anschlags 80 bei der teilweisen Gegenmagnetisierung der Magnetpigmente.

### Zweite Ausführungsform der Magnetisiereinrichtung

In Fig. 5b,c ist eine andere Magnetisiereinrichtung 7 gezeigt, bei der die Position des oberen Magneten 71 vertikal verstellbar ist, vgl. der in z-Richtung weisende Pfeil in Fig. 5c. Fig. 5c zeigt einen Schnitt entlang der Linie Q-Q in Fig. 5b. Auch die Position des unteren Magneten 72 kann vertikal verstellbar sein. Die Magnete 71, 72 erstrecken sich in y-Richtung über die gesamte Breite der Magnetisierfläche 77. Gegebenenfalls werden beide Magnete 71, 72 (mechanisch gekoppelt) so verstellt, dass sie immer denselben z-Abstand zur Magnetisierfläche 77 haben, damit das in der Magnetisierfläche 77 vorliegende statische Magnetfeld möglichst in x-Richtung weist.

Die gegenüberliegenden Magnete 71, 72 befinden sich z.B. jeweils in einem Schacht, in dem sie schwimmend gelagert sind. Die Position wird durch zwei Stellschrauben 93 bestimmt, die von oben bzw. unten auf den jeweiligen Magneten 71, 72 drücken. Die Stellschrauben 93 sind z.B. mit einer ablesbaren Skala versehen, an der der Bediener ein Maß für den Magnetisierungsabstand der Magnetpigmente ablesen kann. Bevorzugt wird für die vom Bediener einstellbaren z-Positionen der Magnete 71, 72 eine diskrete Rasterung vorgegeben, damit die Anzahl der dafür jeweils zu hinterlegenden Magnetfeldverläufe überschaubar bleibt. Die Fixierung der Magnete kann allein durch die Abstoßungskräfte erfolgen. Um eine Verkantung zu vermeiden werden die Schächte mit gleitfähigem Material ausgekleidet. Zwischen Stellschraube und Magnet kann eine dünne Stahlplatte angebracht sein. Alternativ kann auch der gesamte Querbalken 75 gegenüber der Magnetisierfläche 77 bewegt werden und die Magnete 71, 72 im Schacht ortsfest bleiben. Alternativ kann die z-Bewegung des Magneten 71 oder beider Magnete 72 auch mit Hilfe eines lateral bewegbaren Verstellprofils erfolgen, dessen laterale Bewegung eine z-Bewegung der Magnete 71, 72 bewirkt. An dem Verstellprofil kann eine ablesbare Skala angebracht sein, die ein Maß für den Magnetisierungsabstand liefert.

Die Probe 1 wird zum teilweisen Gegenmagnetisieren vorzugsweise so positioniert, dass der Magnetbereich 2 mit den Magnetpigmenten nicht genau unter dem Magneten 71, sondern in x-Richtung etwas dazu versetzt, z.B. unter dem rechten Rand des Querbalkens 75 liegt, vgl. Fig. 5c. Dies ist gegenüber der Positionierung direkt unter dem Magneten 71 von Vorteil, da dort die x-Komponente des statischen Magnetfelds relativ gering ist. Anschließend wird die Stellschraube 93 soweit bewegt, bis der gewünschte Magnetisierungsabstand erreicht ist. Für die ggf. durchgeführten erneuten teilweisen Gegenmagnetisierungen können die Magnetpigmente an dieselbe x-Position gebracht werden (z.B. unter dem rechten Rand des Querbalkens 75) und nur die Stellschraube 93, d.h. die z-Position des Magneten 71, entsprechend verstellt werden. Alternativ kann auch die z-Position des Magneten 71, nachdem sie zu Beginn eingestellt wurde, unverändert bleiben und verschiedene x-Positionen der Magnetpigmente für die teilweisen Gegenmagnetisierungen gewählt werden.

Der in der Prüfeinrichtung 3 hinterlegte Magnetfeldverlauf K(x) gibt die Magnetfeldstärke als Funktion des Magnetisierungsabstands x an. In den Magnetisierungsabstand x gehen im Fall der Magnetisiereinrichtung aus Fig. 5b,c aber nicht nur die x-Position der Magnetpigmente entlang der x-Richtung, sondern auch die zu variierende z-Position des Magneten 71 (und ggf. auch die des Magneten 72) ein. Der Magnetisierungsabstand x0, x1, x2 der Magnetpigmente ergibt sich demzufolge aus der z-Stellung der Stellschrauben 93 und der gewählten x-Position der Magnetpigmente. Im Fall einer Magnetisiereinrichtung, die einen in z-Richtung verstellbaren Magneten aufweist, ist in der Prüfeinrichtung der Magnetfeldverlauf K daher bevorzugt nicht nur als Funktion der x-Position, sondern auch als Funktion der z-Position des Magneten hinterlegt. Dies kann auch eine Funktion K(x, z) sein. Oder in der Prüfeinrichtung 3 können mehrere Magnetfeldverläufe K(z) für mehrere diskrete x-Positionen der Magnetpigmente hinterlegt sein oder mehrere Magnetfeldverläufe K(x) für mehrere diskrete z-Positionen des Magneten. Diese hinterlegten Magnetfeldverläufe können im Vorfeld der Magnetpigment-Prüfung empirisch bestimmt werden.

Alternativ kann die Probe 1 zum teilweisen Gegenmagnetisieren aber auch - wie beim Aufmagnetisieren - durch die Magnetisiereinrichtung durchgezogen werden, um die gewünschte teilweise Gegenmagnetisierung zu erreichen. Dabei ist der auf der negativen x-Achse liegende Magnetfeld-Extremwert bei x=-f (vgl. Fig. 4b) für die resultierende Magnetisierung ausschlaggebend. Zum Beispiel kann die Probe zum Aufmagnetisieren ein erstes Mal durch die Magnetisiereinrichtung 7 gezogen werden. Zum ersten teilweisen Gegenmagnetisieren wird die Probe um 180° gedreht (Vorder- und Rückkante vertauscht), ein zweites Mal durch die Magnetisiereinrichtung 7 gezogen und dann ein erster Magnetisierungswert gemessen. Anschließend wird die z-Position des Magneten 71 nach unten verstellt, die Probe in derselben Orientierung ein drittes Mal durch die Magnetisiereinrichtung 7 gezogen und ein zweiter Magnetisierungswert gemessen. Aus den beiden Magnetisierungswerten kann z.B. durch Extra- oder Interpolation die z-Position des Magneten bestimmt werden, an der ein Magnetisierungswert von Null zu erwarten ist und aus diesem - anhand des für die Position x=-f geltenden Magnetfeldverlaufs K(-f, z) - die zugehörige Koerzitivfeldstärke der Probe bestimmt werden.

## Patentansprüche

1. Verfahren zum Prüfen der Koerzitivfeldstärke von Magnetpigmenten einer flächigen Probe (1), die in einem Magnetbereich der flächigen Probe enthalten sind, mit den Schritten:
a) Bereitstellen einer Magnetisiereinrichtung (7) mit mindestens einem Magneten (71, 72), der ein statisches Magnetfeld zum Magnetisieren der Magnetpigmente bereit stellt,
b) Aufmagnetisieren der flächigen Probe durch das statische Magnetfeld des Magneten der Magnetisiereinrichtung oder durch ein statisches Magnetfeld einer anderen Magnetisiereinrichtung derart, dass die Magnetpigmente der flächigen Probe bis zur Sättigung ihrer Magnetisierung in eine Aufmagnetisierungsrichtung magnetisiert werden ,
c) ggf. Remanenzmessung der Magnetisierung der aufmagnetisierten Magnetpigmente nach deren Aufmagnetisierung mit einer Messeinrichtung (4), wobei sich die Magnetpigmente während der Remanenzmessung außerhalb des statischen Magnetfelds des mindestens einen Magneten befinden,
d) erstes teilweises Gegenmagnetisieren der Magnetpigmente durch das statische Magnetfeld des Magneten der Magnetisiereinrichtung derart, dass die Magnetpigmente durch das statische Magnetfeld teilweise gegenmagnetisiert werden, wobei zum ersten teilweisen Gegenmagnetisieren die flächige Probe und der Magnet relativ zueinander soweit aufeinander zu bewegt werden, bis die Magnetpigmente in einem ersten Magnetisierungsabstand (x0, x0') von dem Magneten in dem statischen Magnetfeld positioniert sind, in dem das statische Magnetfeld eine erste Magnetisierungsfeldstärke aufweist,
e) erste Messung eines ersten Magnetisierungswerts (M(x0), M(x0')) der teilweise gegenmagnetisierten Magnetpigmente mit einer/ der Messeinrichtung (4), wobei sich die Magnetpigmente während der ersten Messung außerhalb des statischen Magnetfelds der Magnetisiereinrichtung (7) befinden,
f) ggf. Wiederholen des Aufmagnetisierens gemäß Schritt b) und anschließend ggf. erneutes teilweises Gegenmagnetisieren gemäß Schritt d) und erneute Messung gemäß Schritt e) zur Messung eines weiteren Magnetisierungswerts, wobei beim erneuten teilweisen Gegenmagnetisieren im jeweiligen Schritt d) zum teilweisen Gegenmagnetisieren der flächigen Probe durch das statische Magnetfeld die flächige Probe und der Magnet relativ zueinander soweit aufeinander zu bewegt werden, bis die Magnetpigmente in einem weiteren Magnetisierungsabstand (x1) von dem mindestens einen Magneten in dem statischen Magnetfeld positioniert sind, in dem die Magnetfeldstärke größer oder kleiner ist als die erste Magnetisierungsfeldstärke, und wobei sich die Magnetpigmente während der Messung des jeweiligen weiteren Magnetisierungswerts außerhalb des statischen Magnetfelds des mindestens einen Magneten befinden,
g) Übermitteln des bei der ersten Messung gemessenen ersten Magnetisierungswerts, und ggf. des/der bei der/ den erneuten Messung/ en gemäß Schritt f) gemessenen weiteren Magnetisierungswert/ e der teilweise gegenmagnetisierten Magnetpigmente, von der Messeinrichtung (4) an eine mit der Messeinrichtung verbundene Prüfeinrichtung (3), in der ein Magnetfeldverlauf (K(x)) der Magnetisiereinrichtung (7) hinterlegt ist oder die mit einer anderen Einrichtung (8) verbunden ist, in der ein Magnetfeldverlauf (K(x)) der Magnetisiereinrichtung (7) hinterlegt ist,
h) Prüfen des ersten und ggf. des/der weiteren Magnetisierungswerts/e der teilweise gegenmagnetisierten Magnetpigmente mittels der Prüfeinrichtung (3) zur Ermittlung eines Prüfergebnisses, das die Koerzitivfeldstärke der Magnetpigmente betrifft,
i) Übermitteln des die Koerzitivfeldstärke betreffenden Prüfergebnisses von der Prüfeinrichtung an eine mit der Prüfeinrichtung verbundene Ausgabeeinrichtung und Ausgeben des die Koerzitivfeldstärke der Magnetpigmente betreffenden Prüfergebnisses durch die Ausgabeeinrichtung,
wobei die Prüfeinrichtung (3) insbesondere dazu eingerichtet ist,
- den Magnetfeldverlauf (K(x)) der Magnetisiereinrichtung (7) zur Ermittlung des die Koerzitivfeldstärke betreffenden Prüfergebnisses zu verwenden, und/oder
- den Magnetfeldverlauf (K(x)) der Magnetisiereinrichtung (7) dazu zu verwenden, den ersten Magnetisierungsabstand (x0) und/oder ggf. den mindestens einen weiteren Magnetisierungsabstand (x1) zu ermitteln, der zwischen den Magnetpigmenten und dem Magneten für das erste und/oder ggf. das erneute teilweise Gegenmagnetisieren gewählt werden soll.

2. Verfahren nach Anspruch 1, **dadurch gekennzeichnet, dass** die flächige Probe (1) für das erste teilweise Gegenmagnetisieren, und ggf. für das erneute teilweise Gegenmagnetisieren, auf den Magneten (71, 72) zu bewegt wird und/oder der Magnet (71, 72) auf die flächige Probe (1) zu bewegt wird, um die Magnetpigmente in dem ersten bzw. in dem weiteren Magnetisierungsabstand (x0, x1) von dem Magneten in dem statischen Magnetfeld zu positionieren.

3. Verfahren nach einem der vorhergehenden Ansprüche, **dadurch gekennzeichnet, dass** zur Bestimmung des Magnetfeldverlaufs (K(x)) der Magnetisiereinrichtung (7) eine Kalibriermessung eines flächig ausgebildeten Kalibriermediums durchgeführt wird, das einen langen Magnetbereich aufweist, der durchgehend Magnetpigmente einer bestimmten Koerzitivfeldstärke aufweist, wobei das Kalibriermedium vorzugsweise mehrere lange Magnetbereiche aufweist, die räumlich voneinander getrennt auf dem Kalibriermedium vorliegen und jeweils durchgehend Magnetpigmente einer bestimmten Koerzitivfeldstärke aufweisen, wobei die Koerzitivfeldstärke der verschiedenen langen Magnetbereiche jeweils unterschiedlich gewählt ist.

4. Verfahren nach einem der vorhergehenden Ansprüche, **dadurch gekennzeichnet, dass**
- die flächige Probe einen langen Magnetbereich (2, 25) aufweist, der die Magnetpigmente enthält, und dass die flächige Probe beim ersten teilweisen Gegenmagnetisieren so auf der Magnetisiereinrichtung (7) positioniert wird, dass sich der lange Magnetbereich (2, 25) parallel, antiparallel oder schräg zu einem Magnetfeldgradienten des statischen Magnetfelds erstreckt, und
- dass die Messeinrichtung (4) zur Messung der Magnetisierung als Funktion einer Erstreckungsrichtung des langen Magnetbereichs auf der flächigen Probe eingerichtet ist und insbesondere dazu eingerichtet ist, bereits bei der ersten Messung sowohl den ersten Magnetisierungswert (M(x0)) als auch mindestens einen der weiteren Magnetisierungswerte (M(x1), M(x2)) zu erzeugen, wobei der erste Magnetisierungswert von einem ersten Abschnitt des langen Magnetbereichs gemessen wird, der sich in dem ersten Magnetisierungsabstand (x0) befindet, und wobei der jeweilige weitere Magnetisierungswert von einem weiteren Abschnitt des langen Magnetbereichs gemessen wird, der beim ersten teilweisen Gegenmagnetisieren in einem weiteren Magnetisierungsabstand (x1, x2) von dem mindestens einen Magneten in dem statischen Magnetfeld positioniert war, in dem die Magnetfeldstärke des statischen Magnetfelds größer oder kleiner ist als in dem ersten Magnetisierungsabstand (x0).

5. Verfahren nach Anspruch 4, **dadurch gekennzeichnet, dass** die Prüfeinrichtung dazu eingerichtet ist,
- anhand mindestens zweier für verschiedene weitere Magnetisierungsabstände (x1, x2) gemessener weiterer Magnetisierungswerte (M(x1), M(x2)) des langen Magnetbereichs, und/oder anhand mindestens eines für einen weiteren Magnetisierungsabstand (x1) gemessenen weiteren Magnetisierungswerts (M(x1)) des langen Magnetbereichs und anhand des für den ersten Magnetisierungsabstand (x0) gemessenen ersten Magnetisierungswerts M(x0), einen Magnetisierungsverlauf (M(x)) als Funktion des Magnetisierungsabstands (x) zu ermitteln und anhand des Magnetisierungsverlaufs M(x) einen Ziel-Magnetisierungsabstand (xm) zu bestimmen, in dem beim ersten teilweisen Gegenmagnetisieren die Koerzitivfeldstärke (Km) der Magnetpigmente erreicht wurde, und
- aus dem Ziel-Magnetisierungsabstand (xm) anhand des Magnetfeldverlaufs (K(x)) die Koerzitivfeldstärke (Km) der Magnetpigmente zu bestimmen,
- die Koerzitivfeldstärke (Km) der Magnetpigmente an die mit der Prüfeinrichtung verbundene Ausgabeeinrichtung (6) zu übermitteln, welche dazu eingerichtet ist, die Koerzitivfeldstärke (Km) der Magnetpigmente auszugeben.

6. Vorrichtung (10) zum Prüfen der Koerzitivfeldstärke von Magnetpigmenten einer flächigen Probe, insbesondere gemäß einem Verfahren nach einem der Ansprüche 1 bis 5, wobei die Magnetpigmente der flächigen Probe (1) bis zu Sättigung ihrer Magnetisierung in eine Aufmagnetisierungsrichtung aufmagnetisiert wurden und durch eine von einer Magnetisiereinrichtung (7) bereit gestellte erste Magnetisierungsfeldstärke bei einem ersten teilweisen Gegenmagnetisieren entgegengesetzt zur Aufmagnetisierungsrichtung teilweise gegenmagnetisiert wurden, wobei die Vorrichtung eine Messeinrichtung (4) und eine mit der Messeinrichtung verbundene Prüfeinrichtung (3) aufweist, wobei:
- die Messeinrichtung (4) dazu eingerichtet ist,
∘ eine erste Messung eines ersten Magnetisierungswerts (M(x0), M(x0')) der nach dem ersten teilweisen Gegenmagnetisieren teilweise gegenmagnetisierten Magnetpigmente durchzuführen, sowie ggf. mindestens eine weitere Messung zur Messung mindestens eines weiteren Magnetisierungswerts (M(x1)) der bei einem erneuten teilweisen Gegenmagnetisieren teilweise gegenmagnetisierten Magnetpigmente durchzuführen, bei dem diese mit einer weiteren Magnetisierungsfeldstärke entgegengesetzt zur Aufmagnetisierungsrichtung teilweise gegenmagnetisiert wurden, die größer oder kleiner ist als die erste Magnetisierungsfeldstärke,
∘ die erste und ggf. die jeweilige weitere Messung so durchzuführen, dass sich die Magnetpigmente während der ersten Messung und ggf. während der jeweiligen weiteren Messung außerhalb des statischen Magnetfelds der Magnetisiereinrichtung (7) befinden,
∘ den bei der ersten Messung gemessenen ersten Magnetisierungswert der teilweise gegenmagnetisierten Magnetpigmente, und ggf. den bei der mindestens einen weiteren Messung gemessenen mindestens einen weiteren Magnetisierungswert, an die Prüfeinrichtung (3) zu übermitteln, und
- die mit der Messeinrichtung verbundene Prüfeinrichtung (3) dazu eingerichtet ist,
∘ den ersten und ggf. den mindestens einen weiteren Magnetisierungswert der teilweise gegenmagnetisierten Magnetpigmente zur Ermittlung eines Prüfergebnisses zu prüfen, das die Koerzitivfeldstärke der Magnetpigmente betrifft, und
∘ das die Koerzitivfeldstärke der Magnetpigmente betreffende Prüfergebnis an eine mit der Prüfeinrichtung verbundene Ausgabeeinrichtung (6) zu übermitteln,
- wobei in der Prüfeinrichtung (3) ein Magnetfeldverlauf (K(x)) der Magnetisiereinrichtung hinterlegt ist oder die Prüfeinrichtung mit einer anderen Einrichtung (8) verbunden ist, in der ein Magnetfeldverlauf (K(x)) der Magnetisiereinrichtung (7) hinterlegt ist, und wobei die Prüfeinrichtung insbesondere dazu eingerichtet ist,
o den Magnetfeldverlauf (K(x)) der Magnetisiereinrichtung zur Ermittlung des die Koerzitivfeldstärke der Magnetpigmente betreffenden Prüfergebnisses zu verwenden, und/ oder
o den Magnetfeldverlauf der Magnetisiereinrichtung dazu zu verwenden, einen Magnetisierungsabstand zu ermitteln, der zwischen den Magnetpigmenten und dem Magneten für das erste teilweise Gegenmagnetisieren und/oder ggf. für das erneute teilweise Gegenmagnetisieren der Magnetpigmente gewählt werden soll.

7. Vorrichtung nach Anspruch 6, **dadurch gekennzeichnet, dass** die Prüfeinrichtung (3) dazu eingerichtet ist,
- eine Bedienervorgabe zu empfangen, die eine mit der Prüfeinrichtung zu verifizierende Soll-Koerzitivfeldstärke (K0') und ggf. eine Angabe über einen die Soll-Koerzitivfeldstärke einschließenden Soll-Koerzitivitätsbereich (K') betrifft, und
- auf Basis der Bedienervorgabe, anhand des Magnetfeldverlaufs (K(x)) der Magnetisiereinrichtung, den ersten Magnetisierungsabstand (x0') zu ermitteln, der zwischen den Magnetpigmenten und dem Magneten für das erste teilweise Gegenmagnetisieren gewählt werden soll, und
- den ersten Magnetisierungsabstand (x0') an eine mit der Prüfeinrichtung verbundene Ausgabeeinrichtung (6) zu übermitteln, welche dazu eingerichtet ist, den ersten Magnetisierungsabstand für einen Bediener der Magnetisiereinrichtung auszugeben.

8. Vorrichtung nach Anspruch 7, **dadurch gekennzeichnet, dass** die Prüfeinrichtung (3) dazu eingerichtet ist, beim Prüfen des ersten Magnetisierungswerts der teilweise gegenmagnetisierten Magnetpigmente zu überprüfen, ob der erste Magnetisierungswert (M(x0)) einer Magnetisierung von Null entspricht und/oder zu überprüfen, ob der erste Magnetisierungswert (M(x0)) in einem um eine Magnetisierung von Null liegenden Magnetisierungs-Akzeptanzbereich (A) liegt, der gemäß einer Hysteresekurve der Magnetpigmente dem Soll-Koerzitivitätsbereich (K') entspricht, und, falls ja, an die Ausgabeeinrichtung die Bestätigung zu übermitteln, dass die Magnetpigmente die vorgegebene Soll-Koerzitivfeldstärke (K0') aufweisen bzw. dass die Koerzitivfeldstärke der Magnetpigmente in dem vorgegebenen Soll-Koerzitivitätsbereich (K') liegt.

9. Vorrichtung nach einem der Ansprüche 7 bis 8, **dadurch gekennzeichnet, dass** das beim Prüfen ermittelte Prüfergebnis, das die Koerzitivfeldstärke der Magnetpigmente betrifft, eine Bestätigung oder eine Verneinung umfasst, ob die Magnetpigmente die vorgegebene Soll-Koerzitivfeldstärke (K0') aufweisen und/oder ob ihre Koerzitivfeldstärke in dem die Soll-Koerzitivfeldstärke einschließenden Soll-Koerzitivitätsbereich (K') liegt.

10. Vorrichtung nach einem der Ansprüche 6 bis 9, **dadurch gekennzeichnet dass** das beim Prüfen ermittelte Prüfergebnis, das die Koerzitivfeldstärke der Magnetpigmente betrifft, einen Wert für die Koerzitivfeldstärke der Magnetpigmente umfasst.

11. Vorrichtung nach Anspruch 10, **dadurch gekennzeichnet, dass** die Prüfeinrichtung dazu eingerichtet ist, eine Bedienervorgabe zu empfangen, die einen mit der Prüfeinrichtung zu untersuchenden Koerzitivitätsbereich (C) betrifft, und auf Basis der Bedienervorgabe, anhand des Magnetfeldverlaufs (K(x)) der Magnetisiereinrichtung (7), den ersten (x0) und mindestens einen weiteren Magnetisierungsabstand (x1, x2) zu ermitteln, der zwischen den Magnetpigmenten und dem Magneten für das erste teilweise Gegenmagnetisieren bzw. für das erneute teilweise Gegenmagnetisieren gewählt werden soll, und den jeweiligen ersten und weiteren Magnetisierungsabstand (x1, x2) an die mit der Prüfeinrichtung verbundene Ausgabeeinrichtung (6) zu übermitteln, welche dazu eingerichtet ist, den jeweiligen ersten (x0) und den mindestens einen weiteren Magnetisierungsabstand (x1, x2) für einen Bediener der Magnetisiereinrichtung auszugeben.

12. Vorrichtung nach Anspruch 10 oder 11, **dadurch gekennzeichnet, dass** die Prüfeinrichtung dazu eingerichtet ist,
- anhand mindestens zweier der weiteren Magnetisierungswerte (M(x1), M(x2)) oder anhand des ersten Magnetisierungswerts M(x0) und mindestens eines der weiteren Magnetisierungswerte (M(x1)), einen Ziel-Magnetisierungsabstand (xm) zu bestimmen, an dem die Magnetisierung als Funktion des Magnetisierungsabstands (x) einen Nulldurchgang (M(xm)=0) aufweist oder zumindest ein Minimum einnimmt, und
- aus dem Ziel-Magnetisierungsabstand (xm) anhand des Magnetfeldverlaufs (K(x)) die Koerzitivfeldstärke (Km) der Magnetpigmente zu bestimmen, und
- die Koerzitivfeldstärke (Km) der Magnetpigmente an eine mit der Prüfeinrichtung verbundene Ausgabeeinrichtung (6) zu übermitteln, welche dazu eingerichtet ist, die Koerzitivfeldstärke (Km) der Magnetpigmente auszugeben,
wobei die Prüfeinrichtung insbesondere dazu eingerichtet ist, den Ziel-Magnetisierungsabstand (xm), an dem die Magnetisierung M(x) als Funktion des Magnetisierungsabstands (x) den Nulldurchgang (M(xm)=0) aufweist, durch Anfitten oder Extrapolation oder Interpolation des ersten Magnetisierungswerts M(x0) und mindestens eines der weiteren Magnetisierungswerte (M(x1)) zu bestimmen oder durch Anfitten oder Extrapolation oder Interpolation mindestens zweier der weiteren Magnetisierungswerte (M(x1), M(x2)).

13. Vorrichtung nach einem der Ansprüche 10 bis 12, **dadurch gekennzeichnet, dass** die Prüfeinrichtung dazu eingerichtet ist, auf Basis des von der Messeinrichtung übermittelten ersten Magnetisierungswerts (M(x0)) automatisch einen weiteren Magnetisierungsabstand (x1) zu bestimmen, wobei der weitere Magnetisierungsabstand (x1)
- näher am Magneten der Magnetisiereinrichtung (7) gewählt wird als der erste Magnetisierungsabstand (x0), falls die Magnetisierung der Magnetpigmente nach ihrem ersten teilweisen Gegenmagnetisieren noch in die Aufmagnetisierungsrichtung zeigt, und
- weiter entfernt vom Magneten der Magnetisiereinrichtung (7) als der erste Magnetisierungsabstand (x0) gewählt wird, falls die Magnetisierung der Magnetpigmente nach ihrem ersten teilweisen Gegenmagnetisieren entgegen zur Aufmagnetisierungsrichtung zeigt,
und die Prüfeinrichtung dazu eingerichtet ist, den weiteren Magnetisierungsabstand (x1) an eine/die Ausgabeeinrichtung (6) zu übermitteln, die dazu eingerichtet ist, den Bediener zum erneuten teilweisen Gegenmagnetisieren der Magnetpigmente in dem weiteren Magnetisierungsabstand (x1) und zur erneuten Messung der erneut teilweise gegenmagnetisierten Magnetpigmente aufzufordern, um mittels der Messeinrichtung (4) den weiteren Magnetisierungswert (M(x1)) zu bestimmen.

14. Vorrichtung nach einem der Ansprüche 6 bis 13, **dadurch gekennzeichnet, dass** die Messeinrichtung (4) eine Aufnahme (23) zur Aufnahme der flächigen Probe aufweist, die dazu eingerichtet ist, die flächige Probe während der ersten und ggf. der mindestens einen weiteren Messung so aufzunehmen, dass sich die flächige Probe während der ersten und ggf. während der mindestens einen weiteren Messung außerhalb des statischen Magnetfelds der Magnetisiereinrichtung (7) befindet.

15. Anordnung zum Magnetisieren einer flächigen Probe und zum Prüfen der Koerzitivfeldstärke von Magnetpigmenten der flächigen Probe, insbesondere gemäß einem Verfahren nach einem der Ansprüche 1 bis 5, wobei die Anordnung aufweist:
- eine Vorrichtung (10) zum Prüfen der Koerzitivfeldstärke von Magnetpigmenten einer flächigen Probe nach einem der Ansprüche 6 bis 14, und
- eine Magnetisiereinrichtung (7), die eine Magnetisierfläche (77) zur Aufnahme der flächigen Probe und mindestens einen Magneten (71, 72) aufweist, der ein statisches Magnetfeld bereit stellt, das zum teilweisen Gegenmagnetisieren der Magnetpigmente der flächigen Probe eingerichtet ist, wobei
∘ die Magnetisiereinrichtung (7) dazu eingerichtet ist, dass die auf die Magnetisierfläche (77) aufgelegte flächige Probe und der mindestens eine Magnet (71, 72) für das erste teilweise Gegenmagnetisieren der Magnetpigmente relativ zueinander soweit aufeinander zu bewegbar sind, bis die Magnetpigmente in einem ersten Magnetisierungsabstand (x0) von dem mindestens einen Magneten (71, 72) positioniert sind, in dem das statische Magnetfeld eine erste Magnetisierungsfeldstärke aufweist, und
∘ wobei die flächige Probe und der mindestens eine Magnet für das erneute teilweise Gegenmagnetisieren der Magnetpigmente relativ zueinander soweit aufeinander zu bewegbar sind, bis die Magnetpigmente in einem weiteren Magnetisierungsabstand (x1) von dem mindestens einen Magneten (71, 72) positioniert sind, in dem die Magnetfeldstärke des statischen Magnetfelds größer oder kleiner ist als die erste Magnetisierungsfeldstärke.

16. Anordnung nach Anspruch 15, **dadurch gekennzeichnet, dass** der mindestens eine Magnet (71, 72) so angeordnet ist, dass zwischen der Magnetisierfläche (77) und dem mindestens einen Magneten ein Spalt (76) gebildet ist, in den die flächige Probe (1) für das Magnetisieren ihrer Magnetpigmente eingeführt werden kann, wobei der Spalt (76) senkrecht zur Magnetisierfläche (77) größer ist als die Dicke der flächigen Probe.

17. Anordnung nach einem der Ansprüche 15 bis 16, **dadurch gekennzeichnet, dass** die Magnetisierfläche (77) eine Eingangsseite aufweist, die - entlang einer vorbestimmten Bewegungsrichtung der flächigen Probe betrachtet - vor dem mindestens einen Magneten (71, 72) angeordnet ist, und eine Ausgangsseite aufweist, die - entlang der vorbestimmten Bewegungsrichtung der flächigen Probe betrachtet - nach dem mindestens einen Magneten (71, 72) angeordnet ist, wobei vorzugsweise
- sich die Magnetisierfläche (77) der Magnetisiereinrichtung - entlang der vorbestimmten Bewegungsrichtung betrachtet - auf der Eingangsseite und/oder auf der Ausgangsseite mindestens über die Länge der flächigen Probe, insbesondere über mindestens 10 cm, erstreckt, und/oder
- die Magnetisierfläche (77) der Magnetisiereinrichtung einseitig oder beidseitig durch eine Führung (73, 74) begrenzt ist, die sich entlang der vorbestimmten Bewegungsrichtung der flächigen Probe erstreckt.

18. Anordnung nach einem der Ansprüche 15 bis 17, **dadurch gekennzeichnet, dass** die Magnetisiereinrichtung (7) mindestens einen Magneten (71, 72) aufweist, dessen magnetischer Nordpol oder dessen magnetischer Südpol stirnseitig zur Magnetisierfläche (77) weist.

19. Anordnung nach einem der Ansprüche 15 bis 18, **dadurch gekennzeichnet, dass** die Magnetisiereinrichtung (7), insbesondere eine die Magnetisierfläche (77) begrenzende Führung (73, 74) der Magnetisiereinrichtung oder eine Verstelleinrichtung (93) der Magnetisiereinrichtung, eine für einen Bediener ablesbare Skala aufweist, an der dieser ein Maß für den Magnetisierungsabstand zwischen den Magnetpigmenten und dem Magneten (71, 72) der Magnetsiereinrichtung ablesen kann.

20. Anordnung nach einem der Ansprüche 15 bis 19, **dadurch gekennzeichnet, dass** der in der Prüfeinrichtung (3) bzw. in der anderen Einrichtung hinterlegte Magnetfeldverlauf (K(x)) der Magnetisiereinrichtung (7) die auf der Magnetisierfläche vorliegende Magnetfeldstärke als Funktion der Position entlang der Magnetisierfläche, insbesondere parallel oder antiparallel zum Magnetfeldgradienten des statischen Magnetfelds angibt.

21. Anordnung nach einem der Ansprüche 15 bis 19, **dadurch gekennzeichnet, dass** die Magnetisiereinrichtung eine Verstelleinrichtung (93) aufweist, mit deren Hilfe ein Bediener der Magnetisiereinrichtung den Abstand mindestens eines der Magnete (71, 72) von der Magnetisierfläche (77) einstellen kann, und dass der in der Prüfeinrichtung (3) bzw. in der anderen Einrichtung hinterlegte Magnetfeldverlauf (K(x)) der Magnetisiereinrichtung die auf der Magnetisierfläche vorliegende Magnetfeldstärke insbesondere als Funktion der Position (z) des mindestens einen Magneten (71, 72) senkrecht zu der Magnetisierfläche (77) angibt.

## Claims

1. Method for checking the coercive field strength of magnetic pigments of a planar sample (1) which are contained in a magnetic region of the planar sample, comprising the following steps:
a) providing a magnetizing device (7) having at least one magnet (71, 72) which provides a static magnetic field for magnetizing the magnetic pigments,
b) magnetizing the planar sample by the static magnetic field of the magnet of the magnetizing device or by a static magnetic field of another magnetizing device in such a way that the magnetic pigments of the planar sample are magnetized in a magnetizing direction up to the saturation of their magnetization,
c) if appropriate, remanence measurement of the magnetization of the magnetized magnetic pigments after their magnetization with a measuring device (4), wherein the magnetic pigments are located outside the static magnetic field of the at least one magnet during the remanence measurement,
d) first partial counter-magnetization of the magnetic pigments by the static magnetic field of the magnet of the magnetizing device in such a way that the magnetic pigments are partially counter-magnetized by the static magnetic field, wherein for the first partial counter-magnetization the planar sample and the magnet are moved relative to each other towards each other until the magnetic pigments are positioned at a first magnetization distance (x0, x0') from the magnet in the static magnetic field, at which the static magnetic field has a first magnetization field strength,
e) first measurement of a first magnetization value (M(x0), M(x0')) of the partially counter-magnetized magnetic pigments with a/the measuring device (4), wherein the magnetic pigments are located outside the static magnetic field of the magnetizing device (7) during the first measurement,
f) if appropriate, repeating the magnetizing according to step b) and subsequently, if appropriate, renewed partial counter-magnetization according to step d) and renewed measurement according to step e) for measuring a further magnetization value, wherein upon the renewed partial counter-magnetization in the respective step d), for the partial counter-magnetization of the planar sample by the static magnetic field, the planar sample and the magnet are moved relative to each other towards each other until the magnetic pigments are positioned at a further magnetization distance (x1) from the at least one magnet in the static magnetic field, at which the magnetic field strength is greater or less than the first magnetization field strength, and wherein the magnetic pigments are located outside the static magnetic field of the at least one magnet during the measurement of the respective further magnetization value,
g) transmitting the first magnetization value measured during the first measurement and, if appropriate, the further magnetization value(s) of the partially counter-magnetized magnetic pigments measured during the renewed measurement(s) according to step f) from the measuring device (4) to a checking device (3) connected to the measuring device, in which checking device a magnetic field profile (K(x)) of the magnetizing device (7) is stored or which checking device is connected to another device (8) in which a magnetic field profile (K(x)) of the magnetizing device (7) is stored,
h) checking the first and, if appropriate, the further magnetization value(s) of the partially counter-magnetized magnetic pigments by means of the checking device (3) for ascertaining a check result which relates to the coercive field strength of the magnetic pigments,
i) transmitting the check result relating to the coercive field strength from the checking device to an output device connected to the checking device and outputting the check result relating to the coercive field strength of the magnetic pigments by the output device,
wherein the checking device (3) is configured in particular
- to use the magnetic field profile (K(x)) of the magnetizing device (7) to ascertain the check result relating to the coercive field strength, and/or
- to use the magnetic field profile (K(x)) of the magnetizing device (7) to ascertain the first magnetization distance (x0) and/or, if appropriate, the at least one further magnetization distance (x1), which is to be chosen between the magnetic pigments and the magnet for the first and/or, if appropriate, the renewed partial counter-magnetization.

2. Method according to Claim 1, **characterized in that** for the first partial counter-magnetization and, if appropriate, for the renewed partial counter-magnetization, the planar sample (1) is moved towards the magnet (71, 72) and/or the magnet (71, 72) is moved towards the planar sample (1) in order to position the magnetic pigments at the first or at the further magnetization distance (x0, x1) from the magnet in the static magnetic field.

3. Method according to either of the preceding claims, **characterized in that** for determining the magnetic field profile (K(x)) of the magnetizing device (7) a calibration measurement of a planar calibration medium is carried out, which calibration medium has a long magnetic region, which throughout has magnetic pigments of a specific coercive field strength, wherein the calibration medium preferably has a plurality of long magnetic regions which are spatially separated from each other on the calibration medium and each throughout have magnetic pigments of a specific coercive field strength, wherein the coercive field strength of the various long magnetic regions is chosen differently in each case.

4. Method according to any of the preceding claims, **characterized in that**
- the planar sample has a long magnetic region (2, 25) containing the magnetic pigments, and **in that** during the first partial counter-magnetization the planar sample is positioned on the magnetizing device (7) in such a way that the long magnetic region (2, 25) extends parallel, antiparallel or obliquely with respect to a magnetic field gradient of the static magnetic field, and
- **in that** the measuring device (4) is configured for measuring the magnetization as a function of an extension direction of the long magnetic region on the planar sample and is configured in particular to generate both the first magnetization value (M(x0)) and at least one of the further magnetization values (M(x1), M(x2)) already during the first measurement, wherein the first magnetization value is measured from a first portion of the long magnetic region located at the first magnetization distance (x0), and wherein the respective further magnetization value is measured from a further portion of the long magnetic region, which, during the first partial counter-magnetization, was positioned at a further magnetization distance (x1, x2) from the at least one magnet in the static magnetic field, at which the magnetic field strength of the static magnetic field is greater or less than at the first magnetization distance (x0).

5. Method according to Claim 4, **characterized in that** the checking device is configured
- on the basis of at least two further magnetization values (M(x1), M(x2)) of the long magnetic region measured for different further magnetization distances (x1, x2), and/or on the basis of at least one further magnetization value (M(x1)) of the long magnetic region measured for a further magnetization distance (x1) and on the basis of the first magnetization value M(x0) measured for the first magnetization distance (x0), to ascertain a magnetization profile (M(x)) as a function of the magnetization distance (x) and, on the basis of the magnetization profile M(x), to determine a target magnetization distance (xm) at which the coercive field strength (Km) of the magnetic pigments was attained during the first partial counter-magnetization, and
- to determine the coercive field strength (Km) of the magnetic pigments from the target magnetization distance (xm) on the basis of the magnetic field profile (K(x)),
- to transmit the coercive field strength (Km) of the magnetic pigments to the output device (6) connected to the checking device, which output device is configured to output the coercive field strength (Km) of the magnetic pigments.

6. Apparatus (10) for checking the coercive field strength of magnetic pigments of a planar sample, in particular according to a method according to any of Claims 1 to 5, wherein the magnetic pigments of the planar sample (1) were magnetized in a magnetizing direction up to saturation of their magnetization and were partially counter-magnetized oppositely to the magnetizing direction by a first magnetization field strength provided by a magnetizing device (7) during a first partial counter-magnetization, wherein the apparatus comprises a measuring device (4) and a checking device (3) connected to the measuring device, wherein:
- the measuring device (4) is configured
∘ to carry out a first measurement of a first magnetization value (M(x0), M(x0')) of the magnetic pigments partially counter-magnetized after the first partial counter-magnetization, and, if appropriate, to carry out at least one further measurement for measuring at least one further magnetization value (M(x1)) of the magnetic pigments partially counter-magnetized during a renewed partial counter-magnetization, in which these were partially counter-magnetized oppositely to the magnetizing direction with a further magnetization field strength, which is greater or less than the first magnetization field strength,
∘ to carry out the first and, if appropriate, the respective further measurement such that the magnetic pigments are located outside the static magnetic field of the magnetizing device (7) during the first measurement and, if appropriate, during the respective further measurement,
∘ to transmit the first magnetization value of the partially counter-magnetized magnetic pigments measured during the first measurement, and, if appropriate, the at least one further magnetization value measured during the at least one further measurement, to the checking device (3), and
- the checking device (3) connected to the measuring device is configured
∘ to check the first and, if appropriate, the at least one further magnetization value of the partially counter-magnetized magnetic pigments for ascertaining a check result which relates to the coercive field strength of the magnetic pigments, and
∘ to transmit the check result relating to the coercive field strength of the magnetic pigments to an output device (6) connected to the checking device,
- wherein a magnetic field profile (K(x)) of the magnetizing device is stored in the checking device (3) or the checking device is connected to another device (8) in which a magnetic field profile (K(x)) of the magnetizing device (7) is stored, and wherein the checking device is configured in particular
∘ to use the magnetic field profile (K(x)) of the magnetizing device for ascertaining the check result relating to the coercive field strength of the magnetic pigments, and/or
∘ to use the magnetic field profile of the magnetizing device to ascertain a magnetization distance which is to be chosen between the magnetic pigments and the magnet for the first partial counter-magnetization and/or, if appropriate, for the renewed partial counter-magnetization of the magnetic pigments.

7. Apparatus according to Claim 6, **characterized in that** the checking device (3) is configured
- to receive an operator specification which relates to a desired coercive field strength (K0') to be verified with the checking device and, if appropriate, an indication of a desired coercivity range (K') including the desired coercive field strength, and
- on the basis of the operator specification, with the aid of the magnetic field profile (K(x)) of the magnetizing device, to ascertain the first magnetization distance (x0') which is to be chosen between the magnetic pigments and the magnet for the first partial counter-magnetization, and
- to transmit the first magnetization distance (x0') to an output device (6) connected to the checking device, which output device is configured to output the first magnetization distance for an operator of the magnetizing device.

8. Apparatus according to Claim 7, **characterized in that** the checking device (3) is configured, when checking the first magnetization value of the partially counter-magnetized magnetic pigments, to check whether the first magnetization value (M(x0)) corresponds to a magnetization of zero and/or to check whether the first magnetization value (M(x0)) is in a magnetization acceptance range (A) which lies around a magnetization of zero and which corresponds to the desired coercivity range (K') according to a hysteresis curve of the magnetic pigments, and, if so, to transmit to the output device the confirmation that the magnetic pigments have the specified desired coercive field strength (K0') or that the coercive field strength of the magnetic pigments is within the specified desired coercivity range (K').

9. Apparatus according to either of Claims 7 and 8, **characterized in that** the check result ascertained during checking, which relates to the coercive field strength of the magnetic pigments, comprises a confirmation or a denial of whether the magnetic pigments have the specified desired coercive field strength (K0') and/or whether their coercive field strength is in the desired coercivity range (K') including the desired coercive field strength.

10. Apparatus according to any of Claims 6 to 9, **characterized in that** the check result ascertained during checking, which relates to the coercive field strength of the magnetic pigments, comprises a value for the coercive field strength of the magnetic pigments.

11. Apparatus according to Claim 10, **characterized in that** the checking device is configured to receive an operator specification which relates to a coercivity range (C) to be examined with the checking device, and, on the basis of the operator specification, with the aid of the magnetic field profile (K(x)) of the magnetizing device (7), to ascertain the first (x0) and at least one further magnetization distance (x1, x2) which is to be chosen between the magnetic pigments and the magnet for the first partial counter-magnetization or for the renewed partial counter-magnetization, and to transmit the respective first and further magnetization distance (x1, x2) to the output device (6) connected to the checking device, which output device is configured to output the respective first (x0) and the at least one further magnetization distance (x1, x2) for an operator of the magnetizing device.

12. Apparatus according to Claim 10 or 11, **characterized in that** the checking device is configured
- on the basis of at least two of the further magnetization values (M(x1), M(x2)) or on the basis of the first magnetization value M(x0) and at least one of the further magnetization values (M(x1)), to determine a target magnetization distance (xm) at which the magnetization as a function of the magnetization distance (x) has a zero crossing (M(xm)=0) or at least assumes a minimum, and
- to determine the coercive field strength (Km) of the magnetic pigments from the target magnetization distance (xm) on the basis of the magnetic field profile (K(x)), and
- to transmit the coercive field strength (Km) of the magnetic pigments to an output device (6) connected to the checking device, which output device is configured to output the coercive field strength (Km) of the magnetic pigments,
wherein the checking device is configured in particular to determine the target magnetization distance (xm), at which the magnetization M(x) as a function of the magnetization distance (x) has the zero crossing (M(xm)=0), by fitting or extrapolation or interpolation of the first magnetization value M(x0) and at least one of the further magnetization values (M(x1)), or by fitting or extrapolation or interpolation of at least two of the further magnetization values (M(x1), M(x2)).

13. Apparatus according to any of Claims 10 to 12, **characterized in that** the checking device is configured to automatically determine a further magnetization distance (x1) on the basis of the first magnetization value (M(x0)) transmitted by the measuring device, wherein the further magnetization distance (x1)
- is chosen to be closer to the magnet of the magnetizing device (7) than the first magnetization distance (x0) if the magnetization of the magnetic pigments still points in the magnetizing direction after their first partial counter-magnetization, and
- is chosen to be further away from the magnet of the magnetizing device (7) than the first magnetization distance (x0) if the magnetization of the magnetic pigments points counter to the magnetizing direction after their first partial counter-magnetization,
and the checking device is configured to transmit the further magnetization distance (x1) to an/the output device (6), which is configured to request the operator to effect the renewed partial counter-magnetization of the magnetic pigments at the further magnetization distance (x1) and to effect the renewed measurement of the magnetic pigments that have undergone renewed partial counter-magnetization, in order to determine the further magnetization value (M(x1)) by means of the measuring device (4).

14. Apparatus according to any of Claims 6 to 13, **characterized in that** the measuring device (4) has a receptacle (23) for receiving the planar sample, which is configured to receive the planar sample during the first and, if appropriate, the at least one further measurement such that the planar sample is located outside the static magnetic field of the magnetizing device (7) during the first and, if appropriate, during the at least one further measurement.

15. Arrangement for magnetizing a planar sample and for checking the coercive field strength of magnetic pigments of the planar sample, in particular according to a method according to any of Claims 1 to 5, wherein the arrangement comprises:
- an apparatus (10) for checking the coercive field strength of magnetic pigments of a planar sample according to any of Claims 6 to 14, and
- a magnetizing device (7) having a magnetizing surface (77) for receiving the planar sample and at least one magnet (71, 72) which provides a static magnetic field configured for partial counter-magnetization of the magnetic pigments of the planar sample, wherein
∘ the magnetizing device (7) is configured so that the planar sample placed onto the magnetizing surface (77) and the at least one magnet (71, 72), for the first partial counter-magnetization of the magnetic pigments, are movable relative to each other towards each other until the magnetic pigments are positioned at a first magnetization distance (x0) from the at least one magnet (71, 72), at which the static magnetic field has a first magnetization field strength, and
∘ wherein the planar sample and the at least one magnet, for the renewed partial counter-magnetization of the magnetic pigments, are movable relative to each other towards each other until the magnetic pigments are positioned at a further magnetization distance (x1) from the at least one magnet (71, 72), at which the magnetic field strength of the static magnetic field is greater or less than the first magnetization field strength.

16. Arrangement according to Claim 15, **characterized in that** the at least one magnet (71, 72) is arranged in such a way that a gap (76) is formed between the magnetizing surface (77) and the at least one magnet, into which gap the planar sample (1) can be inserted for magnetizing its magnetic pigments, wherein the gap (76) perpendicular to the magnetizing surface (77) is greater than the thickness of the planar sample.

17. Arrangement according to either of Claims 15 and 16, **characterized in that** the magnetizing surface (77) has an entrance side, which - viewed along a predetermined direction of movement of the planar sample - is arranged before the at least one magnet (71, 72), and has an exit side, which - viewed along the predetermined direction of movement of the planar sample - is arranged after the at least one magnet (71, 72), wherein preferably
- the magnetizing surface (77) of the magnetizing device - viewed along the predetermined direction of movement - on the entrance side and/or on the exit side extends at least over the length of the planar sample, in particular over at least 10 cm, and/or
- the magnetizing surface (77) of the magnetizing device is delimited on one side or on both sides by a guide (73, 74) which extends along the predetermined direction of movement of the planar sample.

18. Arrangement according to any of Claims 15 to 17, **characterized in that** the magnetizing device (7) has at least one magnet (71, 72) whose magnetic north pole or whose magnetic south pole faces the magnetizing surface (77) with its end face.

19. Arrangement according to any of Claims 15 to 18, **characterized in that** the magnetizing device (7), in particular a guide (73, 74) delimiting the magnetizing surface (77) of the magnetizing device, or an adjustment device (93) of the magnetizing device, has a scale that can be read by an operator, from which the operator can read a measure of the magnetization distance between the magnetic pigments and the magnet (71, 72) of the magnetizing device.

20. Arrangement according to any of Claims 15 to 19, **characterized in that** the magnetic field profile (K(x)) of the magnetizing device (7) stored in the checking device (3) or in the other device indicates the magnetic field strength present on the magnetizing surface as a function of the position along the magnetizing surface, in particular parallel or antiparallel to the magnetic field gradient of the static magnetic field.

21. Arrangement according to any of Claims 15 to 19, **characterized in that** the magnetizing device has an adjustment device (93), with the aid of which an operator of the magnetizing device can adjust the distance between at least one of the magnets (71, 72) and the magnetizing surface (77), and **in that** the magnetic field profile (K(x)) of the magnetizing device stored in the checking device (3) or in the other device indicates the magnetic field strength present on the magnetizing surface in particular as a function of the position (z) of the at least one magnet (71, 72) perpendicular to the magnetizing surface (77).

## Revendications

1. Procédé de contrôle de l'intensité de champ coercitif de pigments magnétiques d'un échantillon plat (1), qui sont contenus dans une zone magnétique de l'échantillon plat, comprenant les étapes suivante : a) mise à disposition d'un dispositif de magnétisation (7) comportant au moins un aimant (71, 72) qui fournit un champ magnétique statique pour magnétiser les pigments magnétiques,
b) magnétisation de l'échantillon plat par le champ magnétique statique de l'aimant du dispositif de magnétisation ou par un champ magnétique statique d'un autre dispositif de magnétisation de telle sorte que les pigments magnétiques de l'échantillon plat soient magnétisés jusqu'à saturation de leur magnétisation dans une direction de magnétisation,
c) le cas échéant, mesure de la rémanence de la magnétisation des pigments magnétiques magnétisés après leur magnétisation à l'aide d'un dispositif de mesure (4), les pigments magnétiques se trouvant en dehors du champ magnétique statique de l'au moins un aimant pendant la mesure de la rémanence,
d) première contre-magnétisation partielle des pigments magnétiques par le champ magnétique statique de l'aimant du dispositif de magnétisation de telle sorte que les pigments magnétiques soient partiellement contre-magnétisés par le champ magnétique statique, dans lequel, pour la première contre-magnétisation partielle, l'échantillon plat et l'aimant sont déplacés l'un vers l'autre de manière relative jusqu'à ce que les pigments magnétiques soient positionnés à une première distance de magnétisation (x0, x0') de l'aimant dans le champ magnétique statique, le champ magnétique statique présentant une première intensité de champ de magnétisation,
e) première mesure d'une première valeur de magnétisation (M(x0), M(x0')) des pigments magnétiques partiellement contre-magnétisés à l'aide d'un/du dispositif de mesure (4), les pigments magnétiques se trouvant en dehors du champ magnétique statique du dispositif de magnétisation (7) pendant la première mesure,
f) le cas échéant, répétition de la magnétisation selon l'étape b) puis, le cas échéant, nouvelle contre-magnétisation partielle selon l'étape d) et nouvelle mesure selon l'étape e) pour mesurer une autre valeur de magnétisation, dans lequel, lors de la nouvelle contre-magnétisation partielle de l'étape d) respective pour la contre-magnétisation partielle de l'échantillon plat par le champ magnétique statique, l'échantillon plat et l'aimant sont déplacés l'un vers l'autre de manière relative jusqu'à ce que les pigments magnétiques soient positionnés à une autre distance de magnétisation (x1) de l'au moins un aimant dans le champ magnétique statique dans lequel l'intensité de champ magnétique est supérieure ou inférieure à la première intensité de champ de magnétisation, et les pigments magnétiques se trouvant en dehors du champ magnétique statique de l'au moins un aimant pendant la mesure de la valeur de magnétisation respective,
g) transmission de la première valeur de magnétisation mesurée lors de la première mesure et, le cas échéant, de la/des autre(s) valeur(s) de magnétisation mesurée(s) lors de la/des nouvelle(s) mesure(s) selon l'étape f) des pigments magnétiques partiellement contre-magnétisés, du dispositif de mesure (4) à un dispositif de contrôle (3) connecté au dispositif de mesure, dans lequel est stockée une courbe de champ magnétique (K(x)) du dispositif de magnétisation (7), ou qui est connecté à un autre dispositif (8) dans lequel est stockée une courbe de champ magnétique (K(x)) du dispositif de magnétisation (7),
h) contrôle de la première et, le cas échéant, de la/des autre(s) valeur(s) de magnétisation des pigments magnétiques partiellement contre-magnétisés au moyen du dispositif de contrôle (3) pour déterminer un résultat de contrôle qui concerne l'intensité de champ coercitif des pigments magnétiques,
i) transmission du résultat de contrôle concernant l'intensité de champ coercitif du dispositif de contrôle à un dispositif de sortie connecté au dispositif de contrôle et fourniture en sortie du résultat de contrôle concernant l'intensité de champ coercitif des pigments magnétiques par le dispositif de sortie,
le dispositif de contrôle (3) étant en particulier conçu pour
- utiliser la courbe de champ magnétique (K(x)) du dispositif de magnétisation (7) pour déterminer le résultat de contrôle concernant l'intensité de champ coercitif, et/ou
- utiliser la courbe de champ magnétique (K(x)) du dispositif de magnétisation (7) pour déterminer la première distance de magnétisation (x0) et/ou, le cas échéant, l'au moins une autre distance de magnétisation (x1) qui doit être choisie entre les pigments magnétiques et l'aimant pour la première et/ou, le cas échéant, la nouvelle contre-magnétisation partielle.

2. Procédé selon la revendication 1, **caractérisé en ce que** l'échantillon plat (1) est déplacé vers l'aimant (71, 72) pour la première contre-magnétisation partielle, et le cas échéant pour la nouvelle contre-magnétisation partielle, et/ou **en ce que** l'aimant (71, 72) est déplacé vers l'échantillon plat (1) afin de positionner les pigments magnétiques à la première ou à l'autre distance de magnétisation (x0, x1) par rapport à l'aimant dans le champ magnétique statique.

3. Procédé selon l'une quelconque des revendications précédentes, **caractérisé en ce que**, pour déterminer la courbe de champ magnétique (K(x)) du dispositif de magnétisation (7), on effectue une mesure d'étalonnage d'un milieu d'étalonnage plat qui présente une zone magnétique longue, laquelle présente de manière continue des pigments magnétiques d'une intensité de champ coercitif déterminée, le milieu d'étalonnage présentant de préférence plusieurs zones magnétiques longues qui sont présentes sur le milieu d'étalonnage de manière spatialement séparée et qui présentent respectivement de manière continue des pigments magnétiques d'une intensité de champ coercitif déterminée, l'intensité de champ coercitif des différentes zones magnétiques longues étant respectivement choisie différemment.

4. Procédé selon l'une quelconque des revendications précédentes, **caractérisé en ce que**
- l'échantillon plat présente une zone magnétique longue (2, 25) qui contient les pigments magnétiques, et **en ce que** l'échantillon plat est positionné sur le dispositif de magnétisation (7) lors de la première contre-magnétisation partielle de telle sorte que la zone magnétique longue (2, 25) s'étende de manière parallèle, antiparallèle ou oblique par rapport à un gradient de champ magnétique du champ magnétique statique, et
- **en ce que** le dispositif de mesure (4) est conçu pour mesurer la magnétisation en fonction d'une direction d'extension de la zone magnétique longue sur l'échantillon plat et est en particulier conçu pour générer, dès la première mesure, à la fois la première valeur de magnétisation (M(x0)) et au moins l'une des autres valeurs de magnétisation (M(x1), M(x2)), la première valeur de magnétisation étant mesurée à partir d'une première section de la zone magnétique longue qui se trouve à la première distance de magnétisation (x0), et la valeur de magnétisation respective étant mesurée à partir d'une autre section de la zone magnétique longue qui, lors de la première contre-magnétisation partielle, était positionnée à une autre distance de magnétisation (x1, x2) de l'au moins un aimant dans le champ magnétique statique dans lequel l'intensité de champ magnétique du champ magnétique statique est supérieure ou inférieure à celle qui correspond à la première distance de magnétisation (x0).

5. Procédé selon la revendication 4, **caractérisé en ce que** le dispositif de contrôle est conçu pour
- déterminer une courbe de magnétisation (M(x)) en fonction de la distance de magnétisation (x) à l'aide d'au moins deux autres valeurs de magnétisation (M(x1), M(x2)) mesurées pour différentes autres distances de magnétisation (x1, x2) de la zone magnétique longue, et/ou à l'aide d'au moins une autre valeur de magnétisation (M(x1)) mesurée pour une autre distance de magnétisation (x1) de la zone magnétique longue et à l'aide de la première valeur de magnétisation M(x0) mesurée pour la première distance de magnétisation (x0), et déterminer, à l'aide de la courbe de magnétisation M(x), une distance de magnétisation cible (xm) à laquelle l'intensité de champ coercitif (Km) des pigments magnétiques a été atteinte lors de la première contre-magnétisation partielle, et
- déterminer l'intensité de champ coercitif (Km) des pigments magnétiques à partir de la distance de magnétisation cible (xm) à l'aide de la courbe de champ magnétique (K(x)),
- transmettre l'intensité de champ coercitif (Km) des pigments magnétiques au dispositif de sortie (6) connecté au dispositif de contrôle et conçu pour fournir en sortie l'intensité de champ coercitif (Km) des pigments magnétiques.

6. Dispositif (10) de contrôle de l'intensité de champ coercitif de pigments magnétiques d'un échantillon plat, en particulier conformément à un procédé selon l'une quelconque des revendications 1 à 5, dans lequel les pigments magnétiques de l'échantillon plat (1) ont été magnétisés jusqu'à saturation de leur magnétisation dans une direction de magnétisation et ont été partiellement contre-magnétisés par une première intensité de champ de magnétisation fournie par un dispositif de magnétisation (7) en sens inverse de la direction de magnétisation lors d'une première contre-magnétisation partielle, le dispositif comprenant un dispositif de mesure (4) et un dispositif de contrôle (3) connecté au dispositif de mesure, dans lequel :
- le dispositif de mesure (4) est conçu pour
∘ effectuer une première mesure d'une première valeur de magnétisation (M(x0), M(x0')) des pigments magnétiques partiellement contre-magnétisés après la première contre-magnétisation partielle, ainsi que, le cas échéant, effectuer au moins une autre mesure pour mesurer au moins une autre valeur de magnétisation (M(x1)) des pigments magnétiques partiellement contre-magnétisés lors d'une nouvelle contre-magnétisation partielle lors de laquelle ceux-ci ont été partiellement contre-magnétisés avec une autre intensité de champ de magnétisation en sens inverse de la direction de magnétisation, qui est supérieure ou inférieure à la première intensité de champ de magnétisation,
∘ effectuer la première et, le cas échéant, l'autre mesure respective de telle sorte que les pigments magnétiques se trouvent en dehors du champ magnétique statique du dispositif de magnétisation (7) pendant la première mesure et, le cas échéant, pendant l'autre mesure respective,
∘ transmettre la première valeur de magnétisation des pigments magnétiques partiellement contre-magnétisés, mesurée lors de la première mesure et, le cas échéant, l'au moins une autre valeur de magnétisation, mesurée lors de l'au moins une autre mesure, au dispositif de contrôle (3), et
- le dispositif de contrôle (3) connecté au dispositif de mesure est conçu pour
∘ contrôler la première et, le cas échéant, l'au moins une autre valeur de magnétisation des pigments magnétiques partiellement contre-magnétisés pour déterminer un résultat de contrôle qui concerne l'intensité de champ coercitif des pigments magnétiques, et
∘ transmettre le résultat de contrôle concernant l'intensité de champ coercitif des pigments magnétiques à un dispositif de sortie (6) connecté au dispositif de contrôle,
- une courbe de champ magnétique (K(x)) du dispositif de magnétisation étant stockée dans le dispositif de contrôle (3) ou le dispositif de contrôle étant connecté à un autre dispositif (8) dans lequel est stockée une courbe de champ magnétique (K(x)) du dispositif de magnétisation (7), et le dispositif de contrôle étant en particulier conçu pour
o utiliser la courbe de champ magnétique (K(x)) du dispositif de magnétisation pour déterminer le résultat de contrôle concernant l'intensité de champ coercitif des pigments magnétiques, et/ou
o utiliser la courbe de champ magnétique du dispositif de magnétisation pour déterminer une distance de magnétisation qui doit être choisie entre les pigments magnétiques et l'aimant pour la première contre-magnétisation partielle et/ou, le cas échéant, pour la nouvelle contre-magnétisation partielle des pigments magnétiques.

7. Procédé selon la revendication 6, **caractérisé en ce que** le dispositif de contrôle (3) est conçu pour
- recevoir une consigne d'opérateur qui concerne une intensité de champ coercitif nominale (K0') devant être vérifiée par le dispositif de contrôle et, le cas échéant, une indication concernant une plage de coercivité nominale (K') incluant l'intensité de champ coercitif nominale, et
- sur la base de la consigne d'opérateur, déterminer la première distance de magnétisation (x0') devant être choisie entre les pigments magnétiques et l'aimant pour la première contre-magnétisation partielle, à l'aide de la courbe de champ magnétique (K(x)) du dispositif de magnétisation, et
- transmettre la première distance de magnétisation (x0') à un dispositif de sortie (6) connecté au dispositif de contrôle et conçu pour fournir en sortie la première distance de magnétisation pour un opérateur du dispositif de magnétisation.

8. Dispositif selon la revendication 7, **caractérisé en ce que** le dispositif de contrôle (3) est conçu pour vérifier, lors du contrôle de la première valeur de magnétisation des pigments magnétiques partiellement contre-magnétisés, si la première valeur de magnétisation (M(x0)) correspond à une magnétisation nulle et/ou pour vérifier si la première valeur de magnétisation (M(x0)) se situe dans une plage d'acceptation de magnétisation (A) au voisinage d'une magnétisation nulle, qui correspond à la plage de coercivité nominale (K') selon une courbe d'hystérésis des pigments magnétiques et, si oui, pour transmettre au dispositif de sortie la confirmation que les pigments magnétiques présentent l'intensité de champ coercitif nominale (K0') prédéfinie ou que l'intensité de champ coercitif des pigments magnétiques se situe dans la plage de coercivité nominale (K') prédéfinie.

9. Dispositif selon l'une quelconque des revendications 7 à 8, **caractérisé en ce que** le résultat de contrôle déterminé lors du contrôle, qui concerne l'intensité de champ coercitif des pigments magnétiques, comprend une confirmation ou une infirmation indiquant si les pigments magnétiques présentent l'intensité de champ coercitif nominale (K0') prédéfinie et/ou si leur intensité de champ coercitif se situe dans la plage de coercivité nominale (K') incluant l'intensité de champ coercitif nominale.

10. Dispositif selon l'une quelconque des revendications 6 à 9, **caractérisé en ce que** le résultat de contrôle déterminé lors du contrôle, qui concerne l'intensité de champ coercitif des pigments magnétiques, comprend une valeur pour l'intensité de champ coercitif des pigments magnétiques.

11. Dispositif selon la revendication 10, **caractérisé en ce que** le dispositif de contrôle est conçu pour recevoir une consigne d'opérateur qui concerne une plage de coercivité (C) devant être examinée par le dispositif de contrôle et, à l'aide de la consigne d'opérateur, déterminer la première distance de magnétisation (x0) et au moins une autre distance de magnétisation (x1, x2) qui doit être choisie entre les pigments magnétiques et l'aimant pour la première contre-magnétisation partielle ou pour la nouvelle contre-magnétisation partielle, à l'aide de la courbe de champ magnétique (K(x)) du dispositif de magnétisation (7), et transmettre la première et l'autre distance de magnétisation (x1, x2) respective au dispositif de sortie (6) connecté au dispositif de contrôle et conçu pour fournir en sortie la première (x0) et l'au moins une autre distance de magnétisation (x1, x2) respective pour un opérateur du dispositif de magnétisation.

12. Dispositif selon la revendication 10 ou 11, **caractérisé en ce que** le dispositif de contrôle est conçu pour
- déterminer une distance de magnétisation cible (xm), à laquelle la magnétisation en fonction de la distance de magnétisation (x) présente un passage à zéro (M(xm)=0) ou atteint au moins un minimum, à l'aide d'au moins deux des autres valeurs de magnétisation (M(x1), M(x2)) ou à l'aide de la première valeur de magnétisation M(x0) et d'au moins une des autres valeurs de magnétisation (M(x1)), et
- déterminer l'intensité de champ coercitif (Km) des pigments magnétiques à partir de la distance de magnétisation cible (xm) à l'aide de la courbe de champ magnétique (K(x)), et
- transmettre l'intensité de champ coercitif (Km) des pigments magnétiques au dispositif de sortie (6) connecté au dispositif de contrôle et conçu pour fournir en sortie l'intensité de champ coercitif (Km) des pigments magnétiques,
le dispositif de contrôle étant en particulier conçu pour déterminer la distance de magnétisation cible (xm) à laquelle la magnétisation M(x) en fonction de la distance de magnétisation (x) présente le passage à zéro (M(xm)=0), par ajustement ou extrapolation ou interpolation de la première valeur de magnétisation M(x0) et d'au moins l'une des autres valeurs de magnétisation (M(x1)) ou par ajustement ou extrapolation ou interpolation d'au moins deux des autres valeurs de magnétisation (M(x1), M(x2)).

13. Dispositif selon l'une quelconque des revendications 10 à 12, **caractérisé en ce que** le dispositif de contrôle est conçu pour déterminer automatiquement une autre distance de magnétisation (x1) sur la base de la première valeur de magnétisation (M(x0)) transmise par le dispositif de mesure, dans lequel l'autre distance de magnétisation (x1)
- est choisie plus proche de l'aimant du dispositif de magnétisation (7) que la première distance de magnétisation (x0) si la magnétisation des pigments magnétiques après leur première contre-magnétisation partielle est encore orientée dans la direction de magnétisation, et
- est choisie plus éloignée de l'aimant du dispositif de magnétisation (7) que la première distance de magnétisation (x0) si la magnétisation des pigments magnétiques après leur première contre-magnétisation partielle est orientée en sens inverse de la direction de magnétisation,
et le dispositif de contrôle est conçu pour transmettre l'autre distance de magnétisation (x1) à un/au dispositif de sortie (6), qui est conçu pour inviter l'opérateur à effectuer une nouvelle contre-magnétisation partielle des pigments magnétiques à l'autre distance de magnétisation (x1) et à effectuer une répétition de la mesure des pigments magnétiques à nouveau partiellement contre-magnétisés afin de déterminer l'autre valeur de magnétisation (M(x1)) au moyen du dispositif de mesure (4).

14. Dispositif selon l'une quelconque des revendications 6 à 13, **caractérisé en ce que** le dispositif de mesure (4) présente un logement (23) destiné à recevoir l'échantillon plat et conçu pour recevoir l'échantillon plat pendant la première et, le cas échéant, l'au moins une autre mesure de telle sorte que l'échantillon plat se trouve en dehors du champ magnétique statique du dispositif de magnétisation (7) pendant la première et, le cas échéant, pendant l'au moins une autre mesure.

15. Agencement pour magnétiser un échantillon plat et pour contrôler l'intensité de champ coercitif de pigments magnétiques de l'échantillon plat, en particulier conformément à un procédé selon l'une quelconque des revendications 1 à 5, l'agencement comportant :
- un dispositif (10) de contrôle de l'intensité de champ coercitif de pigments magnétiques d'un échantillon plat selon l'une quelconque des revendications 6 à 14, et
- un dispositif de magnétisation (7) qui présente une surface de magnétisation (77) destinée à recevoir l'échantillon plat et au moins un aimant (71, 72) qui fournit un champ magnétique statique conçu pour la contre-magnétisation partielle des pigments magnétiques de l'échantillon plat, dans lequel
∘ le dispositif de magnétisation (7) est conçu de telle sorte que l'échantillon plat déposé sur la surface de magnétisation (77) et l'au moins un aimant (71, 72) puissent être déplacés l'un vers l'autre de manière relative pour la première contre-magnétisation partielle des pigments magnétiques jusqu'à ce que les pigments magnétiques soient positionnés à une première distance de magnétisation (x0) de l'au moins un aimant (71, 72), à laquelle le champ magnétique statique présente une première intensité de champ de magnétisation, et
∘ dans lequel l'échantillon plat et l'au moins un aimant peuvent être déplacés l'un vers l'autre de manière relative pour la nouvelle contre-magnétisation partielle des pigments magnétiques jusqu'à ce que les pigments magnétiques soient positionnés à une autre distance de magnétisation (x1) de l'au moins un aimant (71, 72), à laquelle l'intensité de champ magnétique du champ magnétique statique est supérieure ou inférieure à la première intensité de champ de magnétisation.

16. Agencement selon la revendication 15, **caractérisé en ce que** l'au moins un aimant (71, 72) est agencé de telle sorte qu'entre la surface de magnétisation (77) et l'au moins un aimant, soit formé un espace (76) dans lequel l'échantillon plat (1) peut être introduit pour la magnétisation de ses pigments magnétiques, l'espace (76) étant plus grand perpendiculairement à la surface de magnétisation (77) que l'épaisseur de l'échantillon plat.

17. Agencement selon l'une quelconque des revendications 15 à 16, **caractérisé en ce que** la surface de magnétisation (77) présente un côté d'entrée qui - vu le long d'une direction de mouvement prédéterminée de l'échantillon plat - est agencé en amont de l'au moins un aimant (71, 72), et présente un côté de sortie qui - vu le long de la direction de mouvement prédéterminée de l'échantillon plat - est agencé en aval de l'au moins un aimant (71, 72), dans lequel, de préférence,
- la surface de magnétisation (77) du dispositif de magnétisation - vu le long de la direction de mouvement prédéterminée - s'étend sur le côté d'entrée et/ou sur le côté de sortie au moins sur la longueur de l'échantillon plat, en particulier sur au moins 10 cm, et/ou
- la surface de magnétisation (77) du dispositif de magnétisation est limitée d'un côté ou des deux côtés par un guide (73, 74) qui s'étend le long de la direction de mouvement prédéterminée de l'échantillon plat.

18. Agencement selon l'une quelconque des revendications 15 à 17, **caractérisé en ce que** le dispositif de magnétisation (7) comporte au moins un aimant (71, 72) dont le pôle Nord magnétique ou dont le pôle Sud magnétique est orienté côté frontal vers la surface de magnétisation (77).

19. Agencement selon l'une quelconque des revendications 15 à 18, **caractérisé en ce que** le dispositif de magnétisation (7), en particulier un guide (73, 74) du dispositif de magnétisation limitant la surface de magnétisation (77) ou un dispositif de réglage (93) du dispositif de magnétisation, présente une échelle lisible par un opérateur, sur laquelle celui-ci peut lire une mesure de la distance de magnétisation entre les pigments magnétiques et l'aimant (71, 72) du dispositif de magnétisation.

20. Agencement selon l'une quelconque des revendications 15 à 19, **caractérisé en ce que** la courbe de champ magnétique (K(x)) du dispositif de magnétisation (7) stockée dans le dispositif de contrôle (3) ou dans l'autre dispositif indique l'intensité de champ magnétique présente sur la surface de magnétisation en fonction de la position le long de la surface de magnétisation, en particulier de manière parallèle ou antiparallèle par rapport au gradient de champ magnétique du champ magnétique statique.

21. Agencement selon l'une quelconque des revendications 15 à 19, **caractérisé en ce que** le dispositif de magnétisation comporte un dispositif de réglage (93) au moyen duquel un opérateur du dispositif de magnétisation peut régler la distance d'au moins l'un des aimants (71, 72) par rapport à la surface de magnétisation (77), et **en ce que** la courbe de champ magnétique (K(x)) du dispositif de magnétisation stockée dans le dispositif de contrôle (3) ou dans l'autre dispositif indique l'intensité de champ magnétique présente sur la surface de magnétisation, en particulier en fonction de la position (z) de l'au moins un aimant (71, 72) perpendiculairement à la surface de magnétisation (77).
